# EUROPEAN PATENT APPLICATION

(11) **EP 4 750 128 A1**
(43) Date of publication of application: **27.05.2026**
(21) Application number: 24853668.2
(22) Date of filing: 08.08.2024
(51) Int. Cl.: H04W 24/02

(54) **COMMUNICATION METHOD AND APPARATUS**

(30) Priority: 11.08.2023 CN 202311020813
(71) Applicant: HUAWEI TECHNOLOGIES CO., LTD., Shenzhen 518129 (CN)
(72) Inventor: SHI, Qiaolin, Shenzhen, Guangdong 518129 (CN); LI, Bingzhao, Shenzhen, Guangdong 518129 (CN); DAI, Xizeng, Shenzhen, Guangdong 518129 (CN); LIU, Jianghua, Shenzhen, Guangdong 518129 (CN); LI, Yuan, Shenzhen, Guangdong 518129 (CN)
(74) Representative: Pfenning, Meinig & Partner mbB
(86) International application number: PCT/CN2024/110866
(87) International publication number: WO 2025/036258

(57) **Abstract**

This application provides a communication method and apparatus, and relates to the field of communication technologies. In the method, after indicating a first state of one or more first models to a model management device, a model application device may retain the first state within a first time window, so that the model application device does not frequently report the first state of the one or more first models to the model management device, to reduce information exchange between the model application device and the model management device.

## Description

### CROSS-REFERENCE TO RELATED APPLICATIONS

This application claims priority to Chinese Patent Application No. 202311020813.2, filed with the China National Intellectual Property Administration on August 11, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A solution in which a model (for example, an artificial intelligence (artificial intelligence, AI)/machine learning (machine learning, ML) model/function (function)) is used for air interface (air interface) enhancement is proposed in a protocol. Using the model for air interface enhancement includes a training dataset obtaining process, a model training and loading process, a model management process, and the like.

Currently, a manner of model management is as follows: A terminal device determines information about a model state, and feeds back the information about the model state to a network (network, NW) side. The NW side executes a model management policy. In this manner, if the model state of the terminal device changes, the information about the model state needs to be fed back to the NW side. This leads to frequent information exchange between the terminal device and the NW side. When the terminal device includes a large quantity of models, information exchange between the terminal device and the NW side is further increased.

### SUMMARY

Embodiments of this application provide a communication method and apparatus, to reduce information exchange.

According to a first aspect, an embodiment of this application provides a communication method. The method may be performed by a model application device or by software or hardware (for example, a chip) in a model application device. For example, the model application device may be one or more of a terminal device, an access network device (for example, a base station), a core network device, or the like. For ease of description, an example in which the terminal device performs the method is used below for description. It can be understood that the terminal device in the following descriptions may be replaced with another model application device, for example, the access network device or the core network device. The method includes: sending first information to a model management device, where the first information indicates that a state of one or more first entities is a first state, the first state indicates that the terminal device supports use of the one or more first entities, and the first state is valid within a first time window.

It should be understood that an entity includes one or more of a model, a function, or a feature. For example, the entity is the model, or the entity is the function, or the entity is the feature. For example, the first entity includes one or more of a first model, a first function, or a first feature. For example, the first entity is the first model, or the first entity is the first function, or the first entity is the first feature. The model in this embodiment of this application may be described as a function (for example, an AI function or an ML function), a feature, an algorithm, or the like. The model includes, for example, the AI model or the ML model. That the terminal device supports use of the one or more first entities may be described as that the terminal device is capable of executing or running the one or more first entities, or may be described as that the terminal device supports execution of the one or more first entities, or may be described as that the terminal device has a capability of executing the one or more first entities or the terminal device supports execution (or running) of the one or more first entities, or the like. For example, that the terminal device supports use of the one or more first entities includes: The terminal device has locally loaded a profile of the one or more first entities, or the terminal device may load a profile of the one or more first entities from another device (for example, a profile management device, specifically, a cloud server). That the first state is valid within the first time window may be understood as that the terminal device does not change a state (namely, the first state) of the one or more first entities within the first time window, or may be described as that the terminal device retains a state of the one or more first entities within the first time window.

Optionally, the first time window may be preconfigured or predefined on the terminal device and the model management device, for example, preconfigured or predefined by using a protocol. For example, a length (or referred to as a window length), a start position (or referred to as a start moment), and an end position (or referred to as an end moment) of the first time window are preconfigured or predefined by using the protocol. Alternatively, the first time window may be determined by the terminal device and indicated to the model management device. For example, the terminal device sends second indication information to the model management device, and the second indication information indicates the first time window. For example, the second indication information indicates at least one of a length, a start position, and an end position of the first time window. When the second indication information indicates one of the length, the start position, and the end position of the first time window, at least one of the other two of the length, the start position, and the end position of the first time window may be configured by using a protocol. Alternatively, the first time window may be determined by the model management device and indicated to the terminal device. For example, the model management device sends third indication information to the terminal device, and the third indication information indicates the first time window. For example, the third indication information indicates at least one of a length, a start position, and an end position of the first time window. When the third indication information indicates one of the length, the start position, and the end position of the first time window, at least one of the other two of the length, the start position, and the end position of the first time window may be configured by using a protocol. This is not limited in this embodiment of this application.

In this embodiment of this application, the terminal device may not change the first state of the one or more first entities within the first time window, so that the terminal device does not need to send the first state of the one or more first entities to the model management device within the first time window. This reduces information exchange between the terminal device and the model management device, and therefore reduces information exchange in a network. In addition, because information exchange between the terminal device and the model management device is reduced, power of the terminal device and the model management device can also be saved. In addition, the model management device does not need to query, from the terminal device, the first state of the one or more first entities within the first time window either. This is equivalent to that the model management device may directly manage the one or more first entities within the first time window based on the first information. This helps improve efficiency of managing the one or more first entities on the terminal device by the model management device. In addition, because the model management device does not need to frequently monitor or manage the one or more entities, scheduling load of the model management device can be reduced, and therefore air interface resources occupied for model monitoring or management are also reduced.

In a possible implementation, that the first information indicates that the state of the one or more first entities is the first state includes: The model application device or the chip used in the model application device has a capability of executing the one or more first entities; the model application device or the chip used in the model application device has locally obtained/stored/loaded the one or more first entities, or is capable of loading the one or more first entities from another device; the model application device or the chip used in the model application device is ready to perform inference by using the one or more first entities; the model application device or the chip used in the model application device has a configuration of the model management device for executing or running the one or more first entities; or the model application device or the chip used in the model application device has been activated and performed inference by using the one or more first entities.

In a possible implementation, the method further includes: after the first time window, determining that states of M first entities of the one or more first entities are updated to a second state, where the second state indicates that the terminal device does not support use of the M first entities, and M is a positive integer; and sending second information to the model management device, where the second information indicates that the states of the M first entities are updated to the second state.

Optionally, the second state is valid within a fourth time window, and the fourth time window may be the same as or different from the first time window. That the fourth time window is the same as the first time window includes that all of a start moment, a length, and an end moment of the fourth time window are the same as those of the first time window. That the fourth time window is different from the first time window may include at least one of the following: A start position of the fourth time window is different from the start position of the first time window, a length of the fourth time window is different from the length of the first time window, and an end position of the fourth time window is different from the end position of the first time window. For a manner of determining the fourth time window by the model management device and the terminal device, refer to the foregoing content of determining the first time window. Details are not described herein again.

In the foregoing implementation, after the first time window, the terminal device may flexibly update the states of the M first entities of the one or more first entities. This not only reduces information exchange between the terminal device and the model management device, but also can ensure flexibility in changing the states of the M first entities by the terminal device.

In a possible implementation, before sending the second information to the model management device, the method further includes: determining that a first moment has arrived, where a time interval between the first moment and a moment at which the first information is sent meets a first periodicity, and the first periodicity is a periodicity at which the terminal device reports the states of the M first entities. Optionally, the length of the first time window is less than or equal to a length of the first periodicity.

In the foregoing implementation, the terminal device may report the states of the M first entities based on the first periodicity. This can also reduce information exchange between the terminal device and the model management device to some extent. In addition, the length of the first time window being less than or equal to the length of the first periodicity indicates a high possibility of changing, by the terminal device, the states of the M first entities within the first periodicity. This reduces a possibility that the terminal device reports the states of the same M first entities a plurality of times, and therefore reduces redundant exchange in the network.

In a possible implementation, the method further includes: after the first time window, when a first moment has arrived, determining that none of states of M first entities of the one or more first entities is updated, where a time interval between the first moment and a moment at which the first information is sent meets a first periodicity, the first periodicity is a periodicity at which the terminal device reports the states of the M first entities, and M is a positive integer; and determining to skip sending the states of the M first entities to the model management device at the first moment.

It should be understood that determining to skip sending the states of the M first entities to the model management device at the first moment may be described as skipping sending the states of the M first entities to the model management device at the first moment, or may be described as giving up sending the states of the M first entities to the model management device at the first moment, or may be understood as releasing a first resource, where the first resource is used to send (or report) the states of the M first entities to the model management device at the first moment.

In the foregoing implementation, the terminal device reports the states of the M first entities based on the first periodicity. However, at a reporting moment (for example, the first moment), when the terminal device determines that the states of the M first entities remain unchanged, the terminal device may not need to send the states of the M first entities to the model management device. This reduces a possibility that the terminal device reports the states of the same M first entities a plurality of times, and reduces redundant exchange in the network.

In a possible implementation, the method further includes: after the first time window, receiving first indication information from the model management device, where the first indication information indicates to report states of a part or all of the one or more first entities; and sending third information to the model management device, where the third information indicates the states of the part or all of first entities.

In the foregoing implementation, the model management device may actively trigger the terminal device to report the states of the part or all of the one or more first entities. This is equivalent to that the terminal device reports the third information only as needed by the model management device. This also helps reduce invalid reporting, by the terminal device, of the states of the part or all of first entities.

In a possible implementation, the method further includes: sending fourth information to the model management device, where the fourth information indicates that a state of one or more second entities is a third state, and the third state indicates that the terminal device does not support use of the one or more second entities. Not supporting use of the one or more second entities may be that the terminal device has not locally loaded a profile of the one or more second entities and cannot obtain the profile of the one or more second entities from another device either. Optionally, the first information and the fourth information may be carried in same information, or may be carried in different information. This is not limited in this embodiment of this application.

For example, the second entity includes one or more of a second model, a second function, or a second feature. For example, the second entity is the second model, or the second entity is the second function, or the second entity is the second feature.

In the foregoing implementation, the terminal device may further indicate the third state of the one or more second entities to the model management device, so that the model management device can obtain more information and more comprehensively and accurately manage entities on the terminal device.

In a possible implementation, the third state is valid within a second time window, and the second time window may be the same as or different from the first time window. That the second time window is the same as the first time window includes: A start moment of the second time window is the same as the start moment of the first time window, a length of the second time window is the same as the length of the first time window, and an end position of the second time window is the same as the end position of the first time window. That the second time window is different from the first time window may include at least one of the following: A start position of the second time window is different from the start position of the first time window, the length of the second time window is different from the length of the first time window, and the end position of the second time window is different from the end position of the first time window. For a manner of determining the second time window by the model management device and the terminal device, refer to the foregoing content of determining the first time window. Details are not described herein again.

In the foregoing implementation, the terminal device may retain the third state within the second time window. This can reduce information exchange between the terminal device and the model management device. In addition, when the second time window is different from the first time window, the terminal device can flexibly control the state of the one or more first entities and the state of the one or more second entities.

In a possible implementation, the method further includes: sending fifth information to the model management device, where the fifth information indicates that states of a part or all of the one or more second entities are updated to a fourth state, the fourth state indicates that the terminal device supports use of the part or all of second entities, and a difference between a moment at which the terminal device sends the fifth information and the moment at which the terminal device sends the first information is less than the length of the first time window.

In the foregoing implementation, when determining that the states of the part or all of second entities are updated, the terminal device may send updated states of the part or all of second entities to the model management device. This improves flexibility in reporting the states of the part or all of second entities by the terminal device.

In a possible implementation, the fourth state is valid within a third time window, and the third time window is the same as or different from the first time window. That the third time window is different from the first time window may include at least one of the following: A start moment of the third time window is different from the start moment of the first time window, a length of the third time window is different from the length of the first time window, and an end moment of the third time window is different from the end moment of the first time window. For a manner of determining the third time window by the model management device and the terminal device, refer to the foregoing content of determining the first time window. Details are not described herein again.

In the foregoing implementation, the terminal device may retain the fourth state within the third time window. This can reduce information exchange between the terminal device and the model management device. In addition, when the third time window is different from the first time window, the terminal device can flexibly control the state of the one or more first entities and the state of the one or more second entities.

In a possible implementation, the first information includes first delay information, the first delay information indicates one or more delays related to a part or all of the one or more first entities, and a part or all of the first delay information indicates the first state. For example, a part or all of a plurality of bits included in the first delay information indicate the first state, or a part or all of a plurality of pieces of information included in the first delay information indicate the first state.

In the foregoing implementation, the first delay information may be reused to indicate the first state and the one or more delays related to the part or all of first entities. This can reduce bits occupied by the first information, and can also reduce information exchange between the terminal device and the model management device.

In a possible implementation, the first information further includes identifiers of the part or all of first entities, or configuration information related to the part or all of first entities. The configuration information related to the part or all of first entities may include an identifier (or an index) of a configuration related to the part or all of first entities. For example, the configuration related to the part or all of first entities includes one or more of the following: an input configuration (for example, a resource) of the part or all of first entities, an output configuration of the part or all of first entities (for example, a resource for reporting outputs of the part or all of first entities), a function implemented by the part or all of first entities and a scenario to which the part or all of first entities are applicable, information used by the terminal device to support a function related to the part or all of entities, and the like.

In a possible implementation, the first delay information includes at least one of the following: first activation delay information, where the first activation delay information indicates K1 first activation delays, and one first activation delay indicates a delay in activating one of the K1 first entities; first inference delay information, where the first inference delay information indicates K2 first inference delays, and one first inference delay indicates a delay in performing inference by using one of the K2 first entities; first rollback delay information, where the first rollback delay information indicates K3 first rollback delays, one first rollback delay indicates a delay in rolling back one of the K3 first entities to a delay in implementing a first function without using an entity, and the first entity is capable of implementing the first function; first monitoring delay information, where the first monitoring delay information indicates K4 first monitoring delays, and one first monitoring delay indicates a delay in monitoring one of the K4 first entities; first switching delay information, where the first switching delay information indicates K5 first switching delays, and one first switching delay indicates a delay in switching from one of the K5 first entities to a third entity; second switching delay information, where the second switching delay information indicates K6 second switching delays, and one second switching delay indicates a fourth entity to be switched to one of the K6 first entities; or first deactivation delay information, where the first deactivation delay information indicates K7 first deactivation delays, and one first deactivation delay indicates a delay in deactivating one of the K7 first entities. All of K1, K2, K3, K4, K5, K6, and K7 are positive integers.

In the foregoing implementation, a plurality of types of possible information included in the first delay information is provided, so that the model management device can obtain more comprehensive information, to manage an entity in the terminal device more accurately. In addition, the terminal device may indicate the first state by using at least one of the plurality of pieces of possible information included in the first delay information, to improve flexibility in indicating the first state by using the first delay information.

In a possible implementation, that the part or all of the first delay information indicates the first state includes at least one of the following: The first activation delay information indicates that states of P first entities of the K1 first entities are the first state, where P is a positive integer, for example, when values of a part or all of the K1 first activation delays (for example, P or fewer first activation delays) are within a first value range, the states of the corresponding P first entities are the first state; the first switching delay information indicates that states of Q first entities of the K5 first entities are the first state, where Q is a positive integer, for example, when values of a part or all of the K5 first switching delays (for example, less than or equal to Q first switching delays) are within a second value range, the states of the corresponding Q first entities are the first state; the second switching delay information indicates that states of R first entities of the K6 first entities are the first state, where R is a positive integer, for example, when values of a part or all of the K6 second switching delays (for example, R or fewer second switching delays) are within a third value range, the states of the corresponding R first entities are the first state; or the first inference delay information indicates that states of L first entities of the K2 first entities are the first state, where L is a positive integer, for example, when values of a part or all of the K2 first inference delays (for example, less than or equal to L first inference delays) are within a fourth value range, the states of the corresponding L first entities are the first state.

In the foregoing implementation, at least one of the first activation delay information, the first switching delay information, the second switching delay information, and the first inference delay information may indicate the first state of the part or all of first entities, to enrich manners of indicating the first state, and reduce signaling overheads. Specifically, a value of at least one of the activation delay, the first switching delay, the second switching delay, and the inference delay may indicate the first state of the part or all of the one or more first entities. In this way, the first state of the part or all of the one or more first entities does not need to occupy a bit of the first information, so that information exchange between the terminal device and the model management device can be further reduced.

In a possible implementation, the length of the first time window meets at least one of the following conditions: being greater than a maximum value in the first value range; being greater than a maximum value in the second value range; being greater than a maximum value in the third value range; or being greater than a maximum value in the fourth value range.

In the foregoing implementation, the length of the first time window may be greater than a maximum value in a value range of at least one of the activation delay, the first switching delay, the second switching delay, and the inference delay, to avoid a case that the first time window is set to be excessively short and the terminal device does not have sufficient time to perform an operation, for example, activation, switching, or inference, on an entity.

In a possible implementation, the method further includes: sending sixth information to the terminal device within the first time window, where the sixth information indicates a policy for managing N first entities of the one or more first entities, and N is a positive integer.

It should be understood that policies for managing any two of the N first entities may be the same or different. The policy for managing the N first entities is, for example, activating a part or all of the N first entities, deactivating a part or all of the N first entities, switching from a part or all of the N first entities to another entity (the another entity may be, for example, a model of the one or more second entities, or an entity of the one or more first entities other than the N first entities), switching from another entity to a part or all of the N first entities, or the like. This is not limited in this embodiment of this application.

In a possible implementation, the fourth information includes second delay information, the second delay information indicates one or more delays related to a part or all of the one or more second entities, and the part or all of second delay information further indicates the third state.

In the foregoing implementation, the second delay information may indicate the third state, so that bits occupied by the fourth information can be reduced, and information exchange between the terminal device and the model management device is reduced.

In a possible implementation, the second delay information includes at least one of the following: second activation delay information, where the second activation delay information indicates H1 second activation delays, and one second activation delay indicates a delay in activating one of the H1 second entities; and second inference delay information, where the second inference delay information indicates H2 second inference delays, and one second inference delay indicates a delay in performing inference by using one of the H2 second entities; second rollback delay information, where the second rollback delay information indicates H3 second rollback delays, where one second rollback delay indicates a delay for one of the H3 second entities to fall back to a delay in implementing a third function without using an entity, and the second entity is capable of implementing the third function; and second monitoring delay information indicates H4 second monitoring delays, where one second monitoring delay indicates a delay in monitoring one of the H4 second entities; third switching delay information, where the third switching delay information indicates H5 third switching delays, where one third switching delay indicates a delay in switching from one of the H5 second entities to a third entity; and fourth switching delay information, where the fourth switching delay information indicates H6 fourth switching delays, where one fourth switching delay indicates a fourth entity to be switched to one of the H6 second entities; second deactivation delay information, where the second deactivation delay information indicates H7 second deactivation delays, one second deactivation delay indicates a delay in deactivating one of the H7 second entities, and all of H1, H2, H3, H4, H5, H6, and H7 are positive integers.

For example, the third entity includes one or more of a third model, a third function, or a third feature. For example, the third entity is a third model, or the third entity is a third function, or the third entity is a third feature. For another example, the fourth entity includes one or more of a fourth model, a fourth function, or a fourth feature. For example, the fourth entity is a fourth model, or the fourth entity is a fourth function, or the fourth entity is a fourth feature.

In a possible implementation, that a part or all of the second delay information indicates the third state includes at least one of the following: the second activation delay information indicates that states of U1 second entities of the H1 second entities are the third state, where U1 is a positive integer; and the third switching delay information indicates that states of U2 second entities of the H5 second entities are the third state, where U2 is a positive integer; the fourth switching delay information indicates that states of U3 second entities of the H6 second entities are the third state, where U3 is a positive integer; or the second inference delay information indicates that states of U4 second entities of the H2 second entities are the third state, where U4 is a positive integer.

In the foregoing implementation, at least one of the second activation delay information, the third switching delay information, the fourth switching delay information, and the second inference delay information may indicate the third state of a part or all of the second entities, to enrich manners of indicating the third state, and reduce signaling overheads.

In a possible implementation, when values of a part or all of the H1 second activation delays (for example, less than or equal to U1 second activation delays) are all within a fifth value range, states of the corresponding U1 second entities are the third state; and values of a part or all of the H5 third switching delays (for example, less than or equal to U5 third switching delays) are all within a sixth value range, states of the corresponding U5 second entities are the third state; values of a part or all of the H6 fourth switching delays (for example, less than or equal to U3 fourth switching delays) are in a seventh value range, and values of the corresponding U3 second entities are in the third state; and values of a part or all of the H2 second inference delays (for example, less than or equal to U4 fourth inference delays) are in an eighth value range; and the corresponding third states of the U4 second entities.

In the foregoing implementation, a value of at least one of the second activation delay, the third switching delay, the fourth switching delay, and the second inference delay may indicate the third state of the part or all of first entities. In this way, the third state of the part or all of second entities does not need to occupy a bit of the fourth information, so that information exchange between the terminal device and the model management device can be further reduced.

In a possible implementation, the second time window meets at least one of the following conditions: being greater than a maximum value in the fifth value range; being greater than a maximum value in the sixth value range; being greater than a maximum value in the seventh value range; or being greater than a maximum value in the eighth value range.

In a possible implementation, the method further includes: after the first time window, sending seventh information to the model management device, where the seventh information indicates states of a part or all of the one or more first entities. It should be understood that the part or all of first entities may be first entities, whose states are updated, of the one or more first entities, or may be the one or more first entities.

Optionally, the terminal device sends the seventh information at a second moment, where a time interval between the second moment and the moment at which the first information is sent meets a first periodicity, and the first periodicity is a periodicity at which the terminal device reports the states of the part or all of the one or more first entities.

In a possible implementation, the method further includes: after the first time window, sending eighth information to the model management device, where the eighth information indicates states of a part or all of the one or more second entities. It should be understood that the part or all of second entities may be second entities, whose states are updated, of the one or more second entities, or may be the one or more second entities.

Optionally, the terminal device sends the eighth information at a third moment, where a time interval between the third moment and the moment at which the first information is sent meets a first periodicity, and the first periodicity is a periodicity at which the terminal device reports the states of the part or all of the one or more second entities.

According to a second aspect, an embodiment of this application provides a communication method. The method may be performed by a model application device or by software or hardware (for example, a chip) in a model application device. For example, the model application device may be one or more of a terminal device, an access network device (for example, a base station), a core network device, or the like. For ease of description, an example in which the terminal device performs the method is used below for description. It can be understood that the terminal device in the following descriptions may be replaced with another model application device, for example, the access network device or the core network device. The method includes: sending first information to a model management device, where the first information includes first delay information, the first delay information indicates one or more delays related to a part or all of one or more first entities, a part or all of the first delay information indicates a first state, and the first state indicates that the terminal device supports use of the one or more first entities.

In this embodiment of this application, the first delay information in the first information may indicate the delays related to the part or all of first entities, and may further indicate the first state. In this way, no dedicated bit needs to be used to indicate the first state. This helps reduce bits occupied by the first information, and also reduces information exchange between the terminal device and the model management device.

In a possible implementation, the first state indicates one of the following: The model application device or the chip used in the model application device has a capability of executing the one or more first entities; the model application device or the chip used in the model application device has locally obtained/stored/loaded the one or more first entities, or is capable of loading the one or more first entities from another device; the model application device or the chip used in the model application device is ready to perform inference by using the one or more first entities; the model application device or the chip used in the model application device has a configuration of the model management device for executing or running the one or more first entities; or the model application device or the chip used in the model application device has been activated and performed inference by using the one or more first entities.

In a possible implementation, the first information further includes identifiers of the part or all of first entities, or configuration information related to the part or all of first entities. The configuration information related to the part or all of first entities may include an identifier (or an index) of a configuration related to the part or all of first entities. For example, the configuration related to the part or all of first entities includes one or more of the following: an input configuration (for example, a resource) of the part or all of first entities, an output configuration of the part or all of first entities (for example, a resource for reporting outputs of the part or all of first entities), a function implemented by the part or all of first entities and a scenario to which the part or all of first entities are applicable, information used by the terminal device to support a function related to the part or all of entities, and the like.

In a possible implementation, the first delay information includes at least one of the following: first activation delay information, where the first activation delay information indicates K1 first activation delays, and one first activation delay indicates a delay in activating one of the K1 first entities; first inference delay information, where the first inference delay information indicates K2 first inference delays, and one first inference delay indicates a delay in performing inference by using one of the K2 first entities; first rollback delay information, where the first rollback delay information indicates K3 first rollback delays, one first rollback delay indicates a delay in rolling back one of the K3 first entities to a delay in implementing a first function without using an entity, and the first entity is capable of implementing the first function; first monitoring delay information, where the first monitoring delay information indicates K4 first monitoring delays, and one first monitoring delay indicates a delay in monitoring one of the K4 first entities; first switching delay information, where the first switching delay information indicates K5 first switching delays, and one first switching delay indicates a delay in switching from one of the K5 first entities to a third entity; second switching delay information, where the second switching delay information indicates K6 second switching delays, and one second switching delay indicates a fourth entity to be switched to one of the K6 first entities; or first deactivation delay information, where the first deactivation delay information indicates K7 first deactivation delays, and one first deactivation delay indicates a delay in deactivating one of the K7 first entities. All of K1, K2, K3, K4, K5, K6, and K7 are positive integers.

In a possible implementation, that the part or all of the first delay information indicates the first state includes at least one of the following: The first activation delay information indicates that states of P first entities of the K1 first entities are the first state, where P is a positive integer, for example, when values of a part or all of the K1 first activation delays (for example, P or fewer first activation delays) are within a first value range, the states of the corresponding P first entities are the first state; the first switching delay information indicates that states of Q first entities of the K5 first entities are the first state, where Q is a positive integer, for example, when values of a part or all of the K5 first switching delays (for example, less than or equal to Q first switching delays) are within a second value range, the states of the corresponding Q first entities are the first state; the second switching delay information indicates that states of R first entities of the K6 first entities are the first state, where R is a positive integer, for example, when values of a part or all of the K6 second switching delays (for example, R or fewer second switching delays) are within a third value range, the states of the corresponding R first entities are the first state; or the first inference delay information indicates that states of L first entities of the K2 first entities are the first state, where L is a positive integer, for example, when values of a part or all of the K2 first inference delays (for example, less than or equal to L first inference delays) are within a fourth value range, the states of the corresponding L first entities are the first state.

In a possible implementation, the first state is valid within a first time window. For content of the first time window, refer to the content of the first time window in the first aspect. Details are not described herein again.

In a possible implementation, a length of the first time window meets at least one of the following conditions: being greater than a maximum value in the first value range; being greater than a maximum value in the second value range; being greater than a maximum value in the third value range; or being greater than a maximum value in the fourth value range.

In a possible implementation, the method further includes: after the first time window, determining that states of M first entities of the one or more first entities are updated to a second state, where the second state indicates that the terminal device does not support use of the M first entities, and M is a positive integer; and sending second information to the model management device, where the second information indicates that the states of the M first entities/functions are updated to the second state.

Optionally, the second state is valid within a fourth time window, and the fourth time window may be the same as or different from the first time window.

In a possible implementation, before sending the second information to the model management device, the method further includes: determining that a first moment has arrived, where a time interval between the first moment and a moment at which the first information is sent meets a first periodicity, and the first periodicity is a periodicity at which the terminal device reports the states of the M first entities. Optionally, the length of the first time window is less than or equal to a length of the first periodicity.

In a possible implementation, the method further includes: after the first time window, when the first moment has arrived, determining that none of the states of the M first entities of the one or more first entities is updated, where the time interval between the first moment and the moment at which the first information is sent meets the first periodicity, the first periodicity is a periodicity at which the terminal device reports the states of the M first entities, and M is a positive integer; and determining to skip sending the states of the M first entities to the model management device at the first moment.

In a possible implementation, the method further includes: after the first time window, receiving first indication information from the model management device, where the first indication information indicates to report states of a part or all of the one or more first entities; and sending third information to the model management device, where the third information indicates the states of the part or all of first entities.

In a possible implementation, the method further includes: sending fourth information to the model management device, where the fourth information indicates that a state of one or more second entities is a third state, and the third state indicates that the terminal device does not support use of the one or more second entities.

In a possible implementation, the third state is valid within a second time window, and the second time window may be the same as or different from the first time window. That the second time window is the same as the first time window includes: A start moment of the second time window is the same as a start moment of the first time window, a length of the second time window is the same as a length of the first time window, and an end moment of the second time window is the same as an end moment of the first time window. That the second time window is different from the first time window may include at least one of the following: The start moment of the second time window is different from the start moment of the first time window, the length of the second time window is different from the length of the first time window, and the end moment of the second time window is different from the end moment of the first time window.

In a possible implementation, the method further includes: sending fifth information to the model management device, where the fifth information indicates that states of a part or all of the one or more second entities are updated to a fourth state, the fourth state indicates that the terminal device supports use of the part or all of second entities, and a difference between a moment at which the terminal device sends the fifth information and the moment at which the terminal device sends the first information is less than the length of the first time window.

In a possible implementation, the fourth state is valid within a third time window, and the third time window is the same as or different from the first time window. That the third time window is different from the first time window may include at least one of the following: A start moment of the third time window is different from the start moment of the first time window, a length of the third time window is different from the length of the first time window, and an end moment of the third time window is different from the end moment of the first time window. For a manner of determining the third time window by the terminal device and the model management device, refer to the content of determining the first time window in the first aspect. Details are not described herein again.

In a possible implementation, the fourth information includes second delay information, the second delay information indicates one or more delays related to a part or all of the one or more second entities, and the part or all of second delay information further indicates the third state.

In a possible implementation, the second delay information includes at least one of the following: second activation delay information, where the second activation delay information indicates H1 second activation delays, and one second activation delay indicates a delay in activating one of the H1 second entities; second inference delay information, where the second inference delay information indicates H2 second inference delays, and one second inference delay indicates a delay in performing inference by using one of the H2 second entities; and second rollback delay information, where the second rollback delay information indicates H3 second rollback delays, and one second rollback delay indicates a delay in rolling back one of the H3 second entities to a non-used entity to implement a third function, and the second entity is capable of implementing the third function; second monitoring delay information, where the second monitoring delay information indicates H4 second monitoring delays, where one second monitoring delay indicates a delay in monitoring one of the H4 second entities; and third switching delay information, where the third switching delay information indicates H5 third switching delays, where one third switching delay indicates a delay of switching from one of the H5 second entities to a third entity; fourth switching delay information, where the fourth switching delay information indicates H6 fourth switching delays, and one fourth switching delay indicates that a fourth entity is switched to one of the H6 second entities; or second deactivation delay information, where the second deactivation delay information indicates H7 second deactivation delays, and one second deactivation delay indicates a delay in deactivating one of the H7 second entities, where all of H1, H2, H3, H4, H5, H6, and H7 are positive integers.

In a possible implementation, that a part or all of the second delay information indicates the third state includes at least one of the following: the second activation delay information indicates that states of U1 second entities of the H1 second entities are the third state, where U1 is a positive integer; and the third switching delay information indicates that states of U2 second entities of the H5 second entities are the third state, where U2 is a positive integer; the fourth switching delay information indicates that states of U3 second entities of the H6 second entities are the third state, where U3 is a positive integer; or the second inference delay information indicates that states of U4 second entities of the H2 second entities are the third state, where U4 is a positive integer.

In a possible implementation, when values of a part or all of the H1 second activation delays (for example, U1 or fewer second activation delays) are all within a fifth value range, states of the corresponding U1 second entities are the third state; and values of a part or all of the H5 third switching delays (for example, U5 or fewer third switching delays) are all within a sixth value range, states of the corresponding U5 second entities are the third state; values of a part or all of the H6 fourth switching delays (for example, U3 or fewer fourth switching delays) are in a seventh value range; and states of the corresponding U3 second entities are the third state; and values of a part or all of the H2 second inference delays (for example, U4 or fewer inference delays) are in an eighth value range; and states of the corresponding U4 second entities are the third state.

In a possible implementation, the second time window meets at least one of the following conditions: being greater than a maximum value in the fifth value range; being greater than a maximum value in the sixth value range; being greater than a maximum value in the seventh value range; or being greater than a maximum value in the eighth value range.

It should be noted that content of any one of the first aspect or the possible implementations thereof may be cited in the possible implementations of the second aspect. Details are not described herein again.

According to a third aspect, an embodiment of this application provides a communication method. The method may be performed by a model application device or by software or hardware (for example, a chip) in a model application device. For example, the model application device may be one or more of a terminal device, an access network device (for example, a base station), a core network device, or the like. For ease of description, an example in which the terminal device performs the method is used below for description. It can be understood that the terminal device in the following descriptions may be replaced with another model application device, for example, the access network device or the core network device. The method includes: sending fourth information to the model management device, where the fourth information includes second delay information, and the second delay information indicates one or more delays related to a part or all of the one or more second entities, where a part or all of the first delay information indicates a third state, and the third state indicates that the terminal device does not support use of the one or more second entities.

In this embodiment of this application, the second delay information in the fourth information may indicate delays related to a part or all of the second entities, and may also indicate the third state. In this way, no dedicated bit needs to be used to indicate the third state. This helps reduce bits occupied by the fourth information, and reduces information exchange between the terminal device and the model management device.

In a possible implementation, the third state is valid within the second time window.

In a possible implementation, the fourth information includes second delay information, the second delay information indicates one or more delays related to a part or all of the one or more second entities, and the part or all of second delay information further indicates the third state.

In a possible implementation, the second delay information includes at least one of the following: second activation delay information, where the second activation delay information indicates H1 second activation delays, and one second activation delay indicates a delay in activating one of the H1 second entities; and second inference delay information, where the second inference delay information indicates H2 second inference delays, and one second inference delay indicates a delay in performing inference by using one of the H2 second entities; second rollback delay information, where the second rollback delay information indicates H3 second rollback delays, where one second rollback delay indicates a delay for one of the H3 second entities to fall back to a delay in implementing a third function without using an entity, and the second entity is capable of implementing the third function; and second monitoring delay information indicates H4 second monitoring delays, where one second monitoring delay indicates a delay in monitoring one of the H4 second entities; third switching delay information, where the third switching delay information indicates H5 third switching delays, where one third switching delay indicates a delay in switching from one of the H5 second entities to a third entity; and fourth switching delay information, where the fourth switching delay information indicates H6 fourth switching delays, where one fourth switching delay indicates a fourth entity to be switched to one of the H6 second entities; second deactivation delay information, where the second deactivation delay information indicates H7 second deactivation delays, one second deactivation delay indicates a delay in deactivating one of the H7 second entities, and all of H1, H2, H3, H4, H5, H6, and H7 are positive integers.

In a possible implementation, when values of a part or all of the H1 second activation delays (for example, U1 or fewer second activation delays) are all within a fifth value range, states of the corresponding U1 second entities are the third state; and values of a part or all of the H5 third switching delays (for example, U5 or fewer third switching delays) are all within a sixth value range, states of the corresponding U5 second entities are the third state; values of a part or all of the H6 fourth switching delays (for example, U3 or fewer fourth switching delays) are in a seventh value range; and states of the corresponding U3 second entities are the third state; and values of a part or all of the H2 second inference delays (for example, U4 or fewer inference delays) are in an eighth value range; and states of the corresponding U4 second entities are the third state.

It should be noted that content of any one of the first aspect or the possible implementations thereof may be cited in the possible implementations of the third aspect. Details are not described herein again.

According to a fourth aspect, an embodiment of this application provides a communication method. The method may be performed by a model application device or by software or hardware (for example, a chip) in a model application device. For example, the model application device may be one or more of a terminal device, an access network device (for example, a base station), a core network device, or the like. For ease of description, an example in which the terminal device performs the method is used below for description. It can be understood that the terminal device in the following descriptions may be replaced with another model application device, for example, the access network device or the core network device. The method includes: sending ninth information to a model management device, where the ninth information indicates one or more delays related to one or more first entities, the ninth information is used to determine tenth information, the tenth information is information related to N1 first entities of the one or more first entities, and N1 is a positive integer.

In this embodiment of this application, the terminal device may send the ninth information to the model management device, where the ninth information may be used to determine more information related to the N1 first entities, so that the model management device can obtain more information based on the ninth information, to more accurately manage the N 1 first entities.

In this embodiment of this application, the terminal device may send, to the model management device, the one or more delays related to the one or more first entities, so that the model management device can more accurately determine information related to the N1 first entities, and the model management device can subsequently more accurately determine the tenth information.

In a possible implementation, the ninth information includes at least one of the following: activation delay information, where the activation delay information indicates one or more activation delays, and one activation delay indicates a delay in activating one of the one or more first entities; inference delay information, where the inference delay information indicates one or more inference delays, and one inference delay indicates a delay in performing inference by using one of the one or more first entities; rollback delay information, where the rollback delay information indicates one or more rollback delays, one rollback delay indicates a delay in rolling back one of the one or more first entities to a case in which the entity is not used to implement a first function, and the first entity is capable of implementing the first function; monitoring delay information, where the monitoring delay information indicates one or more monitoring delays, and one monitoring delay indicates a delay in monitoring one of the one or more first entities; first switching delay information, where the first switching delay information indicates one or more first switching delays, and one first switching delay indicates a delay in switching from one of the one or more first entities to a third entity; second switching delay information, where the second switching delay information indicates one or more second switching delays, and one second switching delay indicates a delay in switching from a fourth entity to one of the one or more first entities; or deactivation delay information, where the deactivation delay information indicates one or more deactivation delays, and one deactivation delay indicates a delay in deactivating one of the one or more first entities.

In a possible implementation, the ninth information includes the activation delay information. When an activation delay corresponding to the first entity is within a value range #1, the tenth information indicates the terminal device to activate the first entity; and/or when an activation delay corresponding to the first entity is within a value range #2, the tenth information indicates the terminal device not to activate the first entity, where a minimum value in the value range #2 is greater than a maximum value in the value range #1.

In the foregoing implementation, a first entity with an excessively long activation delay may not be activated, to avoid a case that the terminal device takes an excessively long time to activate the first entity, or even cannot activate the first entity.

In a possible implementation, the tenth information further indicates first duration corresponding to the first entity, where the first duration is duration from a moment at which the terminal device acknowledges activation of the first entity to a moment at which the terminal device uses the first entity, and a shorter activation delay corresponding to the first entity indicates shorter first duration.

In the foregoing implementation, first duration may be configured for a first entity based on an activation delay of the first entity. This can fully leverage an advantage of a high-specification first entity (for example, an activation delay of a first entity is short), to stimulate continuous innovation in the industry and further improve network performance and user experience, and can further take into account a low-specification first entity (for example, an activation delay of a first entity is long), to meet a plurality of requirements of entities with different specifications or a terminal device on which the entities are located.

In a possible implementation, after fourth duration, first configuration information is received from the model management device, where the first configuration information indicates a configuration needed by the terminal device to use the first entity, and the fourth duration is less than or equal to the activation delay corresponding to the first entity.

In the foregoing implementation, the model management device may deliver the first configuration information in a timely manner before a first entity is activated, so that the terminal device can more quickly run the first entity.

In a possible implementation, the ninth information includes the inference delay information. When an inference delay corresponding to the first entity is within a value range #3, the tenth information indicates the terminal device to activate the first entity; and/or when an inference delay corresponding to the first entity is within a value range #4, the tenth information indicates the terminal device not to activate the first entity, where a minimum value in the value range #4 is greater than a maximum value in the value range #3.

In the foregoing implementation, a first entity with an excessively long inference delay may not be activated, to avoid a case that the terminal device takes an excessively long time to perform inference by using the first entity, or even cannot perform inference by using the first entity.

In a possible implementation, the tenth information further indicates second duration corresponding to the first entity, where the second duration is duration from a moment at which the terminal device detects a third signal to a moment at which the terminal device reports a fourth signal, the third signal is related to an input of the first entity, the fourth signal is related to an output of the first entity, and a shorter inference delay corresponding to the first entity indicates shorter second duration. For example, in an AI-CSI prediction scenario, for a terminal device that can complete CSI prediction within a short time, the model management device may configure a shorter CSI feedback time for the terminal device, to be specific, shorten a time interval between a moment at which a CSI-RS is sent and a moment at which CSI is fed back. This helps improve CSI prediction accuracy, and better assists the model management device in optimizing downlink transmission.

In the foregoing implementation, second duration may be configured for a first entity based on a value of an inference delay of the first entity, to meet a plurality of requirements of entities with different specifications or a terminal device on which the entities are located.

In a possible implementation, the ninth information includes the rollback delay information. When a rollback delay corresponding to the first entity is within a value range #5, the tenth information indicates the terminal device to roll back the first entity; or when a rollback delay corresponding to the first entity is within a value range #6, the tenth information indicates the terminal device not to roll back the first entity, where a minimum value in the value range #6 is greater than a maximum value in the value range #5.

In the foregoing implementation, a first entity with an excessively long rollback delay may not be activated, to avoid a case that the terminal device takes an excessively long time to roll back the first entity, or even cannot roll back the first entity.

In a possible implementation, after fifth duration, second configuration information is received from the model management device, where the second configuration information indicates a configuration needed when the terminal device does not use an entity to implement the first function, and the fifth duration is less than or equal to the rollback delay corresponding to the first entity.

In the foregoing implementation, the model management device may deliver the second configuration information in a timely manner before a first entity is rolled back, so that the terminal device can more quickly perform a rolled-back service.

In a possible implementation, the ninth information includes the rollback delay information, and the method further includes: sending fourth indication information to the model management device, where the fourth indication information requests to roll back the first entity; determining that no rollback indication information is received from the model management device within the rollback delay corresponding to the first entity; and rolling back the first entity after the rollback delay corresponding to the first entity.

In the foregoing implementation, the terminal device and the model management device may reach a consistent understanding on rollback of a first entity based on the rollback delay information. In addition, in this manner, the terminal device may autonomously determine to roll back the first entity. This helps improve autonomy of the terminal device in managing the first entity.

In a possible implementation, the ninth information includes the monitoring delay information, and the tenth information indicates third duration corresponding to the first entity. The third duration is duration from a moment at which the terminal device detects a fifth signal to a moment at which the terminal device reports a sixth signal. A shorter monitoring delay corresponding to the first entity indicates shorter third duration. The third duration is the duration from the moment at which the terminal device detects the fifth signal to the moment at which the terminal device reports the sixth signal. The fifth signal is used to monitor the first entity, and the sixth signal is a result of monitoring the first entity; or the fifth signal is a reference signal for monitoring the first entity, and the sixth signal is used to determine a result of monitoring the first entity.

In the foregoing implementation, third duration may be configured for a first entity based on a value of a monitoring delay of the first entity, to meet a plurality of requirements of entities with different specifications or a terminal device on which the entities are located.

In a possible implementation, the ninth information includes the first switching delay information. When a first switching delay corresponding to the first entity is within a value range #7, the tenth information indicates the terminal device to switch from the first entity to the third entity; and/or when a first switching delay corresponding to the first entity is within a value range #8, the tenth information indicates the terminal device not to switch the first entity, where a minimum value in the value range #8 is greater than a maximum value in the value range #7.

In the foregoing implementation, a first entity with an excessively long first switching delay may not be activated, to avoid a case that the terminal device takes an excessively long time to switch the first entity, or even cannot switch the first entity.

In a possible implementation, the ninth information includes the first switching delay information, and the method further includes: sending fifth indication information to the model management device, where the fifth indication information requests to switch from the first entity to the third entity; determining that no first switching indication information is received from the model management device within the first switching delay corresponding to the first entity; and after the first switching delay corresponding to the first entity, switching from the first entity to the third entity.

In the foregoing implementation, the terminal device and the model management device may reach a consistent understanding on switching of a first entity based on the first switching delay. In addition, in this manner, the terminal device may autonomously determine to switch the first entity. This helps improve autonomy of the terminal device in managing the first entity.

In a possible implementation, after sixth duration, third configuration information is received from the model management device, where the third configuration information indicates a configuration needed by the terminal device to use the third entity, and the sixth duration is less than or equal to the first switching delay corresponding to the first entity.

In the foregoing implementation, the model management device may deliver the third configuration information in a timely manner before a first entity is switched, so that the terminal device can more quickly switch the first entity.

In a possible implementation, the ninth information includes the second switching delay information. When a second switching delay corresponding to the first entity is within a value range #9, the tenth information indicates the terminal device to switch from the fourth entity to the first entity; and/or when a second switching delay corresponding to the first entity is within a value range #10, the tenth information indicates the terminal device not to switch the fourth entity, where a minimum value in the value range #10 is greater than a maximum value in the value range #9.

In the foregoing implementation, a first entity with an excessively long second switching delay may not be activated, to avoid a case that the terminal device takes an excessively long time to switch the first entity, or even cannot switch the first entity.

In a possible implementation, after seventh duration, fourth configuration information is received from the model management device, where the fourth configuration information indicates a configuration needed by the terminal device to use the first entity, and the seventh duration is less than or equal to the second switching delay corresponding to the first entity.

In the foregoing implementation, the model management device may deliver the fourth configuration information in a timely manner before a first entity is switched, so that the terminal device can more quickly switch the first entity.

In a possible implementation, the ninth information includes the second switching delay information, and the method further includes: sending sixth indication information to the model management device, where the sixth indication information requests to switch from the fourth entity to the first entity; determining that no second switching indication information is received from the model management device within the second switching delay corresponding to the first entity; and after the second switching delay corresponding to the first entity, switching from the fourth entity to the first entity.

In the foregoing implementation, the terminal device and the model management device may reach a consistent understanding on switching of a first entity based on the second switching delay. In addition, in this manner, the terminal device may autonomously determine to switch the first entity. This helps improve autonomy of the terminal device in managing the first entity.

In a possible implementation, the ninth information includes the deactivation delay information. When a deactivation delay corresponding to the first entity is within a value range #11, the tenth information indicates the terminal device to deactivate the first entity; and/or when a deactivation delay corresponding to the first entity is within a value range #12, the tenth information indicates the terminal device not to deactivate the first entity, where a minimum value in the value range #11 is greater than a maximum value in the value range #12.

In a possible implementation, after eighth duration, fifth configuration information is received from the model management device, where the eighth duration is less than or equal to the deactivation delay corresponding to the first entity, the fifth configuration information indicates a configuration needed by the terminal device to implement a second function after deactivating the first entity, and the first entity is capable of implementing the second function.

In the foregoing implementation, the model management device may deliver the fifth configuration information in a timely manner before a first entity is deactivated, so that the terminal device more quickly implements the second function after deactivating the first entity.

In the foregoing implementation, a first entity with an excessively long deactivation delay may not be deactivated, to avoid a case that the terminal device takes an excessively long time to deactivate the first entity, or even cannot deactivate the first entity.

In a possible implementation, the method further includes: sending seventh indication information to the model management device, where the seventh indication information requests to deactivate the first entity; determining that no deactivation indication information is received from the model management device within the deactivation delay corresponding to the first entity; and after the deactivation delay corresponding to the first entity, deactivating the first entity.

In the foregoing implementation, the terminal device and the model management device may reach a consistent understanding on deactivation of a first entity based on the deactivation delay. In addition, in this manner, the terminal device may autonomously determine to deactivate the first entity. This helps improve autonomy of the terminal device in managing the first entity.

According to a fifth aspect, an embodiment of this application provides a communication method. The method may be performed by a model application device or by software or hardware (for example, a chip) in a model application device. For example, the model application device may be one or more of a terminal device, an access network device (for example, a base station), a core network device, or the like. For ease of description, an example in which the terminal device performs the method is used below for description. It can be understood that the terminal device in the following descriptions may be replaced with another model application device, for example, the access network device or the core network device. The method includes: receiving eleventh information from a model management device, where the eleventh information indicates an entity parameter of one or more first entities, and the entity parameter of the one or more first entities is valid within a fifth time window. An entity parameter of a first entity may be understood as an internal configuration variable of the first entity. The first entity needs to use the entity parameter during inference, and a value of the entity parameter defines a model that can be used. The value of the entity parameter may be obtained based on training data, determined based on experience, obtained from an information source, or the like.

In this embodiment of this application, the model management device delivers the entity parameter of the one or more first entities to the terminal device, and the terminal device does not need to prestore the entity parameter of the one or more first entities. In addition, the model management device may keep the entity parameter of the one or more first entities unchanged within the fifth time window. This reduces a quantity of times that the model management device delivers the entity parameter to the terminal device, and therefore reduces information exchange between the terminal device and the model management device.

In a possible implementation, the method further includes: after the fifth time window, receiving twelfth information from the model management device, where the twelfth information indicates updated entity parameters of N2 first entities of the one or more first entities, and N2 is a positive integer.

According to a sixth aspect, an embodiment of this application provides a communication method. The method may be performed by a model application device or by software or hardware (for example, a chip) in a model application device. For example, the model application device may be one or more of a terminal device, an access network device (for example, a base station), a core network device, or the like. For ease of description, an example in which the terminal device performs the method is used below for description. It can be understood that the terminal device in the following descriptions may be replaced with another model application device, for example, the access network device or the core network device. The method includes: sending thirteenth information to a model management device, where the thirteenth information indicates a state of one or more first entities, the state of the one or more first entities includes at least a first state or a second state, the first state indicates that the terminal device supports use of the one or more first entities, the second state indicates that the terminal device does not support use of the one or more models, and the first state is valid within a first time window.

In a possible implementation, the first state indicates one of the following: The model application device or the chip used in the model application device has a capability of executing the one or more first entities; the model application device or the chip used in the model application device has locally obtained/stored/loaded the one or more first entities, or is capable of loading the one or more first entities from another device; the model application device or the chip used in the model application device is ready to perform inference by using the one or more first entities; the model application device or the chip used in the model application device has a configuration of the model management device for executing or running the one or more first entities; or the model application device or the chip used in the model application device has been activated and performed inference by using the one or more first entities.

In a possible implementation, the second state is valid within a second time window. Optionally, the second time window is the same as or different from the first time window.

For specific manners of indicating the first state and the second state in this aspect, refer to the descriptions of the first state and the third state in the first aspect respectively. Details are not described herein again. A possible implementation, in the first aspect, that is related to the first state or the third state may be applied to this aspect after the third state is replaced with the second state.

According to a seventh aspect, an embodiment of this application provides a communication method. The method may be performed by a model management device, or may be performed by a software or hardware module (for example, a chip) of a model management device, or the like. For ease of description, an example in which the model management device performs the method is used below for description. The method includes: receiving first information from a terminal device, where the first information indicates that a state of one or more first entities is a first state, the first state indicates that the terminal device supports use of the one or more first entities, and the first state is valid within a first time window.

In a possible implementation, that the first information indicates that the state of the one or more first entities is the first state includes: A model application device or a chip used in a model application device has a capability of executing the one or more first entities; a model application device or a chip used in a model application device has locally obtained/stored/loaded the one or more first entities, or is capable of loading the one or more first entities from another device; a model application device or a chip used in a model application device is ready to perform inference by using the one or more first entities; a model application device or a chip used in a model application device has a configuration of the model management device for executing or running the one or more first entities; or a model application device or a chip used in a model application device has been activated and performed inference by using the one or more first entities.

In a possible implementation, the method further includes: receiving second information from the terminal device, where the second information indicates that states of M first entities of the one or more first entities are updated to a second state, the second state indicates that the terminal device does not support use of the M first entities, and M is a positive integer.

In a possible implementation, a moment at which the second information is sent is a first moment, a time interval between the first moment and a moment at which the first information is sent meets a first periodicity, and the first periodicity is a periodicity at which the terminal device reports the states of the M first entities.

In a possible implementation, the method further includes: after the first time window, sending first indication information to the terminal device, where the first indication information indicates to report states of a part or all of the one or more first entities; and receiving third information from the terminal device, where the third information indicates the states of the part or all of the one or more first entities.

In a possible implementation, the method further includes: receiving fourth information from the terminal device, where the fourth information indicates that a state of one or more second entities is a third state, and the third state indicates that the terminal device does not support use of the one or more second entities.

In a possible implementation, the third state is valid within a second time window, and the second time window is the same as or different from the first time window.

In a possible implementation, the method further includes: receiving fifth information from the terminal device, where the fifth information indicates that states of a part or all of the one or more second entities are updated to a fourth state, the fourth state indicates that the terminal device is capable of executing the part or all of second entities, and a difference between a moment at which the terminal device sends the fifth information and the moment at which the terminal device sends the first information is less than a length of the first time window.

In a possible implementation, the fourth state is valid within a third time window, and the third time window is the same as or different from the first time window.

In a possible implementation, second indication information is received from the terminal device, where the second indication information indicates the first time window; or third indication information is sent to the terminal device, where the third indication information indicates the first time window.

In a possible implementation, first delay information includes at least one of the following: first activation delay information, where the first activation delay information indicates K1 first activation delays, and one first activation delay indicates a delay in activating one of K1 first entities; first inference delay information, where the first inference delay information indicates K2 first inference delays, and one first inference delay indicates a delay in performing inference by using one of K2 first entities; first rollback delay information, where the first rollback delay information indicates K3 first rollback delays, one first rollback delay indicates a delay in rolling back one of the K3 first entities to a delay in implementing a first function without using an entity, and the first entity is capable of implementing the first function; and first monitoring delay information indicates K4 first monitoring delays, where one first monitoring delay indicates a delay in monitoring one of the K4 first entities; first switching delay information, where the first switching delay information indicates K5 first switching delays, and one first switching delay indicates a delay in switching from one of the K5 first entities to a third entity; and second switching delay information, where the second switching delay information indicates K6 second switching delays, and one second switching delay indicates a fourth entity to be switched to one of the K6 first entities; or first deactivation delay information, where the first deactivation delay information indicates K7 first deactivation delays, and one first deactivation delay indicates a delay in deactivating one of the K7 first entities. All of K1, K2, K3, K4, K5, K6, and K7 are positive integers.

In a possible implementation, that the part or all of the first delay information indicates the first state includes at least one of the following: The first activation delay information indicates that states of P first entities of the K1 first entities are the first state, where P is a positive integer, for example, when values of a part or all of the K1 first activation delays, for example, P or fewer first activation delays, are within a first value range, the states of the corresponding P first entities are the first state; the first switching delay information indicates that states of Q first entities of the K5 first entities are the first state, where Q is a positive integer, for example, when values of a part or all of the K5 first switching delays, for example, less than or equal to Q first switching delays, are within a second value range, the states of the corresponding Q first entities are the first state; the second switching delay information indicates that states of R first entities of the K6 first entities are the first state, where R is a positive integer, for example, when values of a part or all of the K6 second switching delays, for example, R or fewer second switching delays, are within a third value range, the states of the corresponding R first entities are the first state; or the first inference delay information indicates that states of L first entities of the K2 first entities are the first state, where L is a positive integer, for example, when values of a part or all of the K2 first inference delays, for example, less than or equal to L first inference delays, are within a fourth value range, the states of the corresponding L first entities are the first state.

In a possible implementation, the length of the first time window meets at least one of the following conditions: being greater than a maximum value in the first value range; being greater than a maximum value in the second value range; being greater than a maximum value in the third value range; or being greater than a maximum value in the fourth value range.

In a possible implementation, the fourth information includes second delay information, the second delay information indicates one or more delays related to a part or all of the one or more second entities, and the part or all of second delay information further indicates the third state.

In a possible implementation, the second delay information includes at least one of the following: second activation delay information, where the second activation delay information indicates H1 second activation delays, and one second activation delay indicates a delay in activating one of the H1 second entities; and second inference delay information, where the second inference delay information indicates H2 second inference delays, and one second inference delay indicates a delay in performing inference by using one of the H2 second entities; second rollback delay information, where the second rollback delay information indicates H3 second rollback delays, where one second rollback delay indicates a delay for one of the H3 second entities to fall back to a delay in implementing a third function without using an entity, and the second entity is capable of implementing the third function; and second monitoring delay information indicates H4 second monitoring delays, where one second monitoring delay indicates a delay in monitoring one of the H4 second entities; third switching delay information, where the third switching delay information indicates H5 third switching delays, where one third switching delay indicates a delay in switching from one of the H5 second entities to a third entity; and fourth switching delay information, where the fourth switching delay information indicates H6 fourth switching delays, where one fourth switching delay indicates a fourth entity to be switched to one of the H6 second entities; second deactivation delay information, where the second deactivation delay information indicates H7 second deactivation delays, one second deactivation delay indicates a delay in deactivating one of the H7 second entities, and all of H1, H2, H3, H4, H5, H6, and H7 are positive integers.

In a possible implementation, that a part or all of the second delay information indicates the third state includes at least one of the following: the second activation delay information indicates that states of U1 second entities of the H1 second entities are the third state, where U1 is a positive integer; and the third switching delay information indicates that states of U2 second entities of the H5 second entities are the third state, where U2 is a positive integer; the fourth switching delay information indicates that states of U3 second entities of the H6 second entities are the third state, where U3 is a positive integer; or the second inference delay information indicates that states of U4 second entities of the H2 second entities are the third state, where U4 is a positive integer.

In a possible implementation, when values of a part or all of the H1 second activation delays, for example, U1 or fewer second activation delays, are all within a fifth value range, states of the corresponding U1 second entities are the third state; when values of a part or all of the H5 third switching delays, for example, U5 or fewer third switching delays, are all within a sixth value range, the states of the corresponding U5 second entities are the third state; when values of a part or all of the H6 fourth switching delays, for example, U3 or fewer fourth switching delays, are within a seventh value range, states of the corresponding U3 second entities are the third state; and when values of a part or all of the H2 second inference delays, for example, U4 or fewer inference delays, are within an eighth value range, states of the corresponding U4 second entities are the third state.

In a possible implementation, the method further includes: sending fifth information to the terminal device within the first time window, where the fifth information indicates a policy for managing N first entities of the one or more first entities, and N is a positive integer.

In a possible implementation, the method further includes: after the first time window, receiving seventh information from the terminal device, where the seventh information indicates states of a part or all of the one or more first entities. It should be understood that the part or all of first entities may be first entities, whose states are updated, of the one or more first entities, or may be the one or more first entities.

Optionally, the terminal device sends the seventh information at a second moment, where a time interval between the second moment and the moment at which the first information is sent meets a first periodicity, and the first periodicity is a periodicity at which the terminal device reports the states of the part or all of the one or more first entities.

In a possible implementation, the method further includes: after the first time window, receiving eighth information from the terminal device, where the eighth information indicates states of a part or all of the one or more second entities. It should be understood that the part or all of second entities may be second entities, whose states are updated, of the one or more second entities, or may be the one or more second entities.

Optionally, the terminal device sends the eighth information at a third moment, where a time interval between the third moment and the moment at which the first information is sent meets a first periodicity, and the first periodicity is a periodicity at which the terminal device reports the states of the part or all of the one or more second entities.

According to an eighth aspect, an embodiment of this application provides a communication method. The method may be performed by a model management device, or may be performed by a software or hardware module (for example, a chip) of a model management device, or the like. For ease of description, an example in which the model management device performs the method is used below for description. The method includes: receiving first information from a terminal device, where the first information includes first delay information, the first delay information indicates one or more delays related to a part or all of one or more first entities, a part or all of the first delay information indicates a first state, and the first state indicates that the terminal device supports use of the one or more first entities.

In a possible implementation, the first state indicates one of the following: A model application device or a chip used in a model application device has a capability of executing the one or more first entities; a model application device or a chip used in a model application device has locally obtained/stored/loaded the one or more first entities, or is capable of loading the one or more first entities from another device; a model application device or a chip used in a model application device is ready to perform inference by using the one or more first entities; a model application device or a chip used in a model application device has a configuration of the model management device for executing or running the one or more first entities; or a model application device or a chip used in a model application device has been activated and performed inference by using the one or more first entities.

In a possible implementation, first delay information includes at least one of the following: first activation delay information, where the first activation delay information indicates K1 first activation delays, and one first activation delay indicates a delay in activating one of K1 first entities; first inference delay information, where the first inference delay information indicates K2 first inference delays, and one first inference delay indicates a delay in performing inference by using one of K2 first entities; first rollback delay information, where the first rollback delay information indicates K3 first rollback delays, one first rollback delay indicates a delay in rolling back one of the K3 first entities to a delay in implementing a first function without using an entity, and the first entity is capable of implementing the first function; first monitoring delay information indicates K4 first monitoring delays, where one first monitoring delay indicates a delay in monitoring one of the K4 first entities; first switching delay information, where the first switching delay information indicates K5 first switching delays, and one first switching delay indicates a delay in switching from one of the K5 first entities to a third entity; second switching delay information, where the second switching delay information indicates K6 second switching delays, and one second switching delay indicates a fourth entity to be switched to one of the K6 first entities; or first deactivation delay information, where the first deactivation delay information indicates K7 first deactivation delays, and one first deactivation delay indicates a delay in deactivating one of the K7 first entities. All of K1, K2, K3, K4, K5, K6, and K7 are positive integers.

In a possible implementation, that the part or all of the first delay information indicates the first state includes at least one of the following: The first activation delay information indicates that states of P first entities of the K1 first entities are the first state, where P is a positive integer, for example, when values of a part or all of the K1 first activation delays (for example, less than or equal to P first activation delays) are within a first value range, the states of the corresponding P first entities are the first state; the first switching delay information indicates that states of Q first entities of the K5 first entities are the first state, where Q is a positive integer, for example, when values of a part or all of the K5 first switching delays (for example, less than or equal to Q first switching delays) are within a second value range, the states of the corresponding Q first entities are the first state; the second switching delay information indicates that states of R first entities of the K6 first entities are the first state, where R is a positive integer, for example, when values of a part or all of the K6 second switching delays (for example, less than or equal to R second switching delays) are within a third value range, the states of the corresponding R first entities are the first state; or the first inference delay information indicates that states of L first entities of the K2 first entities are the first state, where L is a positive integer, for example, when values of a part or all of the K2 first inference delays (for example, less than or equal to L first inference delays) are within a fourth value range, the states of the corresponding L first entities are the first state.

In a possible implementation, the first state is valid within a first time window.

In a possible implementation, a length of the first time window meets at least one of the following conditions: being greater than a maximum value in the first value range; being greater than a maximum value in the second value range; being greater than a maximum value in the third value range; or being greater than a maximum value in the fourth value range.

In a possible implementation, the method further includes: after the first time window, receiving second information from the terminal device, where the second information indicates that states of M first entities/functions are updated to a second state, the second state indicates that the terminal device does not support use of the M first entities, and M is a positive integer.

Optionally, the second state is valid within a fourth time window, and the fourth time window may be the same as or different from the first time window.

In a possible implementation, a moment at which the second information is sent is a first moment, a time interval between the first moment and a moment at which the first information is sent meets a first periodicity, and the first periodicity is a periodicity at which the terminal device reports the states of the M first entities.

In a possible implementation, the method further includes: after the first time window, sending first indication information to the terminal device, where the first indication information indicates to report states of a part or all of the one or more first entities; and receiving third information from the terminal device, where the third information indicates the states of the part or all of the one or more first entities.

In a possible implementation, the method further includes: receiving fourth information from the terminal device, where the fourth information indicates that a state of one or more second entities is a third state, and the third state indicates that the terminal device does not support use of the one or more second entities.

In a possible implementation, the third state is valid within a second time window, and the second time window is the same as or different from the first time window.

In a possible implementation, the method further includes: receiving fifth information from the terminal device, where the fifth information indicates that states of a part or all of the one or more second entities are updated to a fourth state, the fourth state indicates that the terminal device is capable of executing the part or all of second entities, and a difference between a moment at which the terminal device sends the fifth information and the moment at which the terminal device sends the first information is less than the length of the first time window.

In a possible implementation, the fourth state is valid within a third time window, and the third time window is the same as or different from the first time window.

In a possible implementation, second indication information is received from the terminal device, where the second indication information indicates the first time window; or third indication information is sent to the terminal device, where the third indication information indicates the first time window.

In a possible implementation, the fourth information includes second delay information, the second delay information indicates one or more delays related to a part or all of the one or more second entities, and the part or all of second delay information further indicates the third state. For details of the second delay information, refer to the content described in the third aspect. Details are not described herein again.

In a possible implementation, the second time window meets at least one of the following conditions: being greater than a maximum value in a fifth value range; being greater than a maximum value in a sixth value range; being greater than a maximum value in a seventh value range; or being greater than a maximum value in an eighth value range.

It should be noted that content of any one of the first aspect or the possible implementations thereof may be cited in the possible implementations of the eighth aspect. Details are not described herein again.

According to a ninth aspect, an embodiment of this application provides a communication method. The method may be performed by a model management device, or may be performed by a software or hardware module (for example, a chip) of a model management device, or the like. For ease of description, an example in which the model management device performs the method is used below for description. The method includes: receiving fourth information from a terminal device, where the fourth information includes second delay information, the second delay information indicates one or more delays related to a part or all of the one or more second entities, a part or all of the first delay information indicates a third state, and the third state indicates that the terminal device does not support use of the one or more second entities.

In a possible implementation, the third state is valid within the second time window.

In a possible implementation, the fourth information includes second delay information, the second delay information indicates one or more delays related to a part or all of the one or more second entities, and the part or all of second delay information further indicates the third state.

In a possible implementation, the second delay information includes at least one of the following: second activation delay information, where the second activation delay information indicates H1 second activation delays, and one second activation delay indicates a delay in activating one of the H1 second entities; and second inference delay information, where the second inference delay information indicates H2 second inference delays, and one second inference delay indicates a delay in performing inference by using one of the H2 second entities; second rollback delay information, where the second rollback delay information indicates H3 second rollback delays, where one second rollback delay indicates a delay for one of the H3 second entities to fall back to a delay in implementing a third function without using an entity, and the second entity is capable of implementing the third function; and second monitoring delay information indicates H4 second monitoring delays, where one second monitoring delay indicates a delay in monitoring one of the H4 second entities; third switching delay information, where the third switching delay information indicates H5 third switching delays, where one third switching delay indicates a delay in switching from one of the H5 second entities to a third entity; and fourth switching delay information, where the fourth switching delay information indicates H6 fourth switching delays, where one fourth switching delay indicates a fourth entity to be switched to one of the H6 second entities; second deactivation delay information, where the second deactivation delay information indicates H7 second deactivation delays, one second deactivation delay indicates a delay in deactivating one of the H7 second entities, and all of H1, H2, H3, H4, H5, H6, and H7 are positive integers.

In a possible implementation, that a part or all of the second delay information indicates the third state includes at least one of the following: the second activation delay information indicates that states of U1 second entities of the H1 second entities are the third state, where U1 is a positive integer; and the third switching delay information indicates that states of U2 second entities of the H5 second entities are the third state, where U2 is a positive integer; the fourth switching delay information indicates that states of U3 second entities of the H6 second entities are the third state, where U3 is a positive integer; or the second inference delay information indicates that states of U4 second entities of the H2 second entities are the third state, where U4 is a positive integer.

In a possible implementation, when values of a part or all of the H1 second activation delays, for example, U1 or fewer second activation delays, are all within a fifth value range, states of the corresponding U1 second entities are the third state; when values of a part or all of the H5 third switching delays, for example, U5 or fewer third switching delays, are all within a sixth value range, the states of the corresponding U5 second entities are the third state; when values of a part or all of the H6 fourth switching delays, for example, U3 or fewer fourth switching delays, are within a seventh value range, states of the corresponding U3 second entities are the third state; and when values of a part or all of the H2 second inference delays, for example, U4 or fewer inference delays, are within an eighth value range, states of the corresponding U4 second entities are the third state.

It should be noted that content of any one of the first aspect or the possible implementations thereof may be cited in the possible implementations of the ninth aspect. Details are not described herein again.

According to a tenth aspect, an embodiment of this application provides a communication method. The method may be performed by a model management device, or may be performed by a software or hardware module (for example, a chip) of a model management device, or the like. For ease of description, an example in which the model management device performs the method is used below for description. The method includes: receiving ninth information from a terminal device, where the ninth information indicates one or more delays related to one or more first entities, the first information is used to determine tenth information, the tenth information is information related to N first entities of the one or more first entities, and N is a positive integer.

In a possible implementation, the ninth information includes at least one of the following: activation delay information, where the activation delay information indicates one or more activation delays, and one activation delay indicates a delay in activating one of the one or more first entities; inference delay information, where the inference delay information indicates one or more inference delays, and one inference delay indicates a delay in performing inference by using one of the one or more first entities; rollback delay information, where the rollback delay information indicates one or more rollback delays, one rollback delay indicates a delay in rolling back one of the one or more first entities to a case in which the entity is not used to implement a first function, and the first entity is capable of implementing the first function; monitoring delay information, where the monitoring delay information indicates one or more monitoring delays, and one monitoring delay indicates a delay in monitoring one of the one or more first entities; first switching delay information, where the first switching delay information indicates one or more first switching delays, and one first switching delay indicates a delay in switching from one of the one or more first entities to a third entity; second switching delay information, where the second switching delay information indicates one or more second switching delays, and one second switching delay indicates a delay in switching from a fourth entity to one of the one or more first entities; or deactivation delay information, where the deactivation delay information indicates one or more deactivation delays, and one deactivation delay indicates a delay in deactivating one of the one or more first entities.

In a possible implementation, the ninth information includes the activation delay information. When an activation delay corresponding to the first entity is within a value range #1, the tenth information indicates the terminal device to activate the first entity; and/or when an activation delay corresponding to the first entity is within a value range #2, the tenth information indicates the terminal device not to activate the first entity, where a minimum value in the value range #2 is greater than a maximum value in the value range #1.

In a possible implementation, the tenth information further indicates first duration corresponding to the first entity, where the first duration is duration from a moment at which the terminal device acknowledges activation of the first entity to a moment at which the terminal device uses the first entity, and a shorter activation delay corresponding to the first entity indicates shorter first duration.

In a possible implementation, after fourth duration, first configuration information is sent to the terminal device, where the first configuration information indicates a configuration needed by the terminal device to use the first entity, and the fourth duration is less than or equal to the activation delay corresponding to the first entity.

In a possible implementation, the ninth information includes the inference delay information. When an inference delay corresponding to the first entity is within a value range #3, the tenth information indicates the terminal device to activate the first entity; and/or when an inference delay corresponding to the first entity is within a value range #4, the tenth information indicates the terminal device not to activate the first entity, where a minimum value in the value range #4 is greater than a maximum value in the value range #3.

In a possible implementation, the tenth information further indicates second duration corresponding to the first entity, where the second duration is duration from a moment at which the terminal device detects a third signal to a moment at which the terminal device reports a fourth signal, the third signal is related to an input of the first entity, the fourth signal is related to an output of the first entity, and a shorter inference delay corresponding to the first entity indicates shorter second duration.

In a possible implementation, the ninth information includes the rollback delay information. When a rollback delay corresponding to the first entity is within a value range #5, the tenth information indicates the terminal device to roll back the first entity; or when a rollback delay corresponding to the first entity is within a value range #6, the tenth information indicates the terminal device not to roll back the first entity, where a minimum value in the value range #6 is greater than a maximum value in the value range #5.

In a possible implementation, after fifth duration, second configuration information is sent to the terminal device, where the second configuration information indicates a configuration needed when the terminal device does not use an entity to implement the first function, and the fifth duration is less than or equal to the rollback delay corresponding to the first entity.

In a possible implementation, the ninth information includes the rollback delay information, and the method further includes: receiving fourth indication information from the terminal device, where the fourth indication information requests to roll back the first entity; and after the rollback delay corresponding to the first entity, determining that the terminal device has rolled back the first entity.

In a possible implementation, the ninth information includes the monitoring delay information, and the tenth information indicates third duration corresponding to the first entity. The third duration is duration from a moment at which the terminal device detects a fifth signal to a moment at which the terminal device reports a sixth signal. A shorter monitoring delay corresponding to the first entity indicates shorter third duration. The third duration is the duration from the moment at which the terminal device detects the fifth signal to the moment at which the terminal device reports the sixth signal. The fifth signal is used to monitor the first entity, and the sixth signal is a result of monitoring the first entity; or the fifth signal is a reference signal for monitoring the first entity, and the sixth signal is used to determine a result of monitoring the first entity.

In a possible implementation, the ninth information includes the first switching delay information. When a first switching delay corresponding to the first entity is within a value range #7, the tenth information indicates the terminal device to switch from the first entity to the third entity; and/or when a first switching delay corresponding to the first entity is within a value range #8, the tenth information indicates the terminal device not to switch the first entity, where a minimum value in the value range #8 is greater than a maximum value in the value range #7.

In a possible implementation, the ninth information includes the first switching delay information, and the method further includes: receiving fifth indication information from the terminal device, where the fifth indication information requests to switch from the first entity to the third entity; and after the first switching delay corresponding to the first entity, determining that the terminal device has switched from the first entity to the third entity.

In a possible implementation, after sixth duration, third configuration information is sent to the terminal device, where the third configuration information indicates a configuration needed by the terminal device to use the third entity, and the sixth duration is less than or equal to the first switching delay corresponding to the first entity.

In a possible implementation, the ninth information includes the first switching delay information, and the method further includes: receiving fifth indication information from the terminal device, where the fifth indication information requests to switch from the first entity to the third entity; and after the first switching delay corresponding to the first entity, determining that the terminal device has switched from the first entity to the third entity.

In a possible implementation, the ninth information includes the second switching delay information. When a second switching delay corresponding to the first entity is within a value range #9, the tenth information indicates the terminal device to switch from the fourth entity to the first entity; and/or when a second switching delay corresponding to the first entity is within a value range #10, the tenth information indicates the terminal device not to switch the fourth entity, where a minimum value in the value range #10 is greater than a maximum value in the value range #9.

In a possible implementation, after seventh duration, fourth configuration information is sent to the terminal device, where the fourth configuration information indicates a configuration needed by the terminal device to use the first entity, and the seventh duration is less than or equal to the second switching delay corresponding to the first entity.

In a possible implementation, the ninth information includes the second switching delay information, and the method further includes: receiving sixth indication information from the terminal device, where the sixth indication information requests to switch from the fourth entity to the first entity; and after the second switching delay corresponding to the first entity, determining that the terminal device has switched from the fourth entity to the first entity.

In a possible implementation, after eighth duration, fifth configuration information is sent to the terminal device, where the eighth duration is less than or equal to the deactivation delay corresponding to the first entity, the fifth configuration information indicates a configuration needed by the terminal device to implement a second function after deactivating the first entity, and the first entity is capable of implementing the second function.

In a possible implementation, the ninth information includes the deactivation delay information. When a deactivation delay corresponding to the first entity is within a value range #11, the tenth information indicates the terminal device to deactivate the first entity; and/or when a deactivation delay corresponding to the first entity is within a value range #12, the tenth information indicates the terminal device not to deactivate the first entity, where a minimum value in the value range #11 is greater than a maximum value in the value range #12.

In a possible implementation, the method further includes: receiving seventh indication information from the terminal device, where the seventh indication information requests to deactivate the first entity; and after the deactivation delay corresponding to the first entity, determining that the terminal device has deactivated the first entity.

According to an eleventh aspect, an embodiment of this application provides a communication method. The method may be performed by a model management device, or may be performed by a software or hardware module (for example, a chip) of a model management device, or the like. For ease of description, an example in which the model management device performs the method is used below for description. The method includes: sending eleventh information to a terminal device, where the eleventh information indicates an entity parameter of one or more first entities, and the entity parameter of the one or more first entities is valid within a fifth time window.

In a possible implementation, the method further includes: after the fifth time window, sending twelfth information to the terminal device, where the twelfth information indicates updated entity parameters of N first entities of the one or more first entities, and N is a positive integer.

According to a twelfth aspect, an embodiment of this application provides a communication method. The method may be performed by a model management device, or may be performed by a software or hardware module (for example, a chip) of a model management device, or the like. For ease of description, an example in which the model management device performs the method is used below for description. The method includes: receiving thirteenth information from a terminal device, where the thirteenth information indicates a state of one or more first entities, the state of the one or more first entities includes at least a first state or a second state, the first state indicates that the terminal device supports use of the one or more first entities, the second state indicates that the terminal device does not support use of the one or more models, and the first state is valid within a first time window.

In a possible implementation, the first state indicates one of the following: A model application device or a chip used in a model application device has a capability of executing the one or more first entities; a model application device or a chip used in a model application device has locally obtained/stored/loaded the one or more first entities, or is capable of loading the one or more first entities from another device; a model application device or a chip used in a model application device is ready to perform inference by using the one or more first entities; a model application device or a chip used in a model application device has a configuration of the model management device for executing or running the one or more first entities; or a model application device or a chip used in a model application device has been activated and performed inference by using the one or more first entities.

In a possible implementation, the second state is valid within a second time window. Optionally, the second time window is the same as or different from the first time window.

For specific manners of indicating the first state and the second state in this aspect, refer to the descriptions of the first state and the third state in the first aspect respectively. Details are not described herein again. A possible implementation, in the first aspect, that is related to the first state or the second state may be applied to this aspect after the third state is replaced with the second state.

According to a thirteenth aspect, an embodiment of this application provides a communication apparatus. The communication apparatus may be the model application device provided in any one of the first aspect to the sixth aspect, or software or hardware (for example, a chip) in the model application device. For example, the model application device may be one or more of a terminal device, an access network device (for example, a base station), a core network device, or the like. The communication apparatus includes a corresponding means (means) or module for performing any one of the first aspect to the sixth aspect or the possible implementations of the first aspect to the sixth aspect. For example, the communication apparatus includes a processing module (sometimes also referred to as a processing unit) and a transceiver module (sometimes also referred to as a transceiver unit).

The transceiver module communicates with a model management device under the control of the processing module. For example, under the control of the processing module, the transceiver module may send first information to the model management device, where the first information indicates that a state of one or more first entities is a first state, the first state indicates that the terminal device supports use of the one or more first entities, and the first state is valid within a first time window.

Optionally, the communication apparatus may be further configured to implement any one of the first aspect to the sixth aspect or the possible implementations thereof. Details are not described herein again.

According to a fourteenth aspect, an embodiment of this application provides a communication apparatus. The communication apparatus may be the model management device described in any one of the seventh aspect to the twelfth aspect, or a software module or a hardware module (for example, a chip) deployed in the model management device. The communication apparatus includes a corresponding means (means) or module for performing any one of the seventh aspect to the twelfth aspect or the possible implementations of the seventh aspect to the twelfth aspect. For example, the communication apparatus includes a processing module (sometimes also referred to as a processing unit) and a transceiver module (sometimes also referred to as a transceiver unit).

The transceiver module communicates with a model application device under the control of the processing module. For example, under the control of the processing module, the transceiver module may receive first information from a terminal device, where the first information indicates that a state of one or more first entities is a first state, the first state indicates that the terminal device supports use of the one or more first entities, and the first state is valid within a first time window.

Optionally, the communication apparatus may be further configured to implement any one of the seventh aspect to the twelfth aspect or the possible implementations thereof. Details are not described herein again.

According to a fifteenth aspect, an embodiment of this application provides a communication apparatus, including a processor and a communication interface. The communication interface is configured to receive a signal from a communication apparatus other than the communication apparatus and transmit the signal to the processor, or send a signal from the processor to a communication apparatus other than the communication apparatus. The processor is configured to implement the method according to any one of the first aspect to the twelfth aspect or the possible implementations thereof through a logic circuit or by executing code instructions.

During specific implementation, the communication apparatus may be a chip, and the processor may be a transistor, a gate circuit, a trigger, various logic circuits, or the like. A specific implementation of the processor is not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station.

In another implementation, the communication apparatus may be a part of components in a wireless communication device, for example, an integrated circuit product such as a system chip or a communication chip. The system chip may also be referred to as a system-on-a-chip (system-on-a-chip, SoC), or referred to as an SoC chip for short. The communication chip may include a baseband processing chip and a radio frequency processing chip. The baseband processing chip is sometimes also referred to as a modem (modem) or a baseband chip. The radio frequency processing chip is sometimes also referred to as a radio frequency transceiver (transceiver) or a radio frequency chip. During physical implementation, a part or all of chips of the communication chip may be integrated into the SoC chip. For example, the baseband processing chip is integrated into the SoC chip, and the radio frequency processing chip is not integrated into the SoC chip. The interface circuit may be a radio frequency processing chip in the wireless communication device, and the processor may be a baseband processing chip in the wireless communication device. The interface circuit may be an input/output interface, an interface circuit, an output circuit, an input circuit, a pin, a related circuit, or the like in the chip or a chip system. The processor may alternatively be embodied as a processing circuit or a logic circuit.

In another implementation, the communication apparatus may be a part of components in a wireless communication device, for example, an integrated circuit product such as a system chip or a communication chip. The interface circuit may be an input/output interface, an interface circuit, an output circuit, an input circuit, a pin, a related circuit, or the like in the chip or a chip system. The processor may alternatively be embodied as a processing circuit or a logic circuit.

According to a sixteenth aspect, an embodiment of this application provides a communication apparatus, including a processing circuit and an interface circuit. The interface circuit is configured to be coupled to a memory outside the communication apparatus, and provide a communication interface for the processing circuit to access the memory. The processing circuit is configured to execute program instructions in the memory, to implement the method according to any one of the first aspect to the twelfth aspect or the possible implementations thereof.

During specific implementation, the communication apparatus may be a chip, an input circuit may be an input pin, an output circuit may be an output pin, and the processing circuit may be a transistor, a gate circuit, a trigger, various logic circuits, or the like. An input signal received by the input circuit may be received and input by, for example, but not limited to, a receiver. A signal output by the output circuit may be output to, for example, but not limited to, a transmitter, and transmitted by the transmitter. In addition, the input circuit and the output circuit may be a same circuit, and the circuit serves as the input circuit and the output circuit at different moments. Specific implementations of a processor and various circuits are not limited in this embodiment of this application.

In an implementation, the communication apparatus may be a wireless communication device, to be specific, a computer device supporting a wireless communication function. Specifically, the wireless communication device may be a terminal, for example, a smartphone, or may be a radio access network device, for example, a base station. The system chip may also be referred to as a system-on-a-chip (system-on-a-chip, SoC), or referred to as an SoC chip for short. The communication chip may include a baseband processing chip and a radio frequency processing chip. The baseband processing chip is sometimes also referred to as a modem (modem) or a baseband chip. The radio frequency processing chip is sometimes also referred to as a radio frequency transceiver (transceiver) or a radio frequency chip. During physical implementation, a part or all of chips of the communication chip may be integrated into the SoC chip. For example, the baseband processing chip is integrated into the SoC chip, and the radio frequency processing chip is not integrated into the SoC chip. The interface circuit may be a radio frequency processing chip in the wireless communication device, and the processing circuit may be a baseband processing chip in the wireless communication device.

In another implementation, the communication apparatus may be a part of components in a wireless communication device, for example, an integrated circuit product such as a system chip or a communication chip. The interface circuit may be an input/output interface, an interface circuit, an output circuit, an input circuit, a pin, a related circuit, or the like in the chip or a chip system. The processor may alternatively be embodied as a processing circuit or a logic circuit.

According to a seventeenth aspect, an embodiment of this application provides a communication apparatus, including a processor and a memory. The memory is configured to store one or more computer programs. The one or more computer programs include computer-executable instructions. When the communication apparatus runs, the processor executes the one or more computer programs stored in the memory, to enable the communication apparatus to perform the method according to any one of the first aspect to the twelfth aspect or the possible implementations thereof.

Optionally, the communication apparatus further includes other components, for example, an antenna, an input/output module, and an interface. The components may be hardware, software, or a combination of software and hardware.

According to an eighteenth aspect, an embodiment of this application provides a chip system. The chip system includes a processor and an interface. The processor is configured to invoke instructions from the interface and run the instructions. When the processor executes the instructions, the method according to any one of the first aspect to the twelfth aspect or the possible implementations thereof is implemented.

According to a nineteenth aspect, an embodiment of this application provides a computer-readable storage medium. The computer-readable storage medium is configured to store a computer program or instructions. When the computer program or the instructions are run, the method according to any one of the first aspect to the twelfth aspect or the possible implementations thereof is implemented.

According to a twentieth aspect, an embodiment of this application provides a computer program product including instructions. When the computer program product is run on a computer, the method according to any one of the first aspect to the twelfth aspect or the possible implementations thereof is implemented.

For beneficial effects of any one of the second aspect, the third aspect, the fifth aspect to the twentieth aspect, or the possible implementations thereof, refer to descriptions of beneficial effects of corresponding technical solutions in the first aspect or the fourth aspect. Repeated descriptions are omitted herein.

### BRIEF DESCRIPTION OF DRAWINGS

FIG. 1 is a diagram of a structure of a communication system to which an embodiment of this application is applicable;
FIG. 2 is a diagram of a structure of another communication system to which an embodiment of this application is applicable;
FIG. 3 is a diagram of an application framework of a communication system to which an embodiment of this application is applicable;
FIG. 4 is a diagram of a structure of a communication system according to an embodiment of this application;
FIG. 5 is a diagram of a method for managing a first model;
FIG. 6 is a diagram of a communication method according to an embodiment of this application;
FIG. 7 to FIG. 9 are diagrams of three communication methods according to embodiments of this application;
FIG. 10 is a diagram of another communication method according to an embodiment of this application;
FIG. 11 is a diagram of still another communication method according to an embodiment of this application;
FIG. 12 to FIG. 17 are diagrams of processes of managing N first models according to embodiments of this application;
FIG. 18 is a diagram of yet another communication method according to an embodiment of this application;
FIG. 19 is a diagram of still yet another communication method according to an embodiment of this application;
FIG. 20 is a diagram of a structure of a communication apparatus according to an embodiment of this application;
FIG. 21 is a diagram of a structure of another communication apparatus according to an embodiment of this application; and
FIG. 22 is a diagram of a structure of still another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, a quantity of a noun indicates "a singular noun or a plural noun", namely, "one or more", unless otherwise specified. "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. For example, A/B indicates A or B. "At least one of the following items (pieces)" or a similar expression thereof indicates any combination of the items, including one of the items (pieces) or any combination of a plurality of the items (pieces). For example, at least one of a, b, or c indicates a, b, c, a and b, a and c, b and c, or a, b, and c, where a, b, and c may be in a singular form or a plural form.

It should be understood that, in embodiments of this application, an indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured. In embodiments of this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C. In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in embodiments of this application may be understood similarly, and details are not described herein.

The technical solutions provided in embodiments of this application may be applied to various communication systems (or networks), for example, a fifth-generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixth-generation (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

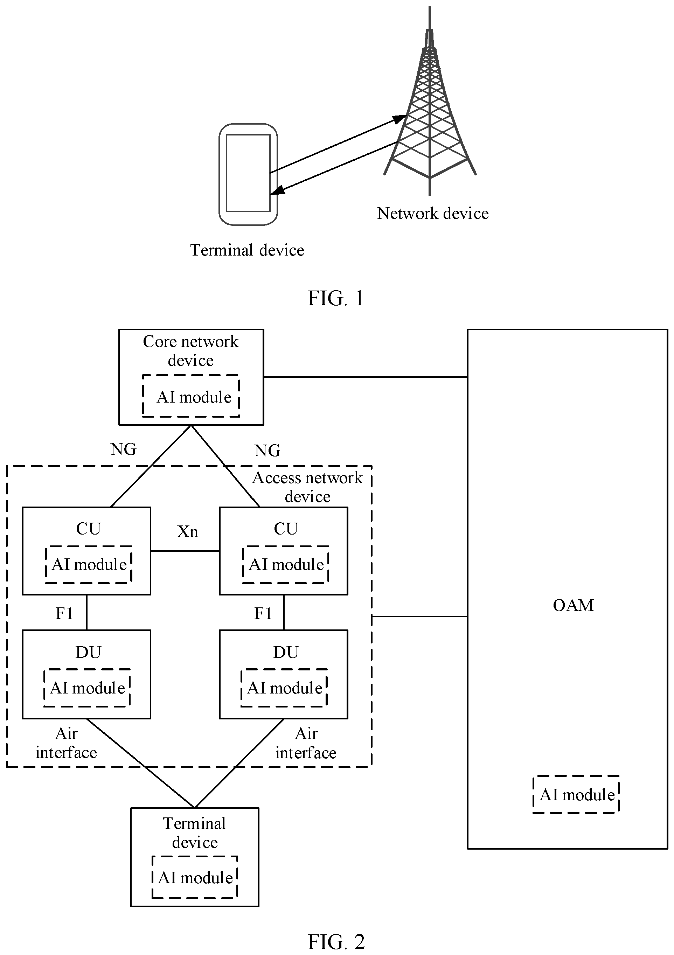

For example, FIG. 1 is a diagram of a structure of a communication system to which an embodiment of this application is applicable. As shown in FIG. 1, the communication system includes at least one terminal device and at least one network device. FIG. 1 shows an example in which both a quantity of terminal devices and a quantity of network devices are 1. However, in practice, the quantity of terminal devices and the quantity of network devices are not limited. Any one of the at least one terminal device exchanges a signal with a part or all of the at least one network device. The signal may include information, signaling, data, or the like. The device may alternatively be replaced with a network element, an entity, a network entity, a communication device, a communication module, a node, a communication node, a communication apparatus, or the like. In embodiments of this application, the device is used as an example for description. It can be understood that the terminal device in embodiments of this application may be replaced with a first network element or a first communication apparatus, the network device may be replaced with a second network element or a second communication apparatus, and the terminal device and the network device perform a corresponding communication method in embodiments of this application.

The following describes possible implementations of the terminal device and the network device by using examples.
1. The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice or data, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, and a terminal device in a future evolved public land mobile network (public land mobile network, PLMN). This is not limited in embodiments of this application.

As an example rather than a limitation, in embodiments of this application, the terminal device may alternatively be a wearable device. The wearable device may also be referred to as a wearable intelligent device, and is a general term for a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without relying on smartphones, for example, smartwatches or smart glasses, and devices that focus only on one type of application function and need to be used in combination with other devices such as smartphones, for example, various smart bands or smart jewelry used for monitoring physical signs.

In embodiments of this application, an apparatus for implementing a function of the terminal device may be a terminal device, or may be an apparatus that can support a terminal device in implementing the function, for example, a chip system, where the apparatus may be mounted in the terminal device or used in combination with the terminal device. In embodiments of this application, the chip system may include a chip, or may include a chip and another discrete component. In embodiments of this application, an example in which the apparatus for implementing the function of the terminal device is a terminal device is merely used for description, and constitutes no limitation on the solutions in embodiments of this application.

2. The network device may be a device for communicating with the terminal device. The network device is, for example, at least one of an access network device, a radio access network device, or a third-party device (for example, a third-party server). For example, the network device may be a base station. The network device in embodiments of this application is, for example, a radio access network (radio access network, RAN) device (or node) that connects the terminal device to a wireless network. The base station may cover any of the following names in a broad sense, or may be replaced with the following names: for example, a NodeB (NodeB), an evolved NodeB (evolved NodeB, eNB), a next-generation NodeB (next-generation NodeB, gNB), a relay station, an access point, a transmission and reception point (transmission and reception point, TRP), a transmission point (transmission point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that performs a function of a base station in D2D, V2X, or M2M communication, a network-side device in a 6G network, a device that performs a function of a base station in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). A specific technology and a specific device form that are used by the network device are not limited in embodiments of this application.

In some deployments, the access network device mentioned in embodiments of this application may be a device including a CU or a DU, or a device including a CU and a DU, or a device including a CU-control plane (central unit-control plane (central unit-control plane, CU-CP)) node, a CU-user plane (central unit-user plane (central unit-user plane, CU-UP)) node, and a DU node. For example, the access network device may include a gNB-CU-CP, a gNB-CU-UP, and a gNB-DU.

In some deployments, a plurality of RAN nodes cooperate to assist the terminal device in implementing radio access, and different RAN nodes each implement a part of functions of the base station. For example, the RAN node may be a CU, a DU, a CU-CP, a CU-UP, or an RU. The CU and the DU may be separately deployed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is another type of interface, in comparison with the CPRI, a part of downlink and/or uplink baseband functions are moved from the DU to the RU for implementation. For example, in downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and in uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, different manners of splitting the DU and the RU correspond to different categories (category, Cat) of eCPRIs, for example, eCPRI Cat A, B, C, D, E, and F.

The eCPRI Cat A is used as an example. For downlink transmission, splitting is performed based on layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed based on RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It can be understood that, for function descriptions of DUs and RUs corresponding to various categories of eCPRIs, reference may be made to the eCPRI protocol. Details are not described herein.

In a possible design, a processing unit for implementing a baseband function in the BBU is referred to as a baseband high (baseband high, BBH) unit, and a processing unit for implementing a baseband function in the RRU, the AAU, or the RRH is referred to as a baseband low (baseband low, BBL) unit.

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus for implementing a function of the network device may be a network device, or may be an apparatus that can support a network device in implementing the function, for example, a chip system, a hardware circuit, a software module, or a combination of a hardware circuit and a software module, where the apparatus may be mounted in the network device or used in combination with the network device. In embodiments of this application, an example in which the apparatus for implementing the function of the network device is a network device is merely used for description, and constitutes no limitation on the solutions in embodiments of this application.

The network device and/or the terminal device may be deployed on land, including being deployed indoors or outdoors, or in a handheld manner or a vehicle-mounted manner; or may be deployed on water; or may be deployed on an airplane, a balloon, and a satellite in the air. Scenarios in which the network device and the terminal device are located are not limited in embodiments of this application. In addition, the terminal device and the network device may be hardware devices; or may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

To support an AI technology in a communication network, an AI node is further introduced into the communication network. Optionally, the AI node may be, for example, an AI network element or an AI module.

The AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with another device in the communication system. For example, the another device may be one or more of the following: a network device, a terminal device, a network element of a core network, and the like.

It can be understood that a quantity of AI nodes is not limited in this application. For example, when there are a plurality of AI nodes, the plurality of AI nodes may be obtained through division based on functions. For example, different AI nodes are responsible for different functions.

It can be further understood that the AI nodes may be independent devices, or may be integrated into a same device to implement different functions, or may be network elements in a hardware device, or may be software functions running on dedicated hardware, or may be virtualized functions instantiated on a platform (for example, a cloud platform). A specific form of the AI node is not limited in this application.

The AI node may be configured to implement a corresponding AI function. A model of the AI module is configured based on different parameters, and the AI node may implement different functions. The model of the AI node may be configured based on one or more of the following parameters: a structure parameter (for example, at least one of the following: a quantity of layers of a neural network, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI node may have one or more models/functions, or one AI node may include one or more models. The model in embodiments of this application may obtain one output through inference, and the output includes one or more parameters. Learning processes, training processes, or inference processes of different models may be deployed on different devices, or may be deployed on a same device. Alternatively, the model may be understood as being configured to implement a specific function or feature, for example, a model or an algorithm related to a specific function or feature. The model includes, for example, an AI model, an ML model, an AI function, or an ML function, which may be simplified as an AI/ML model/function. Optionally, the AI model may also be referred to as an AI function, the ML model may also be referred to as an ML function, and the AI model may include an ML model.

The model may be understood as a specific implementation of a function (for example, the AI function), or may be understood as a feature or a function of the terminal device. The model represents a mapping relationship between an input and an output of the model. The model may be a neural network, a linear regression model, a decision tree model, a support vector machine (support vector machine, SVM), a Bayesian network, a Q-learning model, another machine learning model, or the like. The AI function may include at least one of the following: data collection (collecting training data and/or inference data), data preprocessing, model training (or referred to as model learning), model information publishing (configuring model information), model check (checking a trained model), model inference (performing inference by using the trained model), or inference result publishing. The inference may also be referred to as prediction, use, or determining.

FIG. 2 is a diagram of a possible structure of a communication system. As shown in FIG. 2, devices in the communication system are connected through an interface (for example, NG or Xn) or an air interface. One or more AI modules are deployed on the devices, for example, one or more of the following devices: a core network device, an access network device (for example, a RAN device), a terminal device, and an operation, administration, and maintenance (operation, administration, and maintenance, OAM) device. FIG. 2 shows an example in which one AI module is deployed on one device. However, in practice, a quantity of deployed AI modules is not limited. The AI module is configured to implement a corresponding function. AI modules deployed on any two of the one or more devices may be completely the same, partially the same, or completely different. This is not specifically limited in this embodiment of this application.

The access network device may serve as an independent RAN node, or may include a plurality of RAN nodes, for example, include a CU and a DU. One or more AI modules may also be deployed in the CU and/or the DU. Optionally, the CU may be further split into a CU-CP and a CU-UP. One or more AI modules are deployed in the CU-CP and/or the CU-UP. At least one of the access network device, the core network device, the CU in the access network device, the DU in the access network device, the CU-CP in the access network device, or the CU-UP in the access network device in FIG. 2 may be considered as an example of the network device in FIG. 1.

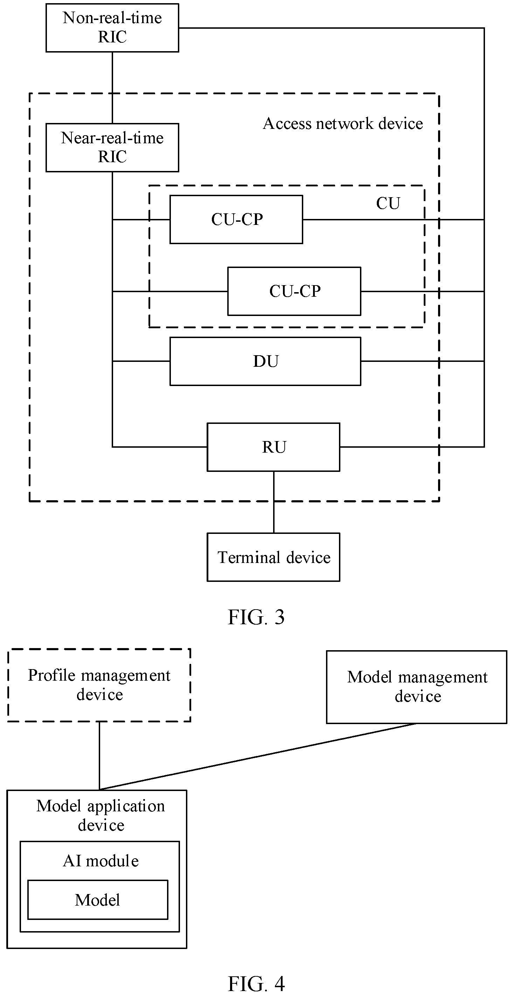

FIG. 3 is a diagram of a possible application framework of a communication system. As shown in FIG. 3, the communication system includes a RAN intelligent controller (RAN intelligent controller, RIC). For example, the RIC may be the AI module shown in FIG. 2, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, delay-insensitive data. A delay of the data may be several seconds. A real-time RIC mainly processes near-real-time information, for example, delay-sensitive data. A delay of the data is tens of milliseconds. Optionally, the near-real-time RIC and the non-real-time RIC each may alternatively be independently deployed as a network element.

The near-real-time RIC is configured to perform model training and inference, for example, is configured to train a model and perform inference by using the model. The near-real-time RIC may obtain network-side information and/or information of a terminal device from a RAN node (for example, a CU, a CU-CP, a CU-UP, a DU, and/or an RU) and/or the terminal device. The information may be used as training data or inference data. Optionally, the near-real-time RIC may deliver an inference result to the RAN node and/or the terminal device. Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train a model and perform inference by using the model. The non-real-time RIC may obtain network-side information and/or terminal-side information from a radio access device (for example, the CU, the CU-CP, the CU-UP, the DU, and/or the RU) and/or the terminal device. The information may be used as training data or inference data, and an inference result may be delivered to the RAN node and/or the terminal. Optionally, the inference result may be exchanged between the CU and the DU and/or between the DU and the RU. For example, the non-real-time RIC delivers the inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on an access network device (for example, the CU or the DU), and the non-real-time RIC is deployed on an OAM device, a cloud server, a core network device, or another network device.

At least one of the access network device, the near-real-time RIC, the non-real-time RIC, the CU in the access network device, the DU in the access network device, the CU-CP in the access network device, or the CU-UP in the access network device in FIG. 3 may be considered as an example of the network device in FIG. 1.

Embodiments of this application are applicable to a model management scenario. FIG. 4 is a diagram of a structure of a communication system to which an embodiment of this application is applicable. Alternatively, FIG. 4 may be considered as a diagram of a scenario according to an embodiment of this application. As shown in FIG. 4, the scenario includes a model management device and a model application device. The model application device may be, for example, one or more of the terminal device (for example, the terminal device in any one of FIG. 1 to FIG. 3), the access network device, the third-party device, the server, or the core network device in the foregoing descriptions. This is not specifically limited in this embodiment of this application. Optionally, the scenario further includes a profile management device, and the profile management device is, for example, a server, an access network device, or a core network device.

The model management device may be, for example, the network device shown in FIG. 1, or at least one of the access network device, the core network device, the CU in the access network device, the DU in the access network device, the CU-CP in the access network device, or the CU-UP in the access network device in FIG. 2, or at least one of the access network device, the near-real-time RIC, the non-real-time RIC, the CU in the access network device, the DU in the access network device, the CU-CP in the access network device, or the CU-UP in the access network device in FIG. 3. A specific implementation form of the model management device is not limited in this embodiment of this application.

One or more AI modules may be deployed on the model application device, and a model may be deployed in the one or more AI modules. The AI module may be the RIC shown in FIG. 3, for example, the near-real-time RIC or the non-real-time RIC. For example, the near-real-time RIC is deployed on a RAN device (for example, a CU or a DU), and the non-real-time RIC is deployed on an OAM device, a cloud server, a core network device, or another network device.

For example, the model management device is a RIC. The RIC may obtain a training dataset (for example, a training dataset from the model application device) from an access network device (for example, a CU, a CU-CP, a CU-UP, a DU, and/or an RU), train a model related to the model application device, and an output of a trained model is obtain through the RIC. An input and an output of a trained model generator may be sent to the model application device through the access network device or directly sent to the model application device as training data in the training data set.

A profile of a model may be preconfigured on the model application device. The profile may be understood as at least one of code, instructions, and data that are needed by the model application device to run or execute the model. Optionally, the model application device may alternatively obtain a profile of a model from the profile management device. In other words, the profile management device may be configured to manage the profile of the model. The model management device may manage a model on the model application device.

FIG. 4 shows an example in which all of a quantity of model management devices, a quantity of model application devices, and a quantity of profile management devices are 1. However, in practice, the quantity of model management devices, the quantity of model application devices, and the quantity of profile management devices are not limited.

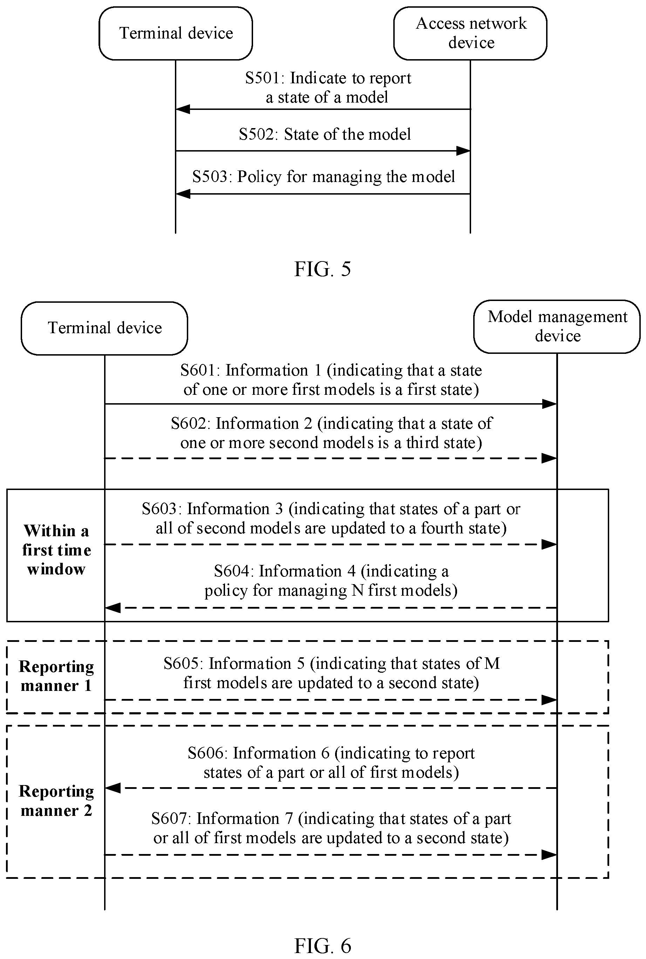

An example in which the model management device is an access network device is used below. With reference to a diagram of model management shown in FIG. 5, the following describes the model management process mentioned in the background. FIG. 5 shows three steps: S501 to S503, which are separately described below.

S501: An access network device indicates a terminal device to report a state of a model.

S502: The terminal device sends the state of the model to the access network device.

S503: The access network device sends a model management policy to the terminal device.

It can be learned that, before indicating the model management policy, the access network device needs to query the state of the model from the terminal device. This leads to frequent interaction between the access network device and the terminal device. In addition, the access network device frequently monitors and manages the model. This increases scheduling (scheduling) load of the access network device, and increases air interface resources needed for monitoring and managing the model.

For example, when the terminal device can flexibly indicate whether a function is applicable (applicable) or inapplicable (inapplicable), frequency of a change between being applicable and being inapplicable that are indicated by the terminal device may affect scheduling of the access network device. Frequent changes may lead to frequent activation/deactivation of the model (or function).

For example, if the terminal device reports an applicable model, after the access network device indicates that the model is activated, the model needs to remain in an applicable state, to suppress a model failure due to a case that the model may change to an inapplicable state after being activated, and avoid a case that the model further needs to be deactivated, switched, or rolled back. If the model may become inapplicable after being activated, model management load of the access network device is also increased. For example, model monitoring resources need to be increased, to continuously monitor the model, and prevent a case that system performance deteriorates because the model becomes inapplicable. This increases scheduling load of the access network device, and also occupies more air interface resources.

In view of this, embodiments of this application provide a communication method. In the communication method, after indicating, to a model management device, that a model (for example, one or more first entities) is supported, a model application device, for example, a terminal device, may keep the state unchanged within a first time window. In other words, the model application device, for example, the terminal device, does not need to send the state of the one or more first entities to the model management device within the first time window. This helps reduce information exchange between the model application device, for example, the terminal device, and the model management device. In addition, before managing the one or more first entities within the first time window, the model management device does not need to indicate the model application device, for example, the terminal device, to report the state of the one or more first entities. This also helps improve efficiency of managing the one or more first entities by the model management device.

In embodiments of this application, an entity includes one or more of a model, a function, or a feature. For example, the entity is the model, or the entity is the function, or the entity is the feature. For example, in embodiments of this application, the first entity includes one or more of a first model, a first function, or a first feature; a second entity includes one or more of a second model, a second function, or a second feature; a third entity includes one or more of a third model, a third function, or a third feature; and a fourth entity includes one or more of a fourth model, a fourth function, or a fourth feature.

For brevity of description, in embodiments of this application, an example in which an entity is a model is used for description. To be specific, the "model" in embodiments of this application may be replaced with the "entity". For example, the "first model" may be replaced with the "first entity", the "second model" may be replaced with the "second entity", the "third model" may be replaced with the "third entity", and the "fourth model" may be replaced with the "fourth entity". The "entity" may be one or more of a model, a function, or a feature.

The following describes the method provided in embodiments of this application with reference to the accompanying drawings. In the accompanying drawings corresponding to embodiments of this application, all steps indicated by dashed lines are optional steps. In addition, the model management device in embodiments of this application may be, for example, the network device shown in FIG. 1, or at least one of the access network device, the core network device, the CU in the access network device, the DU in the access network device, the CU-CP in the access network device, or the CU-UP in the access network device in FIG. 2, or at least one of the access network device, the near-real-time RIC, the non-real-time RIC, the CU in the access network device, the DU in the access network device, the CU-CP in the access network device, or the CU-UP in the access network device in FIG. 3, or the model management device in FIG. 4, or the like. In embodiments of this application, an example in which the model application device is the terminal device is used. The terminal device in embodiments of this application may be, for example, any one of the terminal devices in FIG. 1 to FIG. 4. The network device in embodiments of this application may be, for example, the network device shown in FIG. 1, or at least one of the access network device, the core network device, the CU in the access network device, the DU in the access network device, the CU-CP in the access network device, or the CU-UP in the access network device in FIG. 2, or at least one of the access network device, the near-real-time RIC, the non-real-time RIC, the CU in the access network device, the DU in the access network device, the CU-CP in the access network device, or the CU-UP in the access network device in FIG. 3, or the like. The profile management device in embodiments of this application is, for example, the profile management device in FIG. 4. It should be understood that, if the technical solutions provided in embodiments of this application are applied to another communication system, a name, a function, and/or the like of a device may vary. This is not limited herein.

It can be understood that embodiments of this application may be applied between a model management device and a model application device. The model application device may be one or more of a terminal device, an access network device, a core network device, or a third-party device, for example, a server. For details, refer to the foregoing descriptions of the AI module. The model management device may also be referred to as a model management entity, and may be an access network device, a core network device, or a third-party device, for example, a server, or may be a part, configured to manage a model, of an access network device, a core network device, or a third-party device. This is not limited herein.

Because a model in embodiments of this application may be replaced with an entity, correspondingly, the model application device and the model management device in embodiments of this application may be replaced with an entity application device and an entity management device respectively.

For example, the entity application device may be a model application device, a function application device, or a feature application device, and the entity management device may be a model management device, a function management device, or a feature management device. It can be understood that, in an optional embodiment, the model application device may be (or may be replaced with) a function application device or a feature application device, and the model management device is (or may be replaced with) a function management device or a feature management device.

In the following embodiments, communication between a terminal device and a model management device is used as an example for description. The following embodiments may be applied to another model application device provided that the terminal device is replaced with the another model application device, for example, an access network device, in the following descriptions. To be specific, in the following descriptions, the "terminal device" may be replaced with an entity application device, a model application device, a function application device, or a feature application device, and the "model management device" may be replaced with a function management device, a feature management device, or the like.

FIG. 6 is a diagram of a communication method according to an embodiment of this application. FIG. 6 shows steps S601 to S607, which are separately described below.

S601: A terminal device sends information 1 to a model management device. Correspondingly, the model management device receives the information 1 from the terminal device. The information 1 may also be referred to as first information.

For example, the information 1 may be carried in dedicated information, or may be carried in a radio resource control (radio resource control, RRC) message. The RRC message is specifically, for example, capability (capability) information of the terminal device or user equipment assistance information (UE assistance information, UAI). This is not limited in this embodiment of this application.

The information 1 indicates that a state of one or more first models is a first state. This may be briefly described as that the information 1 indicates the first state. The one or more first models may be a part or all of first models that can be sensed by the terminal device. The first state indicates that the terminal device supports use of (or is capable of executing, or supports running of, or is capable of running) the one or more first models. Alternatively, this may be described as that the one or more first models are executable, or may be described as that the one or more first models are in an executable state. It can be further understood that the terminal device is capable of executing or running the one or more first models, or the terminal device meets a condition for executing or running the one or more first models.

For example, the first state indicates that the terminal device supports use of the one or more first models, and includes one of the following state A1 to state A5. The following describes states indicated by the state A1 to the state A5.

State A1: The terminal device has a capability of executing the one or more first models. In this case, the first state may also be referred to as a supported state (supported state), or supported (supported) for short.

State A2: The terminal device has locally obtained/stored/loaded the one or more first models, or is capable of loading the one or more first models from another device. In this case, the first state may also be referred to as an available state (available state), or available (available) for short.

The state A2 may be understood as follows: The terminal device has locally obtained/stored/loaded a profile of the one or more first models, or is capable of loading a profile of the one or more first models from another device, to execute the one or more first models.

State A3: The terminal device is ready to perform inference by using the one or more first models. In this case, the first state may be referred to as an applicable state (applicable state), or applicable (applicable) for short.

Optionally, the terminal device meeting the condition for executing or running the one or more first models and/or the model management device meeting a condition for executing or running the one or more first models and the terminal device has locally obtained/stored/loaded the one or more first models may be considered as that the terminal device is ready to perform inference by using the one or more first models.

State A4: The terminal device has a configuration of the model management device for executing or running the one or more first models. In this case, the state A4 may be referred to as a configured state (configured state). The configuration of the model management device is configured by the model management device for the terminal device, and is used to subsequently enable/activate/indicate the UE to use/run/execute the model. To be specific, the configuration is a configuration related to use of the model, for example, a configuration related to an input and/or an output of the model. For example, if the input of the model is a reference signal, the configuration may be a resource of the reference signal. The configuration includes, for example, an RRC configuration, or may be a MAC configuration or a downlink control information (downlink control information, DCI) configuration. The configuration is specifically, for example, a transmission configuration indicator (transmission configuration indicator, TCI) state or a secondary cell group (secondary cell group, SCG).

State A5: The terminal device has activated and performed inference by using the one or more first models. In this case, the state A5 may be referred to as an activated state (activated state), or activated (activated) for short.

The following describes a manner of determining, by the terminal device, that the one or more first models are supported. It can be understood that one of the following manners may be used independently, or a plurality of manners may be used in combination.

B1: If determining that a profile of at least one of one or more first models is loaded, the terminal device determines that the at least one first model is supported. The at least one first model belongs to the one or more first models.

In B1, a delay in activating one of the at least one first model by the terminal device (which may be referred to as an activation delay of one first model for short) may be denoted as t₀. A delay in activating one first model by the terminal device may be understood as duration from a current moment to a moment at which the terminal device runs or executes the first model.

It should be understood that values of first delays corresponding to any two of the at least one first model may be the same or different. This is not specifically limited in this embodiment of this application.

B2: The terminal device has not locally loaded a profile of at least one of the one or more first models, but the terminal device may obtain a profile of at least one model from a profile management device.

In B2, a delay in activating one of the at least one first model by the terminal device may be denoted as *t*₀ *+ t'. t'* may be duration needed by the terminal device to obtain a profile of one first model from the profile management device.

It should be understood that values of second delays corresponding to any two of the at least one first model may be the same or different. This is not specifically limited in this embodiment of this application.

B3: The first state is the state A1.

In this case, the terminal device determines whether the terminal device has a capability of executing the one or more first models. If the terminal device has a capability of executing the one or more first models, the terminal device supports the one or more first models. If the terminal device does not have a capability of executing the one or more first models, the terminal device does not support the one or more first models.

B4: The first state is the state A2.

In this case, if the terminal device determines that a profile of at least one of the one or more first models is loaded, in other words, at least one of the one or more first models is loaded, the terminal device determines that the at least one first model is supported. The at least one first model belongs to the one or more first models. If the terminal device determines that a profile of at least one of the one or more first models is not locally loaded, the terminal device determines that the one or more first models are not supported.

B5: The first state is the state A2.

In this case, the terminal device has not locally loaded a profile of at least one of the one or more first models, in other words, has not locally loaded at least one of the one or more first models, but the terminal device may obtain a profile of at least one model from a profile management device. If the terminal device cannot obtain a profile of at least one first model from the profile management device, the terminal device determines that the one or more first models are not supported.

In B5, a delay in activating one of the at least one first model by the terminal device may be denoted as *t*₀ *+ t'. t'* may be duration needed by the terminal device to obtain a profile of one first model from the profile management device.

B6: The first state is the state A3.

In a possible implementation, the terminal device determines whether the terminal device has locally loaded the one or more first models, and whether the terminal device meets the condition for executing or running the one or more first models.

The terminal device having locally loaded the one or more first models and the terminal device meeting the condition for executing or running the one or more first models may be considered as that the terminal device is ready to perform inference by using the one or more first models, in other words, supports the one or more first models.

If the terminal device does not meet the condition for executing or running the one or more first models, the terminal device determines that the one or more first models are not supported. Alternatively, if the terminal device has not locally loaded the one or more first models, the terminal device determines that the one or more first models are not supported. Alternatively, if the terminal device does not meet the condition for executing or running the one or more first models and the terminal device has not locally loaded the one or more first models, the terminal device determines that the one or more first models are not supported.

In another possible implementation, the terminal device determines whether the terminal device has locally loaded the one or more first models, and whether the model management device meets the condition for executing or running the one or more first models.

The terminal device having locally loaded the one or more first models and the model management device meeting the condition for executing or running the one or more first models may be considered as that the terminal device is ready to perform inference by using the one or more first models, in other words, supports the one or more first models.

If the model management device does not meet the condition for executing or running the one or more first models, the terminal device determines that the one or more first models are not supported. Alternatively, if the terminal device has not locally loaded the one or more first models, the terminal device determines that the one or more first models are not supported. If the model management device does not meet the condition for executing or running the one or more first models and the terminal device has not locally loaded the one or more first models, the terminal device determines that the one or more first models are not supported.

In still another possible implementation, the terminal device determines whether the terminal device has locally loaded the one or more first models, whether the model management device meets the condition for executing or running the one or more first models, and whether the terminal device meets the condition for executing or running the one or more first models.

The terminal device having locally loaded the one or more first models, the model management device meeting the condition for executing or running the one or more first models, and the terminal device meeting the condition for executing or running the one or more first models may be considered as that the terminal device is ready to perform inference by using the one or more first models, that is, supports the one or more first models.

If the terminal device has not locally loaded the one or more first models, the terminal device determines that the one or more first models are not supported. Alternatively, if the model management device does not meet the condition for executing or running the one or more first models, the terminal device determines that the one or more first models are not supported. If the model management device does not meet the condition for executing or running the one or more first models and the terminal device has not locally loaded the one or more first models, the terminal device determines that the one or more first models are not supported. If the terminal device does not meet the condition for executing or running the one or more first models, the terminal device determines that the one or more first models are not supported. Alternatively, if the terminal device does not meet the condition for executing or running the one or more first models and the terminal device has not locally loaded the one or more first models, the terminal device determines that the one or more first models are not supported. Alternatively, if the terminal device does not meet the condition for executing or running the one or more first models, the model management device does not meet the condition for executing or running the one or more first models, and the terminal device has not locally loaded the one or more first models, the terminal device determines that the one or more first models are not supported.

B7: The first state is the state A4.

The terminal device determines whether a configuration of the one or more first models is obtained from the model management device. If the configuration is obtained, the terminal device determines that the one or more first models are supported. If the configuration is not obtained, the terminal device determines that the one or more first models are not supported.

B8: The first state is the state A5.

The terminal device determines whether the terminal device has activated use of the one or more first models. If the terminal device has activated use of the one or more first models, the terminal device supports the one or more first models. If the terminal device has not activated use of the one or more first models, the terminal device does not support the one or more first models.

Alternatively, the model management device configures an activated model for the terminal device. If the activated model includes the one or more first models, the one or more first models are supported. If the activated model does not include the one or more first models, the one or more first models are not supported. In this case, the activated model also belongs to the foregoing configuration of the state A4.

For example, the model management device configures 10 models and indicates the terminal device to activate five of the 10 models. The five models may be considered as a configuration of the model management device for the terminal device, or the five models may be considered as being activated by the terminal device. In this case, a model configured by the model management device includes a model activated by the terminal device, in other words, an activated model belongs to a configured model.

The one or more first models may be used to implement at least one function (or referred to as a feature) in the following C1 to C5, which are separately described below.

C1: Predict channel state information (channel state information, CSI) (this may alternatively be described as inferring CSI or determining CSI).

For example, the one or more first models include a model 1 and a model 2, the model 1 may be used to predict CSI in a case 1, and the model 2 may be used for predicting AI-CSI in a case 2. The case 1 and the case 2 indicate, for example, different periodicities at which the terminal device reports CSI.

Optionally, duration of a periodicity at which the terminal device reports CSI in the case 1 is different from, for example, less than, duration of a periodicity at which the terminal device reports CSI in the case 2. The periodicity at which the terminal device reports the CSI in the case 1 is, for example, 20 milliseconds (ms). The periodicity at which the terminal device reports the CSI in the case 2 is, for example, 40 ms. Alternatively, a value range of a moving (or movement) speed of the terminal device in the case 1 is different from a value range of a moving speed of the terminal device in the case 2. For example, the case 1 corresponds to a medium-speed scenario, for example, a value range of a moving speed of the terminal device is 60-120 km/h; and the case 2 corresponds to a high-speed scenario, for example, a moving speed of the terminal device is 120-300 km/h.

C2: Predict a beam (this may alternatively be described as inferring a beam or determining a beam). The beam includes a transmit beam, a receive beam, and/or the like of the terminal device.

C3: Predict a channel type (this may alternatively be described as inferring a channel type or determining a channel type).

The channel type may include, for example, line of sight (line of sight, LOS) or non-line-of-sight (non-line-of-sight, NLOS). The line of sight indicates that no obstacle affecting signal transmission exists between two devices (for example, the terminal device and a network device, or the terminal device and the model management device). The non-line-of-sight indicates that an obstacle affecting signal transmission exists between two devices (for example, the terminal device and the network device, or the terminal device and the model management device).

C4: Compress CSI.

For example, the one or more first models include an AI model 3 and an AI model 4, the AI model 3 is used to compress CSI with a rank (RANK) of 1, and the AI model 4 is used to compress CSI with a rank of 4.

Certainly, C1 to C4 are merely examples of functions that may be implemented by the one or more first models. In practice, with evolution of a standard, the one or more first models may have more functions. This is not limited in this embodiment of this application.

C5: Perform positioning, which may be used to determine a location of the terminal device.

A model that can be sensed by the terminal device may not be limited to the one or more first models, and may further include one or more second models. A function implemented by any one of the one or more second models may be the same as a function implemented by one of the one or more first models, or a function implemented by at least one of the one or more second models may be different from a function implemented by any one of the one or more first models. This is not limited in this embodiment of this application.

Optionally, the terminal device may send a state of a model to the model management device by using a function (or a feature) as a granularity. In this case, the one or more first models and the one or more second models each may be used to implement one function. Alternatively, the terminal device may send a state of a model to the model management device by using the terminal device as a granularity. In this case, the one or more first models and the one or more second models may be all models that can be sensed by the terminal device.

After content of the first state and the one or more first models is described, the following describes a manner of indicating the first state by the information 1. The manner of indicating the first state by the information 1 may include the following first possible implementation and second possible implementation, which are separately described below.

In the first possible implementation, the information 1 includes first delay information, and the first delay information indicates the first state.

The first delay information indicates one or more delays related to K first models of the one or more first models. K is a positive integer. The K first models may be a part or all of the one or more first models. The first delay information may include at least one of D1 to D7.

D1: First activation delay information

The first activation delay information indicates K1 first activation delays. The K1 first activation delays correspond to the K1 first models, and one first activation delay corresponds to one of the K1 first models. One of the K1 first activation delays indicates a delay in activating one of the K1 first models. A first activation delay corresponding to a first model may be understood as duration from a current moment to a moment at which the terminal device executes (or runs) the first model. K1 is a positive integer.

The first activation delay information may indicate the K1 first activation delays in a quantized manner. For example, the first activation delay information may indicate the K1 first activation delays by using a value of the activation delay information. Alternatively, the first activation delay information may indicate indexes (or identifiers) corresponding to the K1 first activation delays, to indicate the K1 first activation delays. Alternatively, the first activation delay information may indicate indexes (or identifiers) corresponding to value ranges to which the K1 first activation delays belong.

For example, both the terminal device and the model management device prestore value ranges of a plurality of first activation delays and an identifier corresponding to each value range, and the terminal device may report, to the model management device, an identifier of a value range corresponding to each of the K1 first activation delays. This can reduce reporting overheads, and implement a simple indication.

D2: First inference delay information

The first inference delay information indicates K2 first inference delays. For a manner of indicating the K2 first inference delays, refer to the foregoing manner of indicating the K1 first activation delays. Details are not described herein again. The K2 first inference delays correspond to the K2 first models, and one first inference delay corresponds to one of the K2 first models. One of the K2 first inference delays indicates a delay in performing inference by using one of the K2 first models. An inference delay corresponding to a first model may be understood as duration needed by the terminal device to implement an inference process by using the first model, for example, specifically, duration from a moment at which the first model receives an input to a moment at which the first model obtains an output. K2 is a positive integer.

Optionally, a first inference delay corresponding to a first model may be related to complexity of the first model and/or a hardware capability of the terminal device.

For example, when the hardware capability of the terminal device remains the same, a more complex first model may have a longer first inference delay. For another example, for a same first model, if the terminal device corresponds to different chips or even different chip versions, because the terminal device compiles the first model in different manners, an inference delay of the first model may vary.

D3: First rollback delay information

The first rollback delay information indicates K3 first rollback delays. For a manner of indicating the K3 first rollback delays, refer to the foregoing manner of indicating the K3 first activation delays. Details are not described herein again. The K3 first rollback delays correspond to K3 first models, and one first rollback delay corresponds to one of the K3 first models. One of the K3 first rollback delays indicates a delay in rolling back one of the K3 first models to a time when the first model is not used to implement the first function, and one first model can implement the first function. K3 is a positive integer.

For example, the one or more first models include a first model (for example, including an AI model 1 and an AI model 2) used to compress CSI and a plurality of rank (RANK) numbers. That is, the first function includes compressed CSI. Implementing the first function without using a model may be understood as not using a model to compress CSI (which may also be referred to as a conventional method for compressing CSI).

The AI model 1 may occupy a same part of hardware resources as the CSI compression without using the model, and the AI model 2 occupies completely different hardware resources from the CSI compression without using the model. In this case, duration needed for the AI model 1 to roll back to the CSI compression without using the model (that is, a rollback delay corresponding to the AI model 1) may be longer than a first rollback delay corresponding to the AI model 2.

D4: First monitoring delay information

The first monitoring delay information indicates the K4 first monitoring delays. For a manner of indicating the K4 first monitoring delays, refer to the foregoing manner of indicating the K4 first activation delays. Details are not described herein again. The K4 first monitoring delays correspond to the K4 first models, and one first monitoring delay corresponds to one of the K4 first models. One of the K4 first monitoring delays indicates to monitor a delay of one of the K4 first models. A monitoring delay of a first model may be understood as a delay needed for monitoring simulated implementation of an inference process of the first model. Optionally, the terminal device may use a proxy (proxy) model to obtain the first monitoring delays of the K4 first models. K4 is a positive integer.

Optionally, a first monitoring delay of a first model may be related to a complexity degree of the first model. For example, a higher complexity degree of the first model indicates a longer first monitoring delay of the first model.

For example, the one or more first models include an AI model 1 and an AI model 2, the AI model 1 is used to compress CSI, and the AI model 2 is used to decompress CSI. The terminal device may simulate an inference process of the AI model 1 and an inference process of the AI model 2 by using the proxy model, to separately obtain a first monitoring delay corresponding to the AI model 1 and a first monitoring delay of the AI model 2. The complexity of the AI model 2 is higher than that of the AI model 1. Therefore, the first monitoring delay corresponding to the AI model 1 is less than the first monitoring delay of the AI model 2.

D5: First switching delay information

The first switching delay information indicates K5 first switching delays. For a manner of indicating the K5 first switching delays, refer to the foregoing manner of indicating the K5 activation delays. Details are not described herein again. The K5 first switching delays correspond to the K5 first models, and one first switching delay corresponds to one of the K5 first models. One of the K5 first switching delays indicates a delay in switching one of the K5 first models to the third model. The third model may belong to K5 first models, or may belong to K5 second models. K5 is a positive integer.

For example, the one or more models include an AI model 1 and an AI model 2. The

AI model 1 and the AI model 2 share some hardware resources, but the hardware resources of the AI model 1 and the AI model 3 are completely different. In this case, a first switching delay needed for switching from the AI model 1 to the AI model 2 may be longer than a first switching delay needed for switching from the AI model 1 to the AI model 3.

D6: Second switching delay information

The second switching delay information indicates K6 second switching delays. For a manner of indicating the K6 second switching delays, refer to the foregoing manner of indicating the K6 activation delays. Details are not described herein again. The K6 second switching delays correspond to the K6 first models, and one second switching delay corresponds to one of the K6 first models. One of the K6 second switching delays indicates a delay in switching the fourth model to one of the K6 first models. The fourth model may belong to the K6 first models, or may belong to the K6 second models. The fourth model may be the same as or different from the foregoing third model. K6 is a positive integer.

D7: First deactivation delay information

The first deactivation delay information indicates K7 first deactivation delays. For a manner of indicating the K7 first deactivation delays, refer to the foregoing manner of indicating the K7 first activation delays. Details are not described herein again. The K7 first deactivation delays correspond to the K7 first models, and one first deactivation delay corresponds to one of the K7 first models. One of the K7 first deactivation delays indicates a delay in deactivating one of the K7 first models. A first activation delay of a first model may be duration required after the terminal device reports that the first model is deactivated until the terminal device stops using the first model. K7 is a positive integer.

For example, in an active state of a first model, the terminal device instructs the network device to deactivate the first model. After a time interval T1, if the terminal device does not receive a deactivation indication from the network device, the terminal device may also perform deactivation processing on the first model. The time interval T1 herein may be considered as the first deactivation delay corresponding to the first model.

Optionally, the one or more delays indicated by the first delay information include at least one of the first activation delay, the first inference delay, the first rollback delay, the first monitoring delay, the first switching delay, the second switching delay, and the first deactivation delay.

Optionally, the first delay information may indicate a value corresponding to the one or more first models at each of the one or more delays. Alternatively, the first delay information may indicate each of a part or all of first models and one or more delays corresponding to the first model. An example in which the one or more first models include a model A, a model B, and a model C is used below to describe specific content of the first delay information.

For example, the first delay information includes first inference delay information, first activation delay information, first rollback delay information, first switching delay information, and first deactivation delay information. The first inference delay information, the first activation delay information, the first rollback delay information, the first switching delay information, and the first deactivation delay information may be respectively represented as follows:
1. The inference delay information may be expressed as { t_{inference,A}, t_{inference,B}, t_{inference,C} .. t_{inference,A}, t_{inference,B}, and t_{inference,C} respectively represent inference delays corresponding to the model A, the model B, and the model C.
2. The monitoring delay information may be expressed as: { t_{proxy,A}, t_{proxy,B}, t_{proxy,C} .. t_{proxy,A}, t_{proxy,B}, and t_{proxy,C} may respectively represent monitoring delays corresponding to the model A, the model B, and the model C.
3. The activation delay information may be expressed as: {t_{activation,A}, t_{activation,B}, t_{activation,C} .. t_{activation,A}, t_{activation,B}, and t_{activation,C} represent activation delays corresponding to the model A, the model B, and the model C respectively.
4. The rollback delay may be expressed as: {t_{fallback,A}, t_{fallback,B}, t_{fallback,C} .. t_{fallback,A}, t_{fallback,B}, and t_{fallback,C} respectively represent rollback delays corresponding to the model A, the model B, and the model C.
5. The deactivation delay information may be expressed as: { t_{deact,A}, t_{deact,B}, t_{deact,C}.. t_{deact,A}, t_{deact,B}, and t_{deact,C} respectively represent deactivation delays corresponding to the model A, the model B, and the model C.
6. The first switching delay information may be expressed as: {t_{switch,A→B}, t_{switch,A→C}, t_{switch,B→A}, t_{switch,B→C}, t_{switch,C→A}..

t_{switch,A→B}, t_{switch,A→C}, t_{switch,B→A} t_{switch,B→C}, t_{switch,C→A} indicate the delay in switching from model A to model B, from model A to model C, from model B to model A, from model B to model C, and from model C to model A.

Alternatively, the first delay information includes: {t_{inference,A}, t_{proxy,A}, t_{activation,A}, t_{fallback,A}, t_{deact,A}, t_{switch,A→B}, t_{switch,A→C}}, {t_{inference,B}, t_{proxy,B}, t_{activation,B}, t_{fallback,B}, t_{deact,B}, t_{switch,B→A}, t_{switch,B→C}}, and { t_{inference,C}, t_{proxy,C}, t_{activation,C}, t_{fallback,C}, t_{deact,C}, t_{switch,C→B}, t_{switch,C→A}}.

After the content of the first delay information is described, the following describes a manner of indicating the first state by the first delay information.

For example, a part or all of the first delay information may indicate the first state. For example, a part or all of a plurality of bits included in the first delay information indicate the first state, or at least one of the information that is shown in D1 to D7 and that is included in the first delay information indicates the first state. E1 to E4 are used below as an example for description.

E1: The first activation delay information in the first delay information indicates first states of P first models of the K1 first models, where P is a positive integer. In other words, the first activation delay information indicates the K1 first activation delays, and further indicates that the states of the P first models are the first state.

The P first models may be a part or all of the one or more first models. For example, when values of a part or all of the K1 first activation delays (for example, less than or equal to P first activation delays) are within a first value range, the states of the P first models are the first state. The first value range may be preconfigured or predefined on the terminal device and the model management device, or may be determined by the terminal device and the model management device through negotiation.

An example in which the P first models include a first model A, a first model B, and a first model C is used below to describe a manner of indicating a state of a first model by an activation delay.

### 1. First model A

For example, a first activation delay corresponding to the first model A is *t_{A},* indicating that the terminal device has locally loaded a profile of the first model A, that is, indicating that the terminal device supports use of the first model A.

Alternatively, a first activation delay corresponding to the first model A is *t_{A} +* Δ*_{A}*, indicating that the terminal device has not locally loaded a profile of the first model A but may load the profile of the first model A from the profile management device, that is, indicating that the terminal device supports use of the first model A.

Alternatively, a first activation delay corresponding to the first model A is +∞, indicating that the terminal device has not locally loaded a profile of the first model A and cannot load the profile of the first model A from the profile management device at a current moment either, that is, indicating that the terminal device does not support use of the first model A. Not supporting use may also be referred to as being in a non-executable state.

### 2. First model B

For example, a first activation delay corresponding to the first model B is *t_{B}*, indicating that the terminal device has locally loaded a profile of the first model B, that is, indicating that the terminal device supports use of the first model B.

Alternatively, a first activation delay corresponding to the first model B is *t_{B} +* Δ*_{B},* indicating that the terminal device has not locally loaded a profile of the first model B but may load the profile of the first model B from the profile management device, that is, indicating that the terminal device supports use of the first model B.

Alternatively, a first activation delay corresponding to the first model B is +∞, indicating that the terminal device has not locally loaded a profile of the first model B and cannot load the profile of the first model B from the profile management device at a current moment either, that is, indicating that the terminal device does not support use of the first model B.

### 3. First model C

For example, a first activation delay corresponding to the first model C is *t_{C}*, indicating that the terminal device has locally loaded a profile of the first model C, that is, indicating that the terminal device supports the first model C.

Alternatively, a first activation delay corresponding to the first model C is *t_{C}* + Δ*_{C}*, indicating that the terminal device has not locally loaded a profile of the first model C but may load the profile of the first model C from the profile management device, that is, indicating that the terminal device supports use of the first model C.

Alternatively, a first activation delay corresponding to the first model C is +∞, indicating that the terminal device has not locally loaded a profile of the first model C and cannot load the profile of the first model C from the profile management device at a current moment either, that is, indicating that the terminal device does not support use of the first model C.

E2: The first switching delay information in the first delay information indicates first states of Q first models of the K first models, where Q is a positive integer. In other words, the first switching delay information indicates K5 first switching delays, and further indicates that the states of the Q first models are the first state.

The Q first models may be a part or all of one or more first models. For example, when values of a part or all of the K5 first switching delays (for example, less than or equal to Q first switching delays) are in the second value range, the state of the Q first models is the first state. The second value range may be preconfigured or predefined in the terminal device and the model management device, or may be determined by the terminal device and the model management device through negotiation.

The following uses an example in which the Q first models include the first model A and the third model includes the first model B to describe a manner in which the first switching delay indicates the state of the first model.

For example, the first switching delay in switching the first model A to the first model B is t_{A→B}, indicating that the UE has locally loaded the first model A and the first model B, and that the terminal device supports use of the first model A and the first model B.

Alternatively, if the first switching delay in switching the first model A to the first model B is *t*_{*A*→}*_{B}+*Δ*_{B},* it indicates that the terminal device has locally loaded the first model A, and the terminal device does not load the first model A, but can load the first model B from the profile management device, it indicates that the terminal device supports use of the first model A and the first model B.

Alternatively, if the first switching delay in switching the first model A to the first model B is +∞, it indicates that the terminal device may have loaded the first model A, but the first model A is not loaded locally, and the first model B cannot be loaded from the profile management device at a current moment, it indicates that the terminal device supports the first model A, but does not support use of the first model B.

E3: The second switching delay information in the first delay information indicates that states of R first models of the K6 first models are the first state, where R is a positive integer. In other words, the second switching delay information indicates K6 second switching delays, and further indicates that states of the R first models are the first state.

The R first models may be a part or all of the K6 first models. For example, when values of a part or all of the K6 first switching delays (for example, less than or equal to the R first switching delays) are in the third value range, the states of the R first models are the first state. The third value range may be preconfigured or predefined in the terminal device and the model management device, or may be determined by the terminal device and the model management device through negotiation.

The following uses an example in which the R first models include the first model A and the fourth model includes the first model B to describe a manner in which the first switching delay indicates the state of the first model.

For example, the second switching delay in switching from the first model B to the first model A is *t*_{*B*→}*_{A},* indicating that the UE has locally loaded the first model A and the first model B, that is, indicating that the terminal device supports use of the first model A and the first model B.

Alternatively, if the second switching delay in switching the first model B to the first model A is *t*_{*B*→}*_{A}+*Δ*_{B},* it indicates that the terminal device has locally loaded the first model B, and the terminal device does not load the first model B, but can load the first model A from the profile management device, it indicates that the terminal device supports use of the first model A and the first model B.

Alternatively, if the second switching delay in switching the first model B to the first model A is +∞, it indicates that the terminal device may have loaded the first model B, but the first model B is not loaded locally, and the first model A cannot be loaded from the profile management device at a current moment, it indicates that the terminal device supports the first model B, but does not support use of the first model A.

E4: The first inference delay information indicates that states of L first models in the K2 first models are the first state, where L is a positive integer.

For example, when values of a part or all of the K2 first inference delays (for example, less than or equal to the L inference delays) are within a fourth value range, the states of the L first models are the first state. The fourth value range may be preconfigured or predefined in the terminal device and the model management device, or may be determined by the terminal device and the model management device through negotiation.

The following uses an example in which the L first models include the model A.

For example, if the first inference delay of the model A is t_{A}, it indicates that the terminal device has locally loaded the profile of the model A, that is, it indicates that the terminal device supports use of the model A, that is, the model A is in an executable state.

Alternatively, if the activation delay of the model A is +∞, it indicates that the terminal device does not locally load the profile of the model A and cannot load the profile of the model A from the profile management device at a current moment. In other words, it indicates that the terminal device does not support use of the model A, that is, the model A is in a non-executable state.

It should be understood that, when the first delay information includes at least two of the first activation delay information, the first switching delay information, the second switching delay information, and the first inference delay information, each of the at least two pieces of information may indicate first states of a part or all of the K first models.

For example, the first delay information includes the first activation delay information, the first switching delay information, the second switching delay information, and the first inference delay information, the first activation delay information may indicate that the states of the P first models are the first state, the first switching delay information indicates that the states of the Q first models are the first state, the second switching delay information indicates that the states of the R first models are the first state, and the first inference delay information indicates that the L first models are the first state. In this case, the one or more first models may include the P first models, the Q first models, the R first models, and the L first models.

Optionally, the information 1 further includes identifiers of a part or all of first models. The identifiers of the part or all of first models indicate the K first models. The identifiers of the part or all of first models may be preconfigured or predefined on the terminal device and the model management device, or may be determined by the terminal device and the model management device through negotiation. In this case, the terminal device can flexibly indicate one or more delays related to each of the K first models.

Alternatively, the information 1 further includes configuration information related to a part or all of first models. The configuration information related to the part or all of first models also indicates the part or all of first models.

The configuration information related to the part or all of first models may include an identifier (or an index) of a configuration related to the part or all of first models. The configuration related to the part or all of first models includes one or more of the following: an input configuration (for example, a resource) of the part or all of first models, an output configuration of the part or all of first models (for example, a resource for reporting outputs of the part or all of first models), a function implemented by the part or all of first models and a scenario to which the part or all of first models are applicable, information used by the terminal device to support a function related to the part or all of first models, and the like. The configuration related to the part or all of first models may be bound to the part or all of first models.

For example, the part or all of first models include an AI model 1 for compressing CSI with a rank of 1. In this case, the terminal device may indicate, to the network device in the information 1, an index of the CSI with a rank of 1 (this is considered as an example of configuration information corresponding to an input of the AI model 1). This is equivalent to indicating the AI model 1. Alternatively, the terminal device may indicate, in the information 1, that the terminal device supports compression of the CSI with a rank of 1. This is equivalent to indicating the AI model 1.

In a second possible implementation, the information 1 includes a plurality of bits, and every s bits of the plurality of bits indicate that a state of one of the one or more first models is the first state, where s is a positive integer.

For example, the terminal device indicates the first state in a form of a bitmap (bitmap). A position in the bitmap indicates the one or more first models, and a value of a bit in the bitmap indicates a state of each of the one or more first models. This manner is applicable to a case in which the terminal device and the model management device can predetermine a first model indicated by each position in the bitmap.

For example, the one or more first models include a first model 1, a first model 2, a first model 3, and a first model 4; a first bit to a fourth bit in the bitmap correspond to a state of the first model 1, a state of the first model 2, a state of the first model 3, and a state of the first model 4 respectively; and a value of a bit being 1 indicates that the terminal device can support a model, and a value of a bit being 0 indicates that the terminal device does not support a model. A value of the information 1 being "1111" indicates that the terminal device supports the first model 1, the first model 2, the first model 3, and the first model 4.

Optionally, the information 1 further includes an identifier of each of the one or more first models, or includes configuration information related to each of the one or more first models. The configuration information related to each first model may indicate one or more of the following: a configuration needed for using the first model, a configuration needed for reporting an output of the first model, a configuration needed for an input of the first model, a scenario to which the first model is applicable, a parameter bound to or associated with the first model, or the like. This is not specifically limited in this embodiment of this application.

In a third possible implementation, the information 1 includes an identifier of the one or more models, and the identifier of the one or more first models indicates that a state of the one or more first models is the first state.

In this embodiment of this application, the first state is valid within a first time window. This may alternatively be described as that the terminal device keeps the state of the one or more first models being the first state within the first time window. A start moment (or a starting moment) of the first time window is, for example, a moment at which the terminal device sends the information 1 to the model management device, or a moment at which the model management device receives the information 1.

A length of the first time window may be preconfigured or predefined on the terminal device and the model management device, or may be determined by the terminal device and the model management device through negotiation, or may be autonomously determined by the terminal device. When the first time window is autonomously determined by the terminal device, the terminal device may send second indication information to the model management device, where the second indication information indicates the first time window. For example, the second indication information indicates at least one of the length, a start position, and an end position of the first time window. When the second indication information indicates only one of the length, the start position, and the end position, the other two of the length, the start position, and the end position may be defined by using a protocol. Alternatively, the terminal device receives third indication information from the model management device, where the third indication information indicates the first time window. For example, the third indication information indicates at least one of the length, a start position, and an end position of the first time window. When the third indication information indicates only one of the length, the start position, and the end position, the other two of the length, the start position, and the end position may be defined by using a protocol.

Optionally, the second indication information may explicitly or implicitly indicate the first time window. For example, the second indication information is directly and explicitly indicated by a value determined through calculation.

For example, when a value of the first time window has a special numeric value, for example, 0 or ∞, the special numeric value may indicate the first time window (or the length of the first time window) in a predefined manner, for example, by using a special field in the second indication information. Alternatively, when a value of the first time window being less than a preset threshold indicates that the length of the first time window is excessively small, the first time window may be indicated by using a default field in the second indication information. Alternatively, the second indication information may indicate the first time window by using a value range of the first time window. For example, the value range may be 0 to 0.1, 0.1 to 0.01, 0.01 to 0.001, or less than 0.001. Alternatively, the second indication information may indicate an offset of the first time window relative to a preset time window, to indicate the first time window.

Alternatively, the terminal device receives third indication information from the model management device, where the third indication information indicates the first time window. For example, the third indication information indicates at least one of the length, a start position, and an end position of the first time window. When the third indication information indicates only one of the length, the start position, and the end position, the other two of the length, the start position, and the end position may be defined by using a protocol. For a manner of indicating the first time window by the third indication information, refer to the content of indicating the first time window by the second indication information. Details are not described herein again.

Optionally, the terminal device reports the first information in response to the second indication information or the third indication information. Optionally, the first information includes the identifier of the one or more first models, and the identifier of the one or more first models indicates to keep the state of the one or more first models being the first state within the first time window.

Optionally, the second indication information or the third indication information and the first information may be carried in same signaling. In this case, the first information may indicate, by indicating the first time window, that the state of the one or more first models is the first state. Alternatively, the second indication information or the third indication information and the first information may be carried in different information. This is not specifically limited.

Optionally, when the first time window is autonomously determined by the terminal device and the terminal device reports the first time window to the model management device, if a value of the second indication information or the third indication information is a first value or the length of the first time window is a second value, the second indication information, the third indication information, or the first time window may indicate that the state of the one or more first models is unstable. In this case, the model management device may configure more resources to monitor the one or more first models. The first value is, for example, 0 or 1. The second value is, for example, 0 or 1. Specifically, for example, when the length of the first time window is the second value (for example, 0), the length of the first time window may not only indicate that the state of the one or more first models is unstable, but also indicate that the state of the one or more first models is valid only at a current moment and is invalid at a next moment. Alternatively, the length of the first time window being less than or equal to a first length may be considered as that the state of the one or more first models is unstable. In this case, the model management device may configure more resources to monitor the one or more first models.

Optionally, the model management device configures, based on the first time window, a resource for monitoring the one or more first models. For example, if the first time window is short, the model management device may configure more resources to monitor the one or more first models. For another example, if the first time window is long, the model management device may configure fewer resources to monitor the one or more first models. This helps allocate resources more properly.

In another possible implementation, at least two of the length, the start position, and the end position of the first time window may be determined by the terminal device based on an indication of the model management device. To be specific, in this case, at least two of the length, the start position, and the end position of the first time window are not fixed, in other words, are not pre-specified, but are determined by the terminal device based on the indication of the model management device.

Optionally, the model management device sends activation indication information to the terminal device, where the activation indication information indicates to activate the one or more first models. In this case, the terminal device determines, based on the activation indication information, that the start position of the first time window is equal to or later than a moment at which the activation indication information is received.

Optionally, the model management device sends deactivation indication information to the terminal device, where the deactivation indication information indicates to deactivate the one or more first models. In this case, the terminal device determines, based on the deactivation indication information, that the end position of the first time window is equal to or later than a moment at which the deactivation indication information is received. In this case, the terminal device does not determine the length of the first time window, but retains the first state of the one or more first models based on the deactivation indication information, and determines the end position of the first time window, in other words, determines the length of the first time window, based on the deactivation information.

In this way, the model management device can flexibly deliver the activation indication information or the deactivation indication information, to flexibly control the length of the first time window.

For example, the terminal device may report states of a part or all of the one or more first models based on a first periodicity, and the terminal device may set the length of the first time window to be less than or equal to a length of the first periodicity. Alternatively, the terminal device may predict average duration needed for a change in the state of the one or more first models, and set the length of the first time window to the average duration. Certainly, the terminal device may determine the first time window in a plurality of manners. This is not specifically limited in this embodiment of this application. The first periodicity may be determined by the terminal device and the model management device through negotiation, configured by the model management device for the terminal device, or predefined or preconfigured on the terminal device and the model management device. This is not specifically limited in this embodiment of this application.

In a possible implementation, the length of the first time window may meet at least one of the following conditions: being greater than a maximum value in the first value range; being greater than a maximum value in the second value range; being greater than a maximum value in the third value range; or being greater than a maximum value in the fourth value range. This can ensure that the terminal device has sufficient time to activate or switch a corresponding first model. For content of the first value range, the second value range, the third value range, and the fourth value range, refer to the content described above. Details are not described herein again.

Optionally, first time windows corresponding to first models for implementing a plurality of functions may be the same. In this case, the one or more first models may be used to implement a plurality of functions. The function is, for example, CSI prediction or positioning. Alternatively, first time windows corresponding to first models for implementing one function may be the same. In this case, all of the one or more first models are used to implement a same function.

S602: The terminal device sends information 2 to the model management device. Correspondingly, the model management device receives the information 2 from the terminal device. The information may also be referred to as fourth information. The information 2 may indicate that a state of the one or more second models is a third state.

When the terminal device can further sense the one or more second models, the terminal device may send the state of the one or more second models to the model management device. In this embodiment of this application, an example in which the state of the one or more second models is the third state is used.

The third state indicates that the terminal device does not support use (or running) of the one or more second models. This may alternatively be described as that the one or more second models cannot be executed (or is non-executable), or may be described as that the one or more second models are in a non-executable state. It can be further understood that the terminal device does not support use of the one or more second models, or the terminal device does not meet a condition for executing the one or more second models.

For example, the third state may include one of the following state (1) to state (5), which are described below.

State (1): The terminal device does not have a capability of executing the one or more second models. In this case, the third state may also be referred to as a non-supported state (non-supported state), or referred to as non-supported (non-supported) for short.

State (2): The terminal device has not locally obtained/stored/loaded the one or more second models, or cannot load the one or more second models from another device. In this case, the third state may also be referred to as an unavailable state (available state), or referred to as unavailable (non-available) for short.

The state (2) may be understood as follows: The terminal device has not locally obtained/stored/loaded a profile of the one or more second models, or cannot load a profile of the one or more second models from another device, and therefore cannot execute the one or more second models.

State (3): The terminal device is not ready to perform inference by using the one or more second models. In this case, the third state may be referred to as an inapplicable state (inapplicable state), or referred to as inapplicable (inapplicable) for short.

State (4): The terminal device does not have a configuration of the model management device for executing or running the one or more second models. In this case, the state (4) may be referred to as a non-configured state (non-configured state). For content of the configuration of the model management device, refer to the content of the configuration of the model management device in the state A4. Details are not described herein again.

State (5): The terminal device has not activated or performed inference by using the one or more second models. In this case, the state (5) may be referred to as a non-activated state (non-activated state), or referred to as non-activated (non-activated) for short.

For content of determining that the one or more second models are not supported (or determining the third state), refer to the foregoing content of determining that the one or more first models are not supported. Details are not described herein again.

For example, that the terminal device does not support the one or more second models includes: The terminal device has not locally loaded the profile of the one or more second models, and the terminal device cannot obtain the profile of the one or more second models from the profile management device. In this case, a delay in activating the one or more second models by the terminal device (that is, an activation delay of the one or more second models) may be denoted as +∞.

That the terminal device cannot obtain the profile of the one or more second models from the profile management device may be that the profile management device has not stored the profile of the one or more second models; or may be that the profile management device has stored the profile of the one or more second models, but the terminal device has insufficient storage space or power and therefore cannot obtain the profile of the one or more second models from the profile management device.

The information 2 may include second delay information, and the second delay information may indicate one or more delays of the one or more second models. For example, the second delay information further indicates at least one of a second activation delay, a second inference delay, a second rollback delay, a second monitoring delay, a third switching delay, a fourth switching delay, and a second deactivation delay of the one or more second models.

For a manner in which the information 2 indicates the third state, refer to the foregoing content in which the information 1 indicates the first state. The following provides an example for description.

In a possible implementation, a part or all of the second delay information indicates the third state. For example, some or all bits in the second delay information indicate the third state, or a part or all of the at least one type of information included in the second delay information indicates the third state.

The second delay information includes at least one of the following: second activation delay information, second inference delay information, second rollback delay information, second monitoring delay information, third switching delay information, fourth switching delay information, and second deactivation delay information.

The second activation delay information indicates H1 activation delays, and one second activation delay indicates a delay of activating one of the H1 second models. The second inference delay information indicates H2 inference delays, and one second inference delay indicates a delay in performing inference by using one of the H2 second models. The second rollback delay information indicates H3 rollback delays, where one second rollback delay indicates a delay in rolling back one second model in the H3 second models to a delay of not using the model to implement the third function, and one second model can implement the third function. The second monitoring delay information indicates H4 second monitoring delays, where one second monitoring delay indicates a delay in monitoring one second model in the H4 second models. The third switching delay information indicates H5 third switching delays, and one third switching delay indicates a delay of switching one second model in the H5 second models to the third model. The fourth switching delay information indicates H6 fourth switching delays, and one of the fourth switching delays indicates a delay in switching the fourth model to one of the H6 second models. The second deactivation delay information indicates H7 second deactivation delays, and one second deactivation delay indicates a delay in deactivating one of the H7 second models. H7 is a positive integer.

In a possible implementation, that the part or all of the second delay information indicates the third state includes at least one of the following:
(1) The second activation delay information indicates that a state of U1 second models of the H1 second models is a third state, where U1 is a positive integer.
(2) The third switching delay information indicates that a state of U2 second models in the H5 second models is a third state, where U2 is a positive integer.
(3) The fourth switching delay information indicates that a state of U3 second models of the H6 second models is a third state, where U3 is a positive integer.
(4) The second inference delay information indicates that states of U4 second models in the H2 second models are the third state, where U4 is a positive integer.

In a possible implementation, when values of a part or all of the H1 second activation delays are within a fifth value range, states of the corresponding U1 second models are the third state. For example, if values of the H1 second activation delays that are less than or equal to U1 second activation delays are all within a fifth value range, states of the corresponding U1 second models are the third state. When values of a part or all of the H5 third switching delays are within the sixth value range, the state of the U5 second models is the third state. For example, values of the H5 third switching delays that are less than or equal to U5 third switching delays are all within the sixth value range, and states of the corresponding U5 second models are the third state. When values of a part or all of the H6 fourth switching delays are within a seventh value range, the U3 second models are in the third state. For example, if values of H6 fourth switching delays that are less than or equal to U3 fourth switching delays are all within the seventh value range, states of the corresponding U3 second models are the third state. When values of a part or all of the H2 second inference delays are within an eighth value range, the U4 second models are in the third state. For example, if values of H2 second inference delays that are less than or equal to U4 second inference delays are all within an eighth value range, states of the corresponding U4 second models are the third state.

For specific content that the second delay information indicates the third state, refer to the foregoing content that the first delay information indicates the first state. Details are not described herein again.

Optionally, the fourth information may further include configuration information related to the one or more second models or an identifier of the one or more second models. For content of the configuration information related to the one or more second models, refer to the content of the configuration information related to the one or more first models, and for content of the identifier of the one or more second models, refer to the content of the identifier of the one or more first models.

Optionally, the third state is valid within a second time window. This may alternatively be described as that the terminal device keeps the state of the one or more second models being the third state within the second time window. A start moment (or a starting moment) of the second time window is, for example, a moment at which the terminal device sends the information 2 to the model management device, or a moment at which the model management device receives the information 2. For a manner of determining the second time window by the model management device and the terminal device, refer to the foregoing content of determining the first time window. This is not limited in this embodiment of this application.

The second time window may be the same as the first time window, in other words, the first time window and the second time window are a same time window. Alternatively, the second time window is different from the first time window. This is not specifically limited in this embodiment of this application.

Optionally, the information 1 and the information 2 may be carried in one piece of information. In this case, that the terminal device sends the information to the model management device is equivalent to sending the information 1 and the information 2 to the model management device.

It should be understood that, when the terminal device cannot sense the one or more second models, content of S602 may not be performed. To be specific, S602 is an optional step, and is indicated by a dashed line in FIG. 6.

It should be noted that, in another communication method (which may alternatively be considered as another embodiment) provided in embodiments of this application, a terminal device may send information 2 to a model management device. Correspondingly, the model management device receives the information 2 from the terminal device. To be specific, in the communication method, S602 is a necessary step, and all of other steps in FIG. 6 are optional steps. In the communication method, the information 2 may include second delay information, and a part or all of the second delay information indicates a third state. Content of this embodiment has been described in FIG. 6, and repeated descriptions are omitted herein.

S603: The terminal device sends information 3 to the model management device. Correspondingly, the model management device receives the information 3 from the terminal device. The information 3 may also be referred to as fifth information.

For example, the information 3 may be carried in dedicated information, or may be carried in an RRC message. The RRC message is specifically, for example, UAI. This is not limited in this embodiment of this application.

The terminal device needs to keep the first state of the one or more first models unchanged within the first time window. Optionally, the terminal device may change the state of the one or more second models within the first time window. If the terminal device determines, within the first time window, that the state of the one or more second models is updated to a fourth state, for example, the terminal device has loaded the profile of the one or more second models from the profile management device, the terminal device may send the information 3 to the model management device. The information 3 indicates that the state of the one or more second models is updated to the fourth state.

Optionally, the fourth state is valid within a third time window. A start moment of the third time window is, for example, a moment at which the terminal device sends the information 3, or a moment at which the model management device receives the information 3. The third time window is the same as or different from the first time window. This is not limited in this embodiment of this application. In this implementation, the terminal device may also keep the fourth state of the one or more second models unchanged, to further reduce interaction between the terminal device and the model management device.

If the third state is valid within the second time window, the terminal device may send the information 3 to the model management device after the second time window.

S604: The model management device sends information 4 to the terminal device. Correspondingly, the terminal device receives the information 4 from the model management device. The information 4 may also be referred to as sixth information.

For example, the information 4 may be carried in dedicated signaling, or may be carried in RRC signaling. This is not limited in this embodiment of this application.

After determining the state of the one or more first models, the model management device may determine a policy for N first models of the one or more first models, and send the policy for the N first models to the terminal device. The N first models may be a part or all of the one or more first models. It should be noted that, when a value of N is greater than 1, policies for managing any two of the N first models may be the same or different. This is not limited in this embodiment of this application.

A policy for managing one of the N first models is used below as an example for description.

F1: The policy indicates to activate the first model.

For example, the model management device determines that a state of the first model is updated from a second state to the first state, and the model management device may determine to activate the first model. In other words, the policy may indicate the terminal device to activate the first model. Optionally, in this case, the policy may further indicate a model parameter of the first model.

F2: The policy indicates to deactivate the first model.

For example, when the model management device determines that the terminal device does not need to use the first model to implement a specific function (for example, the first function), the model management device may indicate to deactivate the first model.

F3: The policy indicates to switch from the first model to a third model.

For example, the model management device determines that effect of using the first model is poor and determines to switch from the first model to the third model, where the third model belongs to, for example, the one or more second models, or is a model of the one or more first models other than the N first models.

F4: The policy indicates to switch from the fourth model to the first model.

For example, when the model management device determines that effect of using the fourth model is poor or the fourth model is currently not suitable for use by the terminal device, the model management device determines to switch from the fourth model to the first model.

F5: The policy indicates to roll back the first model.

For example, the model management device determines that effect of using the first model by the terminal device is poor or the first model is currently not suitable for use by the terminal device. Therefore, the model management device may determine a delay in rolling back the first model to a case in which the model is not used to implement the first function. The first model is capable of implementing the first function.

It should be noted that the foregoing describes example content of the policy, and in practice, the policy may further include a plurality of types of content. This is not specifically limited in this embodiment of this application.

After receiving the information 4, optionally, the terminal device may send a first response message to the model management device, where the first response message indicates that the terminal device determines to process one or more of the N first models according to the policy. The first response message may specifically indicate that the terminal device has received the information 4, or indicate that the terminal device is to perform processing based on an indication of the information 4, or indicate that the terminal device has performed processing based on an indication of the information 4. This is not specifically limited in this embodiment of this application.

For example, when the policy indicates to activate the N first models, the first response message may indicate an acknowledgement of activation of the N first models; or when the policy indicates to deactivate the N first models, the first response message indicates an acknowledgement of deactivation of the N first models.

Optionally, the information 4 may include a plurality of pieces of information that are sequentially sent by the model management device. At least two of the plurality of pieces of information indicate a policy for managing different first models of the one or more first models, and/or at least two of the plurality of pieces of information may indicate different policies for managing at least one of the one or more first models.

For example, within the first time window, the model management device may separately manage different first models of one or more first models. In this case, the model management device may indicate, to the terminal device a plurality of times, policies used for different first models. This is equivalent to sending a plurality of pieces of information, and at least two of the plurality of pieces of information indicate policies for managing different first models of the one or more first models.

Alternatively, within the first time window, the model management device may manage the N first models a plurality of times. In this case, the model management device may indicate, to the terminal device a plurality of times, a policy for managing the N first models. This is equivalent to sending a plurality of pieces of sub-information, and at least two of the plurality of pieces of sub-information may indicate different policies for managing at least one of the one or more first models.

It should be noted that S603 and S604 may be performed in any sequence. For example, S603 is performed before S604, or S604 is performed before S603, or S603 and S604 are performed in parallel. This is not specifically limited in this embodiment of this application.

When S603 is performed before S604, the model management device may not only manage the N first models, but also manage the one or more second models. For example, the information 4 may further indicate a policy for managing a part or all of the one or more second models. For content of the policy for managing the part or all of second models, refer to the foregoing content of the policy for managing the N first models. Details are not described herein again.

In a possible implementation, if the model management device needs some assistance information for managing a part or all of the N first models, the model management device may send eighth indication information to the terminal device. Correspondingly, the terminal device receives the eighth indication information from the model management device. The eighth indication information indicates the terminal device to report the assistance information of the part or all of the N first models. The assistance information of the part or all of the N first models is used to assist in managing the part or all of the N first models. After receiving the eighth indication information, the terminal device may send the assistance information of the part or all of the N first models to the model management device. The assistance information of the part or all of the N first models is, for example, one or more of location information of the terminal device, a moving (or movement) speed of the terminal device, or a Doppler frequency shift.

When the part or all of the N first models vary, content of the assistance information of the part or all of the N first models also varies. The content of the assistance information of the part or all of the N first models is not specifically limited in this embodiment of this application.

In this possible implementation, when performing S604, the model management device may further determine, based on the assistance information of the part or all of the N first models, the policy for managing the N first models.

For example, the one or more first models include a model A and a model B, both the model A and the model B are used to compress CSI, the model A is applicable to a medium-speed scenario, and the model B is applicable to a high-speed scenario. The terminal device sends the moving speed of the terminal device, that is, 150 km/h, to the model management device. The model management device determines that the terminal device is in the high-speed scenario, and therefore may determine to indicate to activate the model B. Correspondingly, the policy indicates the terminal device to activate the model B.

In another possible implementation, the model management device may autonomously determine assistance information of a part or all of the N first models, or obtain assistance information of a part or all of the N first models from another device (for example, a core network device or an access network device). This is not specifically limited in this embodiment of this application.

All of S602 to S604 are optional steps, and are indicated by dashed lines in FIG. 6.

S605: The terminal device sends information 5 to the model management device. Correspondingly, the model management device receives the information 5 from the terminal device. The information 5 may also be referred to as second information. The information 5 indicates that states of M first models of the one or more first models are updated to the second state. M is a positive integer, and the M first models may be a part or all of the one or more first models.

For example, the information 5 may be carried in dedicated information, or may be carried in an RRC message. The RRC message is specifically, for example, capability information of the UE or UAI. This is not limited in this embodiment of this application.

For example, after the first time window, the terminal device determines that the states of the M first models of the one or more first models are updated (or changed), for example, updated from the first state to the second state. In this case, the terminal device may send the information 5 to the model management device.

When the terminal device sends a state of a first model based on a first periodicity, the terminal device may send the information 5 to the model management device when determining that a first moment has arrived. Duration between the first moment and time at which the first information is sent is the first periodicity.

In another possible implementation, if none of the states of the M first models of the one or more first models are updated at the first moment, the terminal device may give up (or skip) sending the states of the M first models of the one or more first models to the model management device at the first moment. In this case, step S605 may not need to be performed. To be specific, S605 is an optional step, and is indicated by a dashed line in FIG. 6.

In a possible implementation, the information 5 may further indicate states of a part or all of the one or more second models. The part or all of second models may be second models, whose states are updated, of the one or more second models, or may be the one or more second models.

In another possible implementation, after the first time window, eighth information is sent to the model management device, where the eighth information indicates states of a part or all of the one or more second models. The part or all of second models may be second models, whose states are updated, of the one or more second models, or may be the one or more second models. Optionally, the terminal device sends the eighth information at a third moment, where a time interval between the third moment and the moment at which the first information is sent meets a first periodicity, and the first periodicity is a periodicity at which the terminal device reports the states of the part or all of the one or more second models.

S605 may be considered as a manner of reporting states of a part or all of models by the terminal device, and is referred to as a reporting manner 1 below for short.

In another possible implementation, after the first time window, the terminal device sends seventh information to the model management device, where the seventh information indicates states of a part or all of the one or more first models. The part or all of the first models may be first models, whose states are updated, of the one or more first models, or may be the one or more first models.

Optionally, the terminal device sends the seventh information at a second moment, where a time interval between the second moment and the moment at which the first information is sent meets a first periodicity.

S606: The model management device sends information 6 to the terminal device. Correspondingly, the terminal device receives the information 6 from the model management device. The information 6 may also be referred to as first indication information. The first indication information indicates to report states of a part or all of the one or more first models.

For example, the information 6 may be carried in dedicated signaling, or may be carried in RRC signaling. This is not limited in this embodiment of this application.

S607: The terminal device sends information 7 to the model management device. Correspondingly, the model management device receives the information 7 from the terminal device. The information 7 may also be referred to as third information. The information 7 indicates states of a part or all of the one or more first models.

For example, the information 7 may be carried in dedicated information, or may be carried in an RRC message. The RRC message is specifically, for example, capability information of the UE or UAI. This is not limited in this embodiment of this application.

In S607, states of all of the one or more first models are updated from the first state to the second state, or states of a part of the one or more first models are updated from the first state to the second state, or none of states of the one or more first models are updated (or changed). This is not limited in this embodiment of this application.

S606 and S607 may be considered as a manner of reporting states of a part or all of models by the terminal device, and is referred to as a reporting manner 2 below for short.

The terminal device may report states of a part or all of the one or more first models in the reporting manner 1 or the reporting manner 2. To be specific, S605, S606, and S607 are optional steps, and are indicated by dashed lines in FIG. 6.

As described above, because the first state is valid within the first time window, the terminal device does not update the state of the one or more first models within the first time window. Therefore, all of S605 to S607 are performed after the first time window.

In this embodiment of this application, the terminal device may retain the state of the one or more first models within the first time window. In this way, the terminal device and the model management device do not need to frequently exchange the state of the one or more first models. This helps reduce data exchange between the terminal device and the model management device.

A communication method provided in an embodiment of this application is described below by using an example in which a terminal device reports a state of one or more first models based on a first periodicity, the one or more first models include a model A and a model B, one or more second models include a model C, and a length of a first time window is less than a length of the first periodicity.

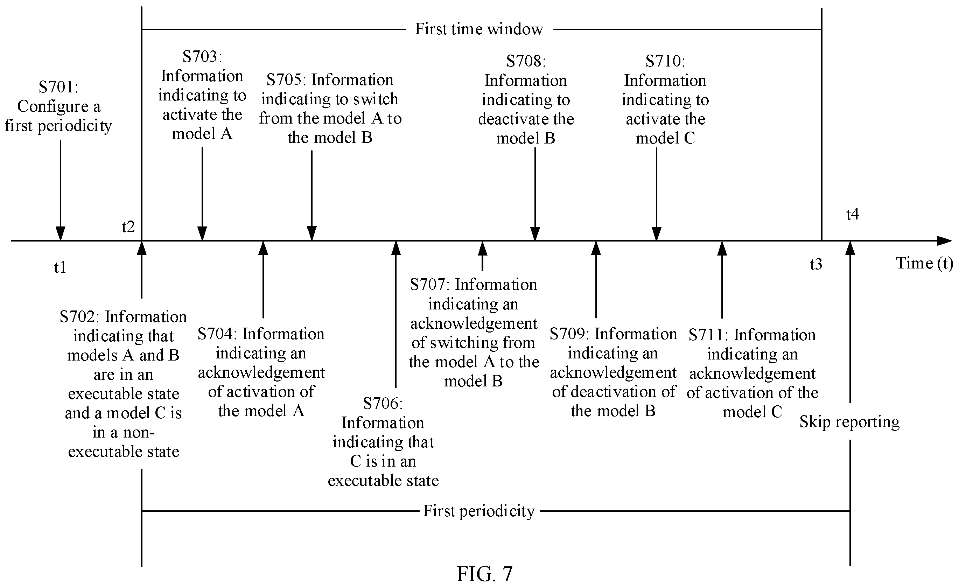

FIG. 7 is a diagram of a communication method according to an embodiment of this application. FIG. 7 shows steps S701 to S712, which are separately described below.

S701: A model management device configures a first periodicity for a terminal device. For content of the first periodicity, refer to the content of the first periodicity in FIG. 6. Details are not described herein again.

For example, the model management device configures the first periodicity for the terminal device at a moment t1. Optionally, the model management device may further indicate a moment (for example, a moment t2) at which the terminal device is to start to report a model A and a model B.

S702: The terminal device sends, to the model management device, information indicating that the models A and B are in an executable state and a model C is in a non-executable state. The information indicating that the models A and B are in the executable state and the model C is in the non-executable state may be considered as an example of information 1. For content of the information 1 and content of the executable state and the non-executable state, refer to the foregoing content of FIG. 6. Details are not described herein again.

S703: The model management device sends, to the terminal device, information indicating to activate the model A. The information indicating to activate the model A may be considered as an example of information 3.

For content of the information 3, refer to the foregoing content described in FIG. 6. Details are not described herein again.

S704: The terminal device sends, to the model management device, information indicating an acknowledgement of activation of the model A. The information indicating the acknowledgement of activation of the model A may be considered as an example of a first response message. The model A may be considered as an example of N first models. For content of the first response message, refer to the foregoing content described in FIG. 6.

S705: The model management device sends, to the terminal device, information indicating to switch from the model A to the model B. The information indicating to switch from the model A to the model B may be considered as an example of the information 3.

S706: The terminal device sends, to the model management device, information indicating that C is in an executable state. The information indicating that C is in the executable state may be considered as an example of information 2.

S707: The terminal device sends, to the model management device, information indicating an acknowledgement of switching from the model A to the model B. The information indicating the acknowledgement of switching from the model A to the model B may be considered as an example of the first response message.

S708: The model management device sends, to the terminal device, information indicating to deactivate the model B. The information indicating to deactivate the model B may be considered as an example of content of the information 3.

S709: The terminal device sends, to the model management device, information indicating an acknowledgement of deactivation of the model B. The information indicating the acknowledgement of deactivation of the model B may be considered as an example of content of the first response message.

S710: The model management device sends, to the terminal device, information indicating to activate the model C. The information indicating to activate the model C may be considered as an example of the information 3.

S711: The terminal device sends, to the model management device, information indicating an acknowledgement of activation of the model C. The information indicating the acknowledgement of activation of the model C may be considered as an example of the first response message.

A period from S702 to a moment t3 is within a first time window. After the first time window, the terminal device may update states of the model A and the model B. In this embodiment of this application, an example in which the terminal device does not update the states of the model A and the model B after the first time window is used. In this case, the terminal device determines that the first moment (t4 shown in FIG. 7) has arrived but the states of the models A and B have not changed. Therefore, the terminal device may skip reporting at the first moment. To be specific, the terminal device does not report (or send) the states of the models A and B to the model management device.

A communication method provided in an embodiment of this application is described below by using an example in which one or more first models include a model A and a model B and one or more second models include a model C.

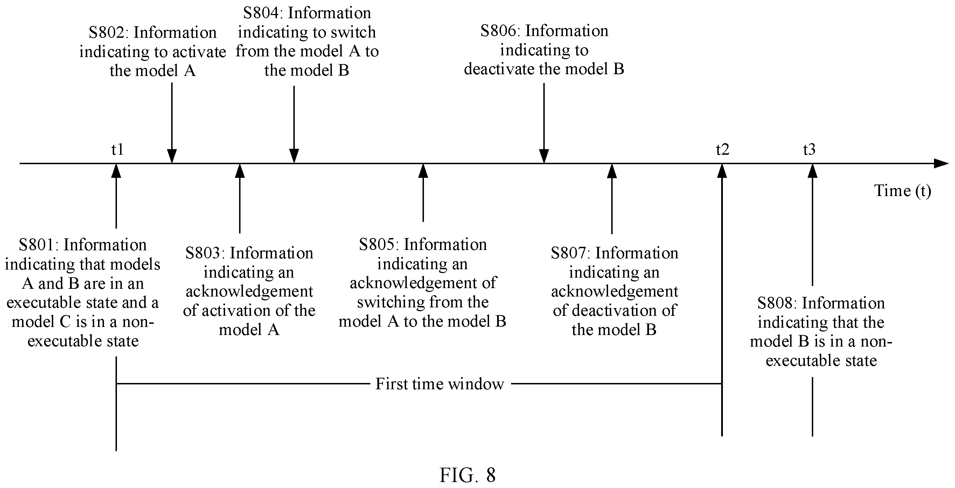

FIG. 8 is a diagram of a communication method according to an embodiment of this application. FIG. 8 shows steps S801 to S808, which are separately described below.

S801: A terminal device sends, to a model management device, information indicating that models A and B are in an executable state and a model C is in a non-executable state. The models A and B being in the executable state and the model C being in the non-executable state may be considered as an example of information 1.

S802: The model management device sends, to the terminal device, information indicating to activate the model A. The information indicating to activate the model A may be considered as an example of information 4.

S803: The terminal device sends, to the model management device, information indicating an acknowledgement of activation of the model A. The information indicating the acknowledgement of activation of the model A may be considered as an example of a first response message.

S804: The model management device sends, to the terminal device, information indicating to switch from the model A to the model B. The information indicating to switch from the model A to the model B may be considered as an example of the information 4.

S805: The terminal device sends, to the model management device, information indicating an acknowledgement of switching from the model A to the model B. The information indicating the acknowledgement of switching from the model A to the model B may be considered as an example of the first response message.

S806: The model management device sends, to the terminal device, information indicating to deactivate the model B. The information indicating to deactivate the model B may be considered as an example of the information 4.

S807: The terminal device sends, to the model management device, information indicating an acknowledgement of deactivation of the model B. The information indicating the acknowledgement of deactivation of the model B may be considered as an example of the first response message.

After S807, the terminal device may delete a profile of the model B due to insufficient memory or compute resources or the like. In this case, the model B is updated from the executable state to a non-executable state. Therefore, after a first time window (for example, a time window indicated by t1 to t2), the terminal device may perform S808, to be specific, send, to the model management device, information indicating that the model B is in the non-executable state. For example, the terminal device sends, to the model management device at a moment t3, the information indicating that the model B is in the non-executable state. The information indicating that the model B is in the non-executable state may be considered as an example of information 7.

A communication method provided in an embodiment of this application is described below by using an example in which one or more first models include a model A and a model B, one or more second models include a model C, a first time window is different from a second time window, and a length of the first time window is less than a length of the second time window.

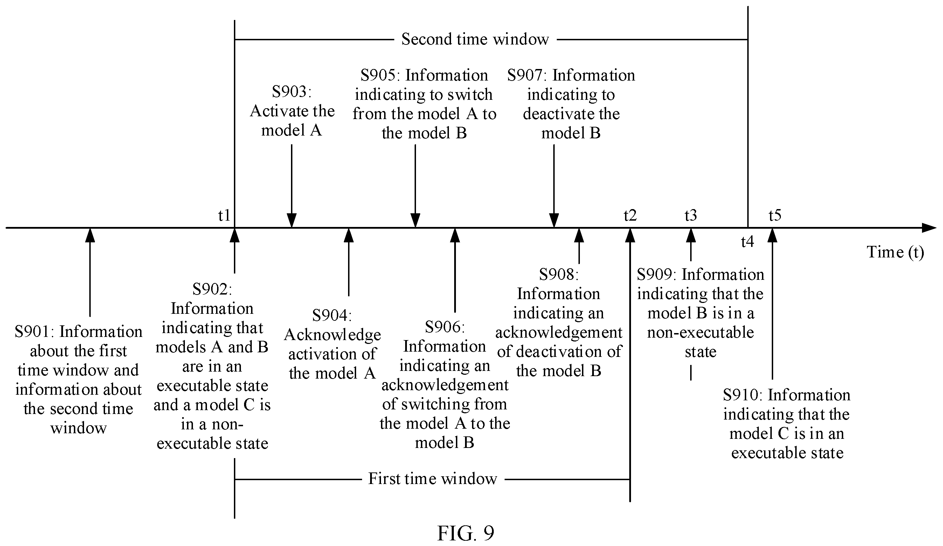

FIG. 9 is a diagram of a communication method according to an embodiment of this application. FIG. 9 shows steps S901 to S910, which are separately described below.

S901: A model management device sends a first time window and a second time window to a terminal device. For content of the first time window and the second time window, refer to the foregoing content of the first periodicity in FIG. 6. Details are not described herein again.

S902: The terminal device sends, to the model management device, information indicating that models A and B are in an executable state and a model C is in a non-executable state. The information indicating that the models A and B are in the executable state and the model C is in the non-executable state may be considered as an example of information 1. For content of the information 1 and content of the executable state and the non-executable state, refer to the foregoing content of FIG. 6. Details are not described herein again.

S903: The model management device sends, to the terminal device, information indicating to activate the model A. The information indicating to activate the model A may be considered as an example of information 4. For content of the information 4, refer to the foregoing content described in FIG. 6. Details are not described herein again.

S904: The terminal device sends, to the model management device, information indicating an acknowledgement of activation of the model A. The information indicating the acknowledgement of activation of the model A may be considered as an example of a first response message. The model A may be considered as an example of N first models. For content of the first response message, refer to the foregoing content described in FIG. 6.

S905: The model management device sends, to the terminal device, information indicating to switch from the model A to the model B. The information indicating to switch from the model A to the model B may be considered as an example of the information 4.

S906: The terminal device sends, to the model management device, information indicating an acknowledgement of switching from the model A to the model B. The information indicating the acknowledgement of switching from the model A to the model B may be considered as an example of the first response message.

S907: The model management device sends, to the terminal device, information indicating to deactivate the model B. The information indicating to deactivate the model B may be considered as an example of content of the information 4.

S908: The terminal device sends, to the model management device, information indicating an acknowledgement of deactivation of the model B. The information indicating the acknowledgement of deactivation of the model B may be considered as an example of content of the first response message.

S909: The model management device sends, to the terminal device, information indicating that the model B is in a non-executable state. The information indicating that the model B is in the non-executable state may be considered as an example of information 7.

The terminal device determines that the first time window arrives after t2. After the first time window, the terminal device releases (or deletes) a profile of the model B due to insufficient memory or compute resources or the like. In this case, after the first time window, the terminal device may send the information 7 to the model management device, where the information 7 indicates that the model B is in the non-executable state.

S910: The terminal device sends, to the model management device, information for confirming that the model C is in an executable state. The information indicating that the model C is in the executable state may be considered as an example of information 3.

The terminal device determines that the second time window arrives after t4. After the second time window, the terminal device loads a profile of the model C. In this case, after the second time window, the terminal device may send the information 3 to the model management device, where the information 3 indicates that the model C is in the executable state.

To reduce an amount of data transmitted between a terminal device and a model management device, an embodiment of this application provides a communication method. In the method, the terminal device may report first information to the model management device. The first information includes first delay information. The first delay information may indicate one or more delays related to K first models of one or more first models, where K is a positive integer. In addition, a part or all of the first delay information may indicate that a state of the one or more first models is a first state. That is, the first delay information indicates a plurality of types of content. This helps reduce a quantity of bits occupied by the first information, and therefore reduces an amount of data transmitted between the terminal device and the model management device.

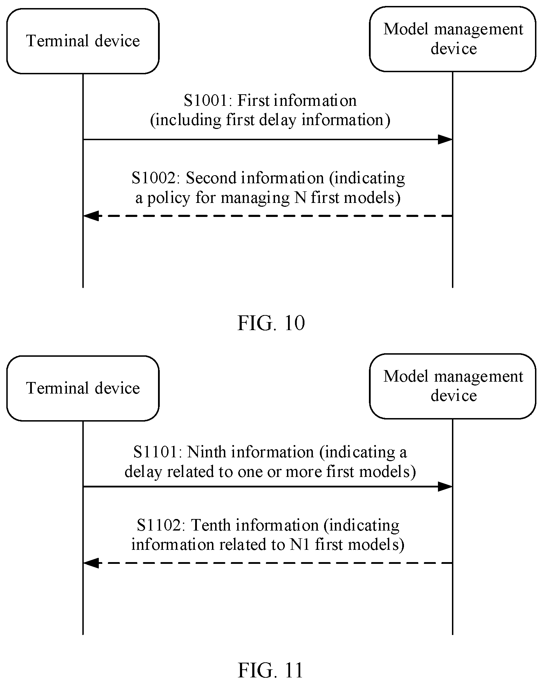

FIG. 10 is a diagram of a communication method according to an embodiment of this application. FIG. 10 shows two steps: S1001 and S1002, which are separately described below.

S1001: A terminal device sends first information to a model management device. Correspondingly, the model management device receives the first information from the terminal device.

The first information includes first delay information. The first delay information indicates one or more delays related to a part or all of one or more first models. For content of the part or all of the one or more first models, refer to the foregoing content described in S601, and for content of the first delay information, refer to the foregoing content of the first delay information described in S601.

In this embodiment of this application, the first delay information further indicates that a state of the one or more first models is a first state. For specific content of indicating the first state by the first delay information, refer to the foregoing content described in S601.

Optionally, in this embodiment of this application, the first state may also be valid within a first time window. For content of the first time window, refer to the foregoing content described in FIG. 6. Details are not described herein again.

S1002: The model management device sends second information to the terminal device. Correspondingly, the terminal device receives the second information from the model management device. The second information indicates a policy for managing N first models.

After receiving the first information, the model management device may determine whether the terminal device can support use of the one or more first models, to determine a policy for the one or more first models. For content of determining the policy, refer to the foregoing content of S604. Details are not described herein again.

S1002 is an optional step, and is indicated by a dashed line in FIG. 10.

In this embodiment of this application, the first delay information may indicate the first state by indicating the one or more delays, to further reduce interaction between the terminal device and the model management device.

To enable a model management device to manage a model of a terminal device in a more targeted manner, an embodiment of this application provides a communication method. In the method, the terminal device may send first information to the model management device, where the first information indicates a delay related to one or more first models, so that the model management device can determine, based on the first information, information related to N first models. This is equivalent to that the model management device can obtain more information based on a small amount of information, to determine, in a targeted manner, to manage or control the N first models or the like.

FIG. 11 shows a communication method according to an embodiment of this application. FIG. 11 shows two steps: S1101 and S1102, which are separately described below.

S1101: A terminal device sends ninth information to a model management device. Correspondingly, the model management device receives the ninth information from the terminal device.

The ninth information indicates one or more delays related to one or more first models. For example, the ninth information may include at least one of the following G1 to G7.

### G1: Activation delay information

The activation delay information indicates one or more activation delays. The one or more activation delays correspond to the one or more first models, and one activation delay corresponds to one of the one or more first models. One of the one or more activation delays indicates a delay in activating one of the one or more first models. An activation delay corresponding to a first model may be understood as duration from a current moment to a moment at which the terminal device executes (or runs) the first model.

For a manner of indicating the one or more activation delays by the activation delay information, refer to the foregoing content of indicating the K activation delays by the activation delay information described in S601. Details are not described herein again.

### G2: Inference delay information

The inference delay information indicates one or more inference delays. For a manner of indicating the one or more inference delays, refer to the foregoing manner of indicating the one or more activation delays. Details are not described herein again. The one or more inference delays correspond to the one or more first models, and one inference delay corresponds to one of the one or more first models. One of the one or more inference delays indicates a delay in performing inference by using one of the one or more first models. An inference delay corresponding to a first model may be understood as duration needed by the terminal device to implement an inference process by using the first model, for example, specifically, duration from a moment at which the first model receives an input to a moment at which the first model obtains an output.

### G3: Rollback delay information

The rollback delay information indicates one or more rollback delays. For a manner of indicating the one or more rollback delays, refer to the foregoing manner of indicating the one or more activation delays. Details are not described herein again. The one or more rollback delays correspond to the one or more first models, and one rollback delay corresponds to one of the one or more first models. One of the one or more rollback delays indicates a delay in rolling back one of the one or more first models to a case in which the first model is not used to implement a first function, where the first model is capable of implementing the first function.

### G4: Monitoring delay information

The monitoring delay information indicates one or more monitoring delays. For a manner of indicating the one or more monitoring delays, refer to the foregoing manner of indicating the one or more activation delays. Details are not described herein again. The one or more monitoring delays correspond to the one or more first models, and one monitoring delay corresponds to one of the one or more first models. One of the one or more monitoring delays indicates a delay in monitoring one of the one or more first models. A monitoring delay of a first model may be understood as a delay needed for monitoring simulated implementation of an inference process of the first model. Optionally, the terminal device may use a surrogate model to obtain a monitoring delay of the one or more first models.

### G5: First switching delay information

The first switching delay information indicates one or more first switching delays. For a manner of indicating the one or more first switching delays, refer to the foregoing manner of indicating the one or more activation delays. Details are not described herein again. The one or more first switching delays correspond to the one or more first models, and one first switching delay corresponds to one of the one or more first models. One of the one or more first switching delays indicates a delay in switching from one of the one or more first models to a third model. The third model may belong to the one or more first models, or may belong to one or more second models.

The second switching delay information indicates one or more second switching delays. For a manner of indicating the one or more second switching delays, refer to the foregoing manner of indicating the one or more activation delays. Details are not described herein again. The one or more second switching delays correspond to the one or more first models, and one second switching delay corresponds to one of the one or more first models. One of the one or more second switching delays indicates a delay in switching from a fourth model to one of the one or more first models. The fourth model may belong to the one or more first models, or may belong to the one or more second models. The fourth model may be the same as or different from the third model.

### G6: Second switching delay information

The second switching delay information indicates one or more second switching delays. For a manner of indicating the one or more second switching delays, refer to the foregoing manner of indicating the one or more activation delays. Details are not described herein again. The one or more second switching delays correspond to the one or more first models, and one second switching delay corresponds to one of the one or more first models. One of the one or more second switching delays indicates a delay in switching from a fourth model to one of the one or more first models. The fourth model may belong to the one or more first models, or may belong to the one or more second models. The fourth model may be the same as or different from the third model.

### G7: Deactivation delay information

The deactivation delay information indicates one or more deactivation delays. For a manner of indicating the one or more deactivation delays, refer to the foregoing manner of indicating the one or more activation delays. Details are not described herein again. The one or more deactivation delays correspond to the one or more first models, and one deactivation delay corresponds to one of the one or more first models. One of the one or more deactivation delays indicates a delay in deactivating one of the one or more first models. An deactivation delay of a first model may be duration from a moment at which the terminal device reports deactivation of the first model to a moment at which the terminal device stops using the first model.

Optionally, the one or more delays indicated by the ninth information include at least one of the activation delay, the inference delay, the rollback delay, the monitoring delay, the first switching delay, the second switching delay, and the deactivation delay of the one or more first models.

S1102: The model management device sends tenth information to the terminal device. Correspondingly, the terminal device receives the tenth information from the model management device. The tenth information indicates to manage information related to N1 first models. The tenth information is related to the ninth information, or the tenth information is determined based on the ninth information. The tenth information may be, for example, a policy for managing the N1 first models and/or a configuration related to the N1 first models. The configuration related to the N1 first models includes one or more of the following: a configuration needed for using the N1 first models, a configuration needed for reporting outputs of the N1 first models, a configuration needed for inputs of the N1 first models, a scenario to which the N1 first models are applicable, a parameter bound to or associated with the N1 first models, or the like. This is not limited in this embodiment of this application. For content of the policy, refer to the foregoing content described in FIG. 6.

When content of the ninth information varies, content of the tenth information also varies. This is described below.

M1: The ninth information includes the activation delay information.

In M1, an activation delay corresponding to a first model being within a value range #1 indicates that the activation delay of the first model is short. Therefore, the model management device may determine to activate the first model. Correspondingly, the tenth information may indicate to activate the first model. An activation delay corresponding to a first model being within a value range #2 indicates that the activation delay of the first model is long, or even indicates that the terminal device may be unable to activate the first model. Therefore, the model management device may determine not to activate the first model. Correspondingly, the tenth information indicates the terminal device not to activate the first model.

A minimum value in the value range #2 is greater than a maximum value in the value range #1. The value range #1 and the value range #2 may be preconfigured or predefined on the model management device, or may be determined by the model management device and the terminal device through negotiation. This is not limited in this embodiment of this application.

Optionally, an activation delay corresponding to a first model is within the value range #1, and a shorter activation delay corresponding to a first model indicates a smaller value of first duration corresponding to the first model. The first duration is duration from a moment at which the terminal device acknowledges activation of the first model to a moment at which the terminal device uses the first model. For example, a second signal is an output of a first model, or an output of a first model is obtained by processing a second signal.

When the tenth information indicates to activate a first model, the terminal device may activate the first model. Optionally, after fourth duration, the terminal device receives first configuration information from the model management device, where the fourth duration is less than or equal to an activation delay corresponding to the first model. The first configuration information indicates a configuration needed by the terminal device to perform inference by using the first model. For example, the first configuration information indicates an input resource of the first model.

It should be understood that, in another possible case, the terminal device and the model management device have pre-negotiated upon a configuration needed for performing inference by using a first model. In this case, the model management device does not need to send the first configuration information to the terminal device.

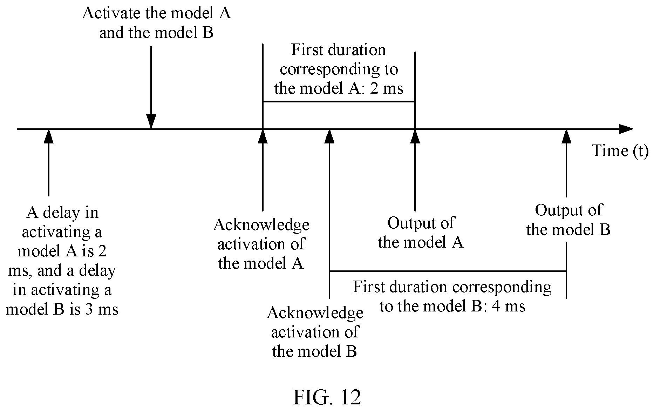

For example, FIG. 12 is a diagram of managing the N1 first models according to an embodiment of this application. In FIG. 12, for example, the N1 first models are a model A and a model B, both the model A and the model B are used to compress CSI with a rank of 4, and the value range #1 is less than or equal to 5 ms.

As shown in FIG. 12, the terminal device indicates, to the model management device, that an activation delay of the model A is 2 ms and an activation delay of the model B is 3 ms. The model management device determines that both activation delays of the models A and B are within the value range #1, and therefore may indicate to activate the models A and B. The terminal device may separately indicate acknowledgements of activation of the models A and B to the model management device. After activating the model A and the model B, the terminal device may send, to the model management device within first duration corresponding to the model A, CSI obtained through compression by using the model A. In addition, the terminal device may send, to the model management device within first duration corresponding to the model B, CSI obtained through compression by using the model B. Because the activation delay of the model B is greater than the activation delay of the model A, the first duration (for example, 4 ms) corresponding to the model B may be greater than the first duration (for example, 2 ms) corresponding to the model A.

M2: The ninth information includes the inference delay information.

An inference delay corresponding to a first model being within a value range #3 indicates that the inference delay of the first model is short. Therefore, the model management device may determine to activate the first model. Correspondingly, the tenth information indicates the terminal device to activate the first model. An inference delay corresponding to a first model being within a value range #4 indicates that the inference delay of the first model is long. Therefore, the model management device may determine to activate the first model. Correspondingly, the tenth information indicates the terminal device not to activate the first model. A minimum value in the value range #4 is greater than a maximum value in the value range #3.

The value range #3 and the value range #4 may be preconfigured or predefined on the model management device, or may be determined by the model management device and the terminal device through negotiation. This is not limited in this embodiment of this application.

When the tenth information indicates to activate a first model, the terminal device may activate the first model. Optionally, a shorter inference delay corresponding to a first model indicates a smaller value, indicated by the tenth information, of second duration corresponding to the first model. The second duration is duration from a moment at which the terminal device detects a third signal to a moment at which the terminal device reports a fourth signal. The third signal is related to an input of a first model, and the fourth signal is related to an output of a first model. For example, the third signal is an input of a first model, or an input of a first model is obtained by processing the third signal. For example, the fourth signal is an output of a first model, or an output of a first model is obtained by processing the fourth signal.

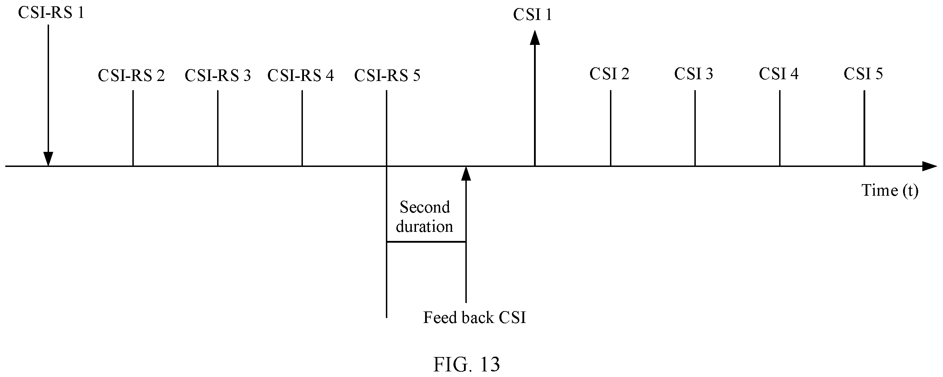

For example, FIG. 13 is a diagram of a process of managing the N1 first models according to an embodiment of this application. In FIG. 13, for example, the N1 first models are a model A, the model A is used to predict CSI, and an inference delay of the model A is 0.2 ms.

As shown in FIG. 13, the terminal device sequentially receives a channel state information reference signal 1 (channel state information reference signal, CSI-RS 1), a CSI-RS 2, a CSI-RS 3, a CSI-RS 4, and a CSI-RS 5 from the model management device. Correspondingly, the terminal device determines, by using the model A, CSI 1, CSI 2, CSI 3, CSI 4, and CSI 5 that correspond to the CSI-RS 1, the CSI-RS 2, the CSI-RS 3, the CSI-RS 4, and the CSI-RS 5 respectively. The second duration may be duration from a moment at which the terminal device detects the CSI-RS 5 to a moment at which the terminal device starts to send the CSI 1 to the model management device.

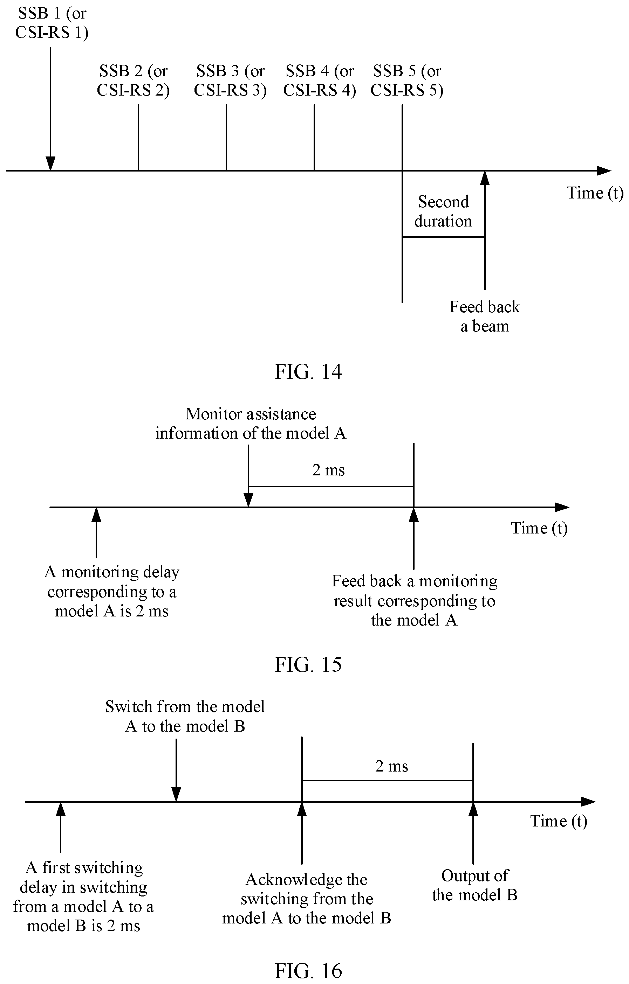

For example, FIG. 14 is a diagram of a process of managing the N1 first models according to an embodiment of this application. In FIG. 14, for example, the N1 first models are a model A, the model A is used to manage a beam, and an inference delay of the model A is 0.2 ms.

As shown in FIG. 14, the terminal device sequentially receives a synchronization signal 1 (synchronization signal 1, SSB 1) (or a channel state information reference signal CSI-RS 1), an SSB 2 (or a CSI-RS 2), an SSB 3 (or a CSI-RS 3), an SSB 4 (or a CSI-RS 4), and an SSB 5 (or a CSI-RS 5) from a model management device. Correspondingly, the terminal device determines, by using the model A, a beam corresponding to the SSB 1 (or the CSI-RS 1), a beam corresponding to the SSB 2 (or the CSI-RS 2), a beam corresponding to the SSB 3 (or the CSI-RS 3), a beam corresponding to the SSB 4 (or the CSI-RS 4), and a beam corresponding to the SSB 5 (or the CSI-RS 5) respectively. The second duration may be duration from a moment at which the terminal device detects the SSB 5 (or the CSI-RS 5) to a moment at which the terminal device starts to send a determined beam to the model management device. The SSB is, for example, a synchronization signal/physical broadcast channel block SS/PBCH block.

M3: The ninth information includes the rollback delay information.

A rollback delay corresponding to a first model being within a value range #5 indicates that the rollback delay of the first model is short. Therefore, the model management device may determine to roll back the first model, to be specific, may roll back the first model to a case in which the model is not suitable for implementing the first function. A first model may be used to implement the first function. In this case, the tenth information indicates the terminal device not to roll back the first model. A rollback delay corresponding to a first model being within a value range #6 indicates that the rollback delay of the first model is long. Therefore, the model management device may determine not to roll back the first model. Correspondingly, the tenth information indicates the terminal device not to roll back the first model. A minimum value in the value range #6 is greater than a maximum value in the value range #5.

The value range #5 and the value range #6 may be preconfigured or predefined on the model management device, or may be determined by the model management device and the terminal device through negotiation. This is not limited in this embodiment of this application.

When the policy indicates to roll back a first model, the terminal device may roll back the first model to a case in which the model is not used to implement the first function. Optionally, after fifth duration, the terminal device receives second configuration information from the model management device, where the second configuration information indicates a configuration needed when the terminal device does not use the model to implement the first function. The fifth duration is less than or equal to a rollback delay corresponding to the first model.

In another possible implementation, when the terminal device determines that a first model needs to be rolled back due to a problem of the terminal device (for example, the terminal device has insufficient compute resources or memory resources), the terminal device may send fourth indication information to the model management device. The fourth indication information requests to roll back the first model. If the terminal device determines that no rollback indication information is received from the model management device within a rollback delay corresponding to a first model, after the rollback delay corresponding to the first model, the terminal device may autonomously roll back the first model. Correspondingly, after the rollback delay corresponding to the first model, the model management device may determine that the terminal device has rolled back the first model.

M4: The ninth information includes the monitoring delay information.

A shorter monitoring delay corresponding to a first model indicates shorter duration needed for monitoring the first model. In this case, the tenth information indicates a smaller value of third duration corresponding to the first model. The third duration is duration from a moment at which the terminal device detects a fifth signal to a moment at which the terminal device reports a sixth signal.

The fifth signal is used to monitor a first model. For example, the fifth signal is assistance information used to monitor the model A. The sixth signal is a result of monitoring the first model (or referred to as a monitoring result of the first model). This case is applicable to a scenario in which the terminal device monitors the first model. Alternatively, the fifth signal is a reference signal for monitoring a first model, and the sixth signal is used to determine a result of monitoring the first model. This case is applicable to a scenario in which the model management device monitors the first model.

For example, FIG. 15 is a diagram of a process of managing the N1 first models according to an embodiment of this application. In FIG. 15, for example, the N1 first models include a model A, and a monitoring delay corresponding to the model A is 2 ms.

As shown in FIG. 15, the terminal device reports, to the model management device, that the monitoring delay corresponding to the model A is 2 ms. The model management device sends a fifth signal (in FIG. 15, assistance information for monitoring the model A is used as an example) to the terminal device. After 2 ms, the terminal device feeds back a sixth signal (in FIG. 15, a monitoring result corresponding to the model A is used as an example) to the model management device.

M5: The ninth information includes the first switching delay information.

If a first switching delay corresponding to a first model is within a value range #7, the tenth information indicates the terminal device to switch from the first model to the third model. If a first switching delay corresponding to a first model is within a value range #8, the tenth information indicates the terminal device not to switch the first model. A minimum value in the value range #8 is greater than a maximum value in the value range #7.

The value range #8 and the value range #7 may be preconfigured or predefined on the model management device, or may be determined by the model management device and the terminal device through negotiation. This is not limited in this embodiment of this application.

When the tenth information indicates to switch from a first model to the third model, the terminal device may roll back the first model to a case in which the model is not used to implement the first function. Optionally, after sixth duration, third configuration information is received from the model management device. The third configuration information indicates a configuration needed by the terminal device to use the third model. The sixth duration is less than or equal to a first switching delay corresponding to the first model.

In another possible implementation, when the terminal device determines that the terminal device needs to switch from a first model to the third model due to a problem of the terminal device (for example, the terminal device has insufficient compute resources or memory resources), the terminal device sends fifth indication information to the model management device. The fifth indication information requests to switch from the first model to the third model. If the terminal device determines that no first switching indication information is received from the model management device within a first switching delay corresponding to the first model, after the first switching delay corresponding to the first model, the terminal device may switch from the first model to the third model.

For example, FIG. 16 is a diagram of a process of managing the N1 first models according to an embodiment of this application. In FIG. 16, for example, the N1 first models include a model A, a third model is the model A, and a first switching delay corresponding to the model A is 2 ms.

As shown in FIG. 16, the terminal device reports, to the model management device, that the first switching delay corresponding to the model A is 2 ms. The model management device indicates the terminal device to switch from the model A to a model B. The terminal device sends, to the model management device, an acknowledgement of switching from the model A to the model B. After 2 ms, the terminal device feeds back an output of the model B to the model management device.

M6: The ninth information includes the second switching delay information.

If a second switching delay corresponding to a first model is within a value range #9, the tenth information indicates the terminal device to switch from the fourth model to the first model. If a second switching delay corresponding to a first model is within a value range #10, the tenth information indicates the terminal device not to switch the fourth model. A minimum value in the value range #10 is greater than a maximum value in the value range #9.

The value range #9 and the value range #10 may be preconfigured or predefined on the model management device, or may be determined by the model management device and the terminal device through negotiation. This is not limited in this embodiment of this application.

When the policy indicates the terminal device to switch from the fourth model to a first model, the terminal device may switch from the fourth model to the first model. After seventh duration, fourth configuration information is received from the model management device. The fourth configuration information indicates a configuration needed by the terminal device to use the first model. The seventh duration is less than or equal to a second switching delay corresponding to the first model. Correspondingly, after the second switching delay corresponding to the first model, the model management device may determine that the terminal device has switched from the fourth model to the first model.

In another possible implementation, when the terminal device determines that the terminal device needs to switch from the fourth model to a first model due to a problem of the terminal device (for example, the terminal device has insufficient compute resources or memory resources), the terminal device sends sixth indication information to the model management device. The sixth indication information requests to switch from the fourth model to the first model. If the terminal device determines that no second switching indication information is received from the model management device within a second switching delay corresponding to the first model, after the second switching delay corresponding to the first model, the terminal device may switch from the fourth model to the first model. Correspondingly, after the second switching delay corresponding to the first model, the model management device may determine that the terminal device has switched from the fourth model to the first model.

M7: The ninth information includes the deactivation delay information.

A deactivation delay corresponding to a first model being within a value range #11 indicates that the deactivation delay corresponding to the first model is short. Therefore, the model management device may determine to deactivate the first model. Correspondingly, the tenth information indicates the terminal device to deactivate the first model. A deactivation delay corresponding to a first model being within a value range #12 indicates that the deactivation delay corresponding to the first model is long. Therefore, the model management device may determine not to deactivate the first model. Correspondingly, the tenth information indicates the terminal device not to deactivate the first model. A minimum value in the value range #11 is greater than a maximum value in the value range #11.

The value range #11 and the value range #12 may be preconfigured or predefined on the model management device, or may be determined by the model management device and the terminal device through negotiation. This is not limited in this embodiment of this application.

In a possible implementation, after eighth duration, fifth configuration information is received from the model management device. The eighth duration is less than or equal to a deactivation delay corresponding to a first model. The fifth configuration information indicates a configuration needed by the terminal device to implement a second function after deactivating the first model. The first model is capable of implementing the second function.

In another possible implementation, when the terminal device determines that a first model needs to be deactivated due to a problem of the terminal device (for example, the terminal device has insufficient compute resources or memory resources), the terminal device may send seventh indication information to the model management device. The seventh indication information requests to deactivate the first model. If the terminal device determines that no deactivation indication information is received from the model management device within a deactivation delay corresponding to the first model, after the deactivation delay corresponding to the first model, the terminal device may deactivate the first model. Correspondingly, after the deactivation delay corresponding to the first model, the model management device may determine that the terminal device has deactivated the first model.

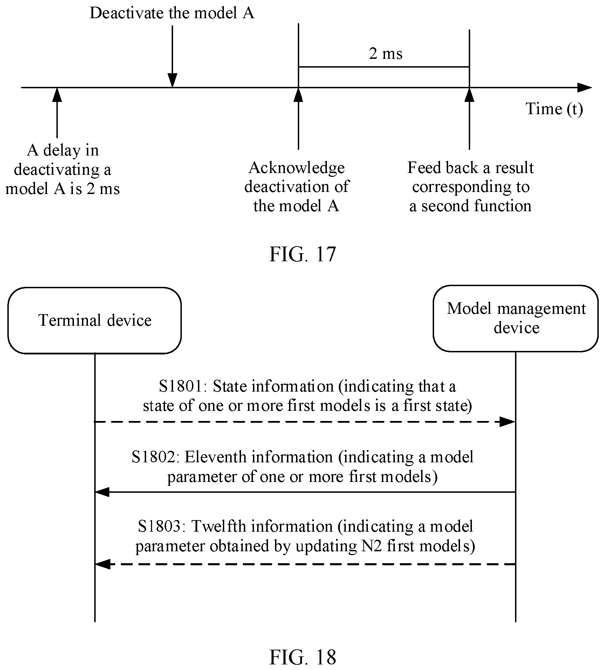

For example, FIG. 17 is a diagram of a process of managing the N1 first models according to an embodiment of this application. In FIG. 17, for example, the N1 first models include a model A, a third model is the model A, and a deactivation delay corresponding to the model A is 2 ms.

As shown in FIG. 17, the terminal device reports, to the model management device, that the deactivation delay corresponding to the model A is 2 ms. The model management device indicates the terminal device to deactivate the model A. The terminal device sends an acknowledgement of deactivation of the model A to the model management device. After 2 ms, the terminal device feeds back, to the model management device, a result corresponding to the second function.

It should be understood that, when the ninth information includes at least two of the information in M1 to M7, the tenth information may also include content of tenth information corresponding to the at least two of the information in M1 to M7. Details are not described herein again.

To reduce data exchange between a model management device and a terminal device, an embodiment of this application provides a communication method. In the method, the model management device may send ninth information to the terminal device, where the ninth information indicates a model parameter of one or more first models. The model management device may keep the model parameter of the one or more first models unchanged within a fourth time window. This reduces cases in which the model management device frequently updates the model parameter of the one or more first models, and therefore reduces data exchange between the model management device and the terminal device.

FIG. 18 shows a communication method according to an embodiment of this application. FIG. 18 shows three steps: S1801 to S1803, which are separately described below.

S1801: A terminal device sends state information to a model management device. Correspondingly, the model management device receives the state information from the terminal device. Eleventh information indicates that a state of one or more first models is a first state or a second state. For content of the first state, the second state, and the one or more first models, refer to the foregoing content of FIG. 6.

S1801 is an optional step, and is indicated by a dashed line in FIG. 18.

S1802: The model management device sends the eleventh information to the terminal device. Correspondingly, the terminal device receives the eleventh information from the model management device. The eleventh information indicates the model parameter of the one or more first models.

In this embodiment of this application, the model parameter of the one or more first models is valid within a fifth time window. In other words, the model management device may retain the model parameter of the one or more first model within the fifth time window. Optionally, a start moment of the fifth time window is, for example, a moment at which the model management device starts to send the eleventh information. For a manner of determining the fifth time window by the model management device and the terminal device, refer to the foregoing content of determining the first time window in FIG. 6. Details are not described herein again.

S1803: The model management device sends twelfth information to the terminal device. Correspondingly, the terminal device receives the twelfth information from the model management device. The twelfth information indicates updated model parameters of N2 first models. The N2 first models may be a part or all of the one or more first models.

S1801 and S1803 are optional steps, and are indicated by dashed lines in FIG. 18.

In this embodiment of this application, the model management device may keep the model parameter of the one or more first models unchanged, to avoid frequently changing the model parameter of the one or more first models. This helps reduce interaction between the terminal device and the model management device.

To reduce information exchange, an embodiment of this application provides a communication method. In the communication method, after indicating, to a model management device, a state (including a first state and a second state) in which use of one or more first models is supported, a terminal device may keep the first state unchanged within a first time window. In other words, the terminal device does not need to send the first state of the one or more first models to the model management device within the first time window. This helps reduce information exchange between the terminal device and the model management device. In addition, before managing the one or more first models within the first time window, the model management device does not need to indicate the terminal device to report the first state of the one or more first models. This also helps improve efficiency of managing the one or more first models by the model management device.

S1901: A terminal device sends thirteenth information to a model management device. Correspondingly, the model management device receives the thirteenth information from the terminal device.

The thirteenth information indicates a state of one or more first models. The state includes at least a first state or a second state. The first state indicates that the terminal device supports use of the one or more first models. For content of supporting use of the one or more first models, refer to the foregoing content of FIG. 6. The second state indicates that the terminal device does not support use of the one or more first models. For content of not supporting use of the one or more first models, refer to the foregoing content described in FIG. 6.

In this embodiment of this application, the first state may be valid within a first time window. For content of the first time window and content of being valid within the first time window, refer to the foregoing content described in FIG. 6. Optionally, the second state may be valid within a second time window. The second time window is the same as or different from the first time window. Start moments of the first time window and the second time window are, for example, a moment at which the terminal device sends the thirteenth information.

S1902: The model management device sends sixteenth information to the terminal device. Correspondingly, the terminal device receives the sixteenth information from the model management device. The sixteenth information indicates a policy for managing N4 first models. The N4 first models are a part or all of the one or more first models. For the policy, refer to the foregoing content of the policy described in FIG. 6. Details are not described herein again.

After receiving the thirteenth information, the model management device may alternatively not determine a policy for managing N4 first models. In this case, the content of S1902 does not need to be performed. That is, S1902 is an optional step.

In a possible implementation, the thirteenth information includes first delay information, the first delay information indicates one or more delays related to a part or all of the one or more first models, and a part or all of the first delay information indicates the state of the one or more first models. For example, a part or all of a plurality of bits included in the first delay information indicate the state of the one or more first models, or a part or all of a plurality of pieces of information included in the first delay information indicate the state of the one or more first models. Optionally, the thirteenth information further includes identifiers of a part or all of first models, or configuration information related to a part or all of first models. For content of configuration information related to K first models, refer to the foregoing content described in FIG. 6.

For example, third delay information includes at least one of the following: third activation delay information, where the third activation delay information indicates R1 third activation delays, and one third activation delay indicates a delay in activating one of the R1 first models; third inference delay information, where the third inference delay information indicates R2 third inference delays, and one third inference delay indicates a delay in performing inference by using one of the R2 first models; third rollback delay information, where the third rollback delay information indicates R3 third rollback delays, one third rollback delay indicates a delay in rolling back one of the R3 first models to a time of implementing the first function without using the model, and one first model can implement the first function; third monitoring delay information, where the third monitoring delay information indicates R4 third monitoring delays, and one third monitoring delay indicates a delay in monitoring one of the R4 first models; fifth switching delay information, where the fifth switching delay information indicates R5 fifth switching delays, and one fifth switching delay indicates a delay of switching one of the R5 first models to the third model; sixth switching delay information, where the sixth switching delay information indicates R6 sixth switching delays, and one sixth switching delay indicates switching the fourth model to one of the R6 first models; and third deactivation delay information, where the third deactivation delay information indicates R7 third deactivation delays, and one third deactivation delay indicates a delay in deactivating one of the R7 first models. All of R1, R2, R3, R4, R5, R6, and R7 are positive integers.

For example, the third activation delay information indicates that states of P1 first models of the R1 first models are the first state, where P1 is a positive integer; the fifth switching delay information indicates that states of Q1 first models of the R5 first models are the first state, where Q1 is a positive integer; the sixth switching delay information indicates that states of R1 first models of the R6 first models are the first state, where R1 is a positive integer; or the third inference delay information indicates that states of L1 first models of the R2 first models are the first state, where L1 is a positive integer.

Specifically, for example, when values of a part or all of the R1 third activation delays are within a value range #13, the states of the P1 first models are the first state; for example, when values of a part or all of the R5 fifth switching delays are within a value range #14, the states of the Q1 first models are the first state; for example, when values of a part or all of the R6 sixth switching delays are within a value range #15, the states of the R1 first models is the first state; and for example, when values of a part or all of the R2 third inference delays are within a value range #16, the states of the L1 first models are the first state.

Alternatively, for example, when values of a part or all of the R1 third activation delays (for example, less than or equal to P1 third activation delays) are within a value range #17, the states of the P first models are the first state; for example, when values of a part or all of the R5 fifth switching delays (for example, less than or equal to Q1 fifth switching delays) are within a value range #18, the states of the Q1 first models are the first state; for example, when values of a part or all of the R6 sixth switching delays (for example, less than or equal to R1 sixth switching delays) are within a value range #19, the states of the R first models are the first state; and for example, when values of a part or all of the R2 third inference delays (for example, less than or equal to third inference delays) are within a value range #19, the states of the L1 first models are the first state.

S1903: The terminal device sends fourteenth information to the model management device. Correspondingly, the model management device receives the fourteenth information from the terminal device. The fourteenth information may indicate states of a part or all of the one or more first models.

The terminal device may perform this step after the first time window. Alternatively, after the second time window, the terminal device determines that a state of at least one of the one or more first models is updated, and sends the fourteenth information to the model management device. In this case, the part or all of first models may be the at least one first model, or may be the one or more first models. Alternatively, the terminal device uses a first periodicity as a periodicity for sending a state of a first model. Therefore, the terminal device may send the fourteenth information when determining that a first moment has arrived. In this case, the part or all of first models may be first models, whose states are updated, of the one or more first models, or may be the one or more first models. This is not limited in this embodiment of this application.

Optionally, a length of the first periodicity may be greater than or equal to that of the first time window, or may be greater than or equal to that of the second time window.

In S1903, an example in which the terminal device actively sends the fourteenth information to the model management device is used. In another possible implementation, when being triggered by the model management device, the terminal device may notify the model management device of states of a part or all of first models. The possible implementation may include content of S1904 and S1905. The two steps are described below.

S1904: The model management device sends indication information #1 to the terminal device. Correspondingly, the terminal device receives the indication information #1 from the model management device. The indication information #1 indicates to report states of a part or all of the one or more first models.

Alternatively, the model management device may perform S1904 after the first time window or the second time window, or the model management device may perform S1904 after the first moment arrives. This is not limited in this embodiment of this application.

S1905: The terminal device sends fifteenth information to the model management device. Correspondingly, the model management device receives the fifteenth information from the terminal device. The fifteenth information may indicate states of a part or all of the one or more first models. The part or all of first models may be at least one first model, whose state is updated, of the one or more first models, or may be the one or more first models. This is not limited in this embodiment of this application.

It should be noted that the terminal device may actively report states of a part or all of first models in the manner of S1903, or may report states of a part or all of first models in the manner of S1904 and S1905. This is not limited in this embodiment of this application.

It can be understood that, to implement the functions in the foregoing embodiments, the model management device and the terminal device include corresponding hardware structures and/or software modules for performing the functions. A person skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

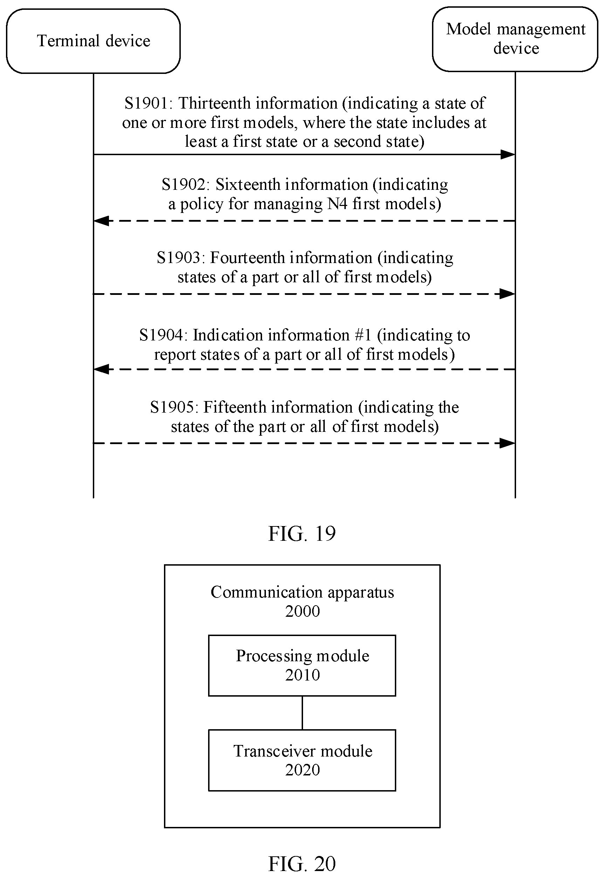

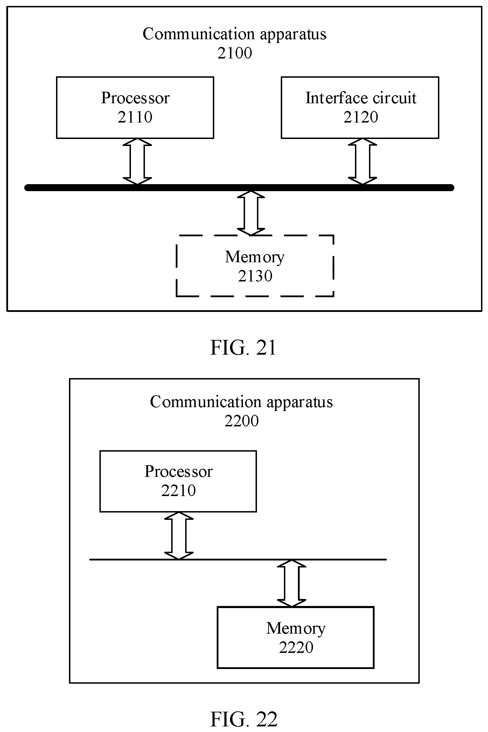

FIG. 20 and FIG. 21 are diagrams of possible structures of communication apparatuses according to embodiments of this application. The communication apparatuses may be configured to implement the functions of the terminal device or the model management device in the foregoing method embodiments, and therefore can also achieve the beneficial effects of the foregoing method embodiments. In this embodiment of this application, the communication apparatus may be the terminal device shown in any one of FIG. 1 to FIG. 3 or a software or hardware module in the terminal device, or may be the model application device in FIG. 4 or a software or hardware module in the model application device, or may be the model management device shown in FIG. 4 or a software or hardware model in the model management device.

As shown in FIG. 20, a communication apparatus 2000 includes a processing module 2010 and a transceiver module 2020.

For example, the communication apparatus 2000 may be configured to implement the functions of the terminal device or the model management device in the method embodiments shown in any one of FIG. 6 to FIG. 11, FIG. 18, and FIG. 19.

In a first embodiment, the communication apparatus 2000 is configured to implement the functions of the model application device, for example, the terminal device, in the method embodiment shown in FIG. 6. Correspondingly, the communication apparatus may also implement the steps performed by the model application device, for example, the terminal device, in FIG. 6.

In this embodiment, under the control of the processing module 2010, the transceiver module 2020 may send information 1 to a model management device. Optionally, the transceiver module 2020 may further send information 2, information 3, information 6, and information 8 to the model management device, and may further receive information 5 and information 7 from the model management device.

In a second embodiment, the communication apparatus 2000 is configured to implement the functions of the model management device in the method embodiment shown in FIG. 6. Correspondingly, the communication apparatus may also implement the steps performed by the model management device in FIG. 6.

In this embodiment, under the control of the processing module 2010, the transceiver module 2020 may receive information 1 from a model application device, for example, a terminal device. Optionally, the transceiver module 2020 may further receive information 2, information 3, information 6, and information 8 from the model application device, for example, the terminal device, and may further send information 5 and information 7 to the model application device, for example, the terminal device.

In a third embodiment, the communication apparatus 2000 is configured to implement the functions of the model application device, for example, the terminal device, in the method embodiment shown in FIG. 10. Correspondingly, the communication apparatus may also implement the steps performed by the model application device, for example, the terminal device, in FIG. 10.

In this embodiment, under the control of the processing module 2010, the transceiver module 2020 may send first information to a model management device. Optionally, the transceiver module 2020 may further receive second information from the model management device.

In a fourth embodiment, the communication apparatus 2000 is configured to implement the functions of the model management device in the method embodiment shown in FIG. 10. Correspondingly, the communication apparatus may also implement the steps performed by the model management device in FIG. 10.

In this embodiment, under the control of the processing module 2010, the transceiver module 2020 may receive first information from a model application device, for example, a terminal device. Optionally, the transceiver module 2020 may further send second information to the model application device, for example, the terminal device.

In a fifth embodiment, the communication apparatus 2000 is configured to implement the functions of the model application device, for example, the terminal device, in the method embodiment shown in FIG. 11. Correspondingly, the communication apparatus may also implement the steps performed by the model application device, for example, the terminal device, in FIG. 11.

In this embodiment, under the control of the processing module 2010, the transceiver module 2020 may send ninth information to a model management device. Optionally, the transceiver module 2020 may further receive tenth information from the model management device.

In a sixth embodiment, the communication apparatus 2000 is configured to implement the functions of the model management device in the method embodiment shown in FIG. 11. Correspondingly, the communication apparatus may also implement the steps performed by the model management device in FIG. 11.

In this embodiment, under the control of the processing module 2010, the transceiver module 2020 may receive ninth information from a model application device, for example, a terminal device. Optionally, the transceiver module 2020 may further send tenth information to the model application device, for example, the terminal device.

In a seventh embodiment, the communication apparatus 2000 is configured to implement the functions of the model application device, for example, the terminal device, in the method embodiment shown in FIG. 18. Correspondingly, the communication apparatus may also implement the steps performed by the model application device, for example, the terminal device, in FIG. 18.

In this embodiment, under the control of the processing module 2010, the transceiver module 2020 may receive eleventh information from a model management device. Optionally, the transceiver module 2020 may further receive twelfth information from the model management device, and send state information to the model management device.

In an eighth embodiment, the communication apparatus 2000 is configured to implement the functions of the model management device in the method embodiment shown in FIG. 18. Correspondingly, the communication apparatus may also implement the steps performed by the model management device in FIG. 18.

In this embodiment, under the control of the processing module 2010, the transceiver module 2020 may send eleventh information to a model application device, for example, a terminal device. Optionally, the transceiver module 2020 may further send twelfth information to the model application device, for example, the terminal device, and receive state information from the model application device, for example, the terminal device.

In a ninth embodiment, the communication apparatus 2000 is configured to implement the functions of the model application device, for example, the terminal device, in the method embodiment shown in FIG. 19. Correspondingly, the communication apparatus may also implement the steps performed by the model application device, for example, the terminal device, in FIG. 19.

In this embodiment, under the control of the processing module 2010, the transceiver module 2020 may send thirteenth information to a model management device. Optionally, the transceiver module 2020 may further receive sixteenth information and indication information #1 from the model management device, and send fourteenth information or fifteenth information to the model management device.

In a tenth embodiment, the communication apparatus 2000 is configured to implement the functions of the model management device in the method embodiment shown in FIG. 20. Correspondingly, the communication apparatus may also implement the steps performed by the model management device in FIG. 20.

In this embodiment, under the control of the processing module 2010, the transceiver module 2020 may receive thirteenth information from a model application device, for example, a terminal device. Optionally, the transceiver module 2020 may further send sixteenth information and indication information #1 to the model application device, for example, the terminal device, and may further receive fourteenth information or fifteenth information from the model application device, for example, the terminal device.

For specific content of the embodiments, refer to the content in the foregoing corresponding method embodiments. Repeated descriptions are omitted.

As shown in FIG. 21, a communication apparatus 2100 includes a processor 2110 and an interface circuit 2120. The processor 2110 is coupled to the interface circuit 2120. It can be understood that the interface circuit 2120 may be a transceiver or an input/output interface. Optionally, the communication apparatus 2100 may further include a memory 2130, configured to store instructions to be executed by the processor 2110, or store input data needed by the processor 2110 to run instructions, or store data generated after the processor 2110 runs instructions.

When the communication apparatus 2100 is configured to implement the method shown in any one of FIG. 6 to FIG. 11, FIG. 18, and FIG. 19, the processor 2110 is configured to implement the functions of the processing module 2010, and the interface circuit 2120 is configured to implement the functions of the transceiver module 2020.

When the communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It can be understood that the processor in embodiments of this application may be one of the following components, or all or a part of circuits, in one of the following components, that are configured to perform a processing function: a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

An embodiment of this application provides another example of a communication apparatus. The communication apparatus includes at least one processor and at least one memory. The at least one processor is coupled to the at least one memory. The at least one memory is configured to store instructions. When the instructions are executed by the at least one processor, the communication apparatus is enabled to perform the methods in the foregoing embodiments. For example, the communication apparatus includes one processor and one memory. As shown in FIG. 22, a communication apparatus 2200 includes a processor 2210 and a memory 2220. The processor 2210 is coupled to the memory 2220. The memory 2220 stores instructions. When the instructions stored in the memory 2220 are executed by the processor 2210, the communication apparatus 2200 performs any one of the methods in the foregoing embodiments, for example, implements the method shown in any one of FIG. 6 to FIG. 11, FIG. 18, and FIG. 19.

The method steps in embodiments of this application may be implemented in hardware, or may be implemented in software instructions that may be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in a base station or a terminal as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. When the computer programs or the instructions are loaded and executed on a computer, all or some of the processes or the functions in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application provides a chip system. The chip system includes a processor and an interface. The processor is configured to invoke instructions from the interface and run the instructions. When the processor executes the instructions, any one of the foregoing communication methods, for example, the method in any one of FIG. 6 to FIG. 11, FIG. 18, and FIG. 19, is implemented.

An embodiment of this application provides a computer-readable storage medium. The computer-readable storage medium is configured to store a computer program or instructions. When the computer program or the instructions are run, any one of the foregoing communication methods, for example, the method in any one of FIG. 6 to FIG. 11, FIG. 18, and FIG. 19, is implemented.

An embodiment of this application provides a computer program product including instructions. When the computer program product is run on a computer, any one of the foregoing communication methods, for example, the method in any one of FIG. 6 to FIG. 11, FIG. 18, and FIG. 19, is implemented.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It can be understood that various numbers in embodiments of this application are merely intended for differentiation for ease of description, but not to limit the scope of embodiments of this application. Sequence numbers of the foregoing processes do not mean an execution sequence, and the execution sequence of the processes should be determined based on functions and internal logic of the processes.

## Claims

1. A communication method, performed by a model application device or a chip used in a model application device, wherein the method comprises:
sending first information to a model management device, wherein the first information indicates that a state of one or more first entities is a first state, the first state indicates that the model application device supports use of the one or more first entities, and the first state is valid within a first time window.

2. The method according to claim 1, wherein the method further comprises:
after the first time window, determining that states of M first entities of the one or more first entities are updated to a second state, wherein the second state indicates that the model application device does not support use of the M first entities, and M is a positive integer; and
sending second information to the model management device, wherein the second information indicates that the states of the M first entities/functions are updated to the second state.

3. The method according to claim 2, wherein before sending the second information to the model management device, the method further comprises:
determining that a first moment has arrived, wherein a time interval between the first moment and a moment at which the first information is sent meets a first periodicity, and the first periodicity is a periodicity at which the model application device reports the states of the M first entities.

4. The method according to claim 3, wherein a length of the first time window is less than or equal to a length of the first periodicity.

5. The method according to claim 1, wherein the method further comprises:
after the first time window, when a first moment has arrived, determining that none of states of M first entities of the one or more first entities is updated, wherein a time interval between the first moment and a moment at which the first information is sent meets a first periodicity, the first periodicity is a periodicity at which the model application device reports the states of the M first entities, and M is a positive integer; and
determining to skip sending the states of the M first entities to the model management device at the first moment.

6. The method according to claim 1, wherein the method further comprises:
after the first time window, receiving first indication information from the model management device, wherein the first indication information indicates to report states of a part or all of the one or more first entities; and
sending third information to the model management device, wherein the third information indicates the states of the part or all of first entities.

7. The method according to any one of claims 1 to 6, wherein the method further comprises:
sending fourth information to the model management device, wherein the fourth information indicates that a state of one or more second entities is a third state, and the third state indicates that the model application device does not support use of the one or more second entities.

8. The method according to claim 7, wherein the third state is valid within a second time window, and the second time window is the same as or different from the first time window.

9. The method according to claim 7, wherein the method further comprises:
sending fifth information to the model management device, wherein the fifth information indicates that states of a part or all of the one or more second entities are updated to a fourth state, the fourth state indicates that the model application device supports use of the part or all of second entities, and a difference between a moment at which the model application device sends the fifth information and the moment at which the model application device sends the first information is less than the length of the first time window.

10. The method according to claim 9, wherein the fourth state is valid within a third time window, and the third time window is the same as or different from the first time window.

11. The method according to any one of claims 1 to 10, wherein the method further comprises:
sending second indication information to the model management device, wherein the second indication information indicates the first time window; or
receiving third indication information from the model management device, wherein the third indication information indicates the first time window.

12. The method according to any one of claims 1 to 11, wherein the first information comprises first delay information, and the first delay information indicates one or more delays related to all or a part of the one or more first entities, wherein
a part or all of the first delay information indicates the first state.

13. The method according to claim 12, wherein the first information further comprises:
identifiers of the part or all of first entities; or
configuration information related to the part or all of first entities.

14. The method according to claim 12 or 13, wherein the first delay information comprises at least one of the following:
first activation delay information, wherein the first activation delay information indicates K1 first activation delays, and one first activation delay indicates a delay in activating one of the K1 first entities;
first inference delay information, wherein the first inference delay information indicates K2 first inference delays, and one first inference delay indicates a delay in performing inference by using one of the K2 first entities;
first rollback delay information, wherein the first rollback delay information indicates K3 first rollback delays, one first rollback delay indicates a delay in rolling back one of the K3 first entities to a time delay in which no entity is used to implement a first function, and the first entity is capable of implementing the first function;
first monitoring delay information, wherein the first monitoring delay information indicates K4 first monitoring delays, and one first monitoring delay indicates a delay in monitoring one of the K4 first entities;
first switching delay information, wherein the first switching delay information indicates K5 first switching delays, and one first switching delay indicates a delay in switching from one of the K5 first entities to a third entity;
second switching delay information, wherein the second switching delay information indicates K6 second switching delays, and one second switching delay indicates a delay in switching from a fourth entity to one of the K6 first entities; or
first deactivation delay information, wherein the first deactivation delay information indicates K7 first deactivation delays, and one first deactivation delay indicates a delay in deactivating one of the K7 first entities, wherein
all of K1, K2, K3, K4, K5, K6, and K7 are positive integers.

15. The method according to claim 14, wherein that the part or all of the first delay information indicates the first state comprises at least one of the following:
the first activation delay information indicates that states of P first entities of the K1 first entities are the first state, wherein P is a positive integer;
the first switching delay information indicates that states of Q first entities of the K5 first entities are the first state, wherein Q is a positive integer;
the second switching delay information indicates that states of R first entities of the K5 first entities are the first state, wherein R is a positive integer; and
the first inference delay information indicates that states of L first entities of the K2 first entities are the first state, wherein L is a positive integer.

16. The method according to claim 15, wherein
when values of a part or all of the K1 first activation delays are within a first value range, states of the P first entities corresponding to the part or all of first activation delays are the first state;
when values of a part or all of first switching delays in the K5 pieces of first switching delay information is within a second value range, states of the Q first entities corresponding to the part or all of first switching delays are the first state;
when values of a part or all of the K5 second switching delays are within a third value range, states of the R first entities corresponding to the part or all of second switching delays are the first state; and
when values of a part or all of the K2 first inference delays are within a fourth value range, states of the L first entities corresponding to the part or all of first inference delays are the first state.

17. The method according to claim 16, wherein the length of the first time window meets at least one of the following conditions:
being greater than a maximum value in the first value range;
being greater than a maximum value in the second value range;
being greater than a maximum value in the third value range; or
being greater than a maximum value in the fourth value range.

18. The method according to any one of claims 1 to 17, wherein the method further comprises:
sending sixth information to the model application device within the first time window, wherein the sixth information indicates a policy for managing N first entities of the one or more first entities, and N is a positive integer.

19. The method according to any one of claims 7 to 10, wherein the fourth information comprises second delay information, the second delay information indicates one or more delays associated with all or a part of the one or more second entities, and a part or all of the second delay information further indicates the third state.

20. The method according to any one of claims 1 to 19, wherein that the first information indicates that the state of the one or more first entities is the first state comprises:
the model application device or the chip used in the model application device has a capability of executing the one or more first entities;
the model application device or the chip used in the model application device has locally obtained/stored/loaded the one or more first entities, or is capable of loading the one or more first entities from another device;
the model application device or the chip used in the model application device is ready to perform inference by using the one or more first entities;
the model application device or the chip used in the model application device has a configuration of the model management device for executing or running the one or more first entities; or
the model application device or the chip used in the model application device has been activated and performed inference by using the one or more first entities.

21. A communication method, applied to a model application device or a chip of a model application device, wherein the method comprises:
sending first information to a model management device, wherein the first information comprises first delay information, the first delay information indicates one or more delays related to a part or all of the one or more first entities, a part or all of the first delay information indicates a first state, and the first state indicates that the model application device supports use of the one or more first entities.

22. The method according to claim 21, wherein the first state indicates one of the following:
the model application device or the chip of the model application device has a capability of executing the one or more first entities;
the model application device or the chip of the model application device has locally obtained/stored/loaded the one or more first entities, or is capable of loading the one or more first entities from another device;
the model application device or the chip of the model application device is ready to perform inference by using the one or more first entities;
the model application device or the chip of the model application device has a configuration of the model management device for executing or running the one or more first entities; or
the model application device or the chip of the model application device has been activated and performed inference by using the one or more first entities.

23. The method according to claim 21 or 22, wherein the first information further comprises identifiers of the part or all of first entities, or configuration information related to the part or all of first entities.

24. The method according to any one of claims 21 to 23, wherein the first delay information comprises at least one of the following:
first activation delay information, wherein the first activation delay information indicates K1 first activation delays, and one first activation delay indicates a delay in activating one of the K1 first entities;
first inference delay information, wherein the first inference delay information indicates K2 first inference delays, and one first inference delay indicates a delay in performing inference by using one of the K2 first entities;
first rollback delay information, wherein the first rollback delay information indicates K3 first rollback delays, one first rollback delay indicates a delay in rolling back one of the K3 first entities to a time delay in which no entity is used to implement a first function, and the first entity is capable of implementing the first function;
first monitoring delay information, wherein the first monitoring delay information indicates K4 first monitoring delays, and one first monitoring delay indicates a delay in monitoring one of the K4 first entities;
first switching delay information, wherein the first switching delay information indicates K5 first switching delays, and one first switching delay indicates a delay in switching from one of the K5 first entities to a third entity;
second switching delay information, wherein the second switching delay information indicates K6 second switching delays, and one second switching delay indicates a delay in switching from a fourth entity to one of the K6 first entities; or
first deactivation delay information, wherein the first deactivation delay information indicates K7 first deactivation delays, and one first deactivation delay indicates a delay in deactivating one of the K7 first entities, wherein
all of K1, K2, K3, K4, K5, K6, and K7 are positive integers.

25. The method according to any one of claims 21 to 24, wherein that the part or all of the first delay information indicates the first state comprises at least one of the following:
the first activation delay information indicates that states of P first entities of the K1 first entities are the first state, wherein P is a positive integer, for example, when values of a part or all of the K1 first activation delays are within a first value range, the states of the corresponding P first entities are the first state;
the first switching delay information indicates that states of Q first entities of the K5 first entities are the first state, wherein Q is a positive integer, for example, when values of a part or all of the K5 first switching delays are within a second value range, the states of the corresponding Q first entities are the first state;
the second switching delay information indicates that states of R first entities of the K6 first entities are a first state, wherein R is a positive integer; or
the first inference delay information indicates that states of L first entities of the K2 first entities are the first state, wherein L is a positive integer.

26. The method according to claim 25, wherein the first state is valid within a first time window.

27. The method according to claim 26, wherein a length of the first time window meets at least one of the following conditions:
being greater than a maximum value in the first value range;
being greater than a maximum value in the second value range;
being greater than a maximum value in a third value range; or
being greater than a maximum value in a fourth value range.

28. The method according to claim 26 or 27, wherein the method further comprises:
after the first time window, determining that states of M first entities of the one or more first entities are updated to a second state, wherein the second state indicates that the model application device does not support use of the M first entities, and M is a positive integer; and sending second information to the model management device, wherein the second information indicates that the states of the M first entities/functions are updated to the second state.

29. The method according to claim 28, wherein before sending the second information to the model management device, the method further comprises:
determining that a first moment has arrived, wherein a time interval between the first moment and a moment at which the first information is sent meets a first periodicity, and the first periodicity is a periodicity at which the model application device reports the states of the M first entities.

30. The method according to any one of claims 26 to 29, wherein the method further comprises:
after the first time window, when the first moment has arrived, determining that none of the states of the M first entities of the one or more first entities is updated, wherein the time interval between the first moment and the moment at which the first information is sent meets the first periodicity, the first periodicity is a periodicity at which the model application device reports the states of the M first entities of the one or more first entities, and M is a positive integer; and determining to skip sending the states of the M first entities to the model management device at the first moment.

31. The method according to any one of claims 26 to 30, wherein the method further comprises:
after the first time window, receiving first indication information from the model management device, wherein the first indication information indicates to report states of a part or all of the one or more first entities; and sending third information to the model management device, wherein the third information indicates the states of the part or all of first entities.

32. The method according to any one of claims 21 to 31, wherein the method further comprises:
sending fourth information to the model management device, wherein the fourth information indicates that a state of one or more second entities is a third state, and the third state indicates that the model application device does not support use of the one or more second entities.

33. The method according to claim 32, wherein the third state is valid within a second time window.

34. The method according to claim 32 or 33, wherein the method further comprises:
sending fifth information to the model management device, wherein the fifth information indicates that states of a part or all of the one or more second entities are updated to a fourth state, the fourth state indicates that the model application device supports use of the part or all of second entities, a difference between a moment at which the model application device sends the fifth information and the moment at which the model application device sends the first information is less than the length of the first time window, and the first state is valid within the first time window.

35. The method according to claim 34, wherein the fourth state is valid within a third time window.

36. The method according to claim 34 or 35, wherein
the fourth information comprises second delay information, the second delay information indicates one or more delays related to a part or all of the one or more second entities, and the part or all of second delay information further indicates the third state.

37. The method according to claim 36, wherein the second delay information comprises at least one of the following:
second activation delay information, wherein the second activation delay information indicates H1 second activation delays, and one second activation delay indicates a delay in activating one of the H1 second entities;
second inference delay information, wherein the second inference delay information indicates H2 second inference delays, and one second inference delay indicates a delay in performing inference by using one of the H2 second entities;
second rollback delay information, wherein the second rollback delay information indicates H3 second rollback delays, one second rollback delay indicates a delay for one of the H3 second entities to fall back to a delay in implementing a third function without using an entity, and the second entity is capable of implementing the third function;
second monitoring delay information, wherein the second monitoring delay information indicates H4 second monitoring delays, and one second monitoring delay indicates a delay in monitoring one of the H4 second entities;
third switching delay information, wherein the third switching delay information indicates H5 third switching delays, and one third switching delay indicates a delay in switching from one of the H5 second entities to a third entity;
fourth switching delay information, wherein the fourth switching delay information indicates H6 fourth switching delays, and one of the fourth switching delays indicates a delay in switching from a fourth entity to one of the H6 second entities; or
second deactivation delay information, wherein the second deactivation delay information indicates H7 second deactivation delays, one second deactivation delay indicates a delay in deactivating one of the H7 second entities, and all of H1, H2, H3, H4, H5, H6, and H7 are positive integers.

38. The method according to claim 36 or 37, wherein that a part or all of the second delay information indicates the third state comprises at least one of the following:
the second activation delay information indicates that states of U1 second entities of the H1 second entities are the third state, wherein U1 is a positive integer;
the third switching delay information indicates that states of U2 second entities of the H5 second entities are the third state, wherein U2 is a positive integer;
the fourth switching delay information indicates that states of U3 second entities of the H6 second entities are the third state, wherein U3 is a positive integer; or
the second inference delay information indicates that states of U4 second entities of the H2 second entities are the third state, wherein U4 is a positive integer.

39. The method according to claim 38, wherein
when values of a part or all of the H1 second activation delays are within a fifth value range, the states of the corresponding U1 second entities are the third state;
when values of a part or all of the H5 third switching delays are within a sixth value range, the states of the corresponding U5 second entities are the third state;
when values of a part or all of the H6 fourth switching delays are within a seventh value range, the states of the corresponding U3 second entities are the third state; and
when values of a part or all of the H2 second inference delays are within an eighth value range, the states of the corresponding U4 second entities are the third state.

40. A communication method, applied to a model application device or a chip of a model application device, wherein the method further comprises:
sending fourth information to the model management device, wherein the fourth information comprises second delay information, and the second delay information indicates one or more delays related to a part or all of the one or more second entities, wherein a part or all of the second delay information indicates a third state, and the third state indicates that the model application device does not support use of the one or more second entities.

41. The method according to claim 40, wherein the third state is valid within a second time window.

42. The method according to claim 40 or 41, wherein the second delay information comprises at least one of the following:
second activation delay information, wherein the second activation delay information indicates H1 second activation delays, and one second activation delay indicates a delay in activating one of the H1 second entities;
second inference delay information, wherein the second inference delay information indicates H2 second inference delays, and one second inference delay indicates a delay in performing inference by using one of the H2 second entities;
second rollback delay information, wherein the second rollback delay information indicates H3 second rollback delays, one second rollback delay indicates a delay for one of the H3 second entities to fall back to a delay in implementing a third function without using an entity, and the second entity is capable of implementing the third function;
second monitoring delay information, wherein the second monitoring delay information indicates H4 second monitoring delays, and one second monitoring delay indicates a delay in monitoring one of the H4 second entities;
third switching delay information, wherein the third switching delay information indicates H5 third switching delays, and one third switching delay indicates a delay in switching from one of the H5 second entities to a third entity;
fourth switching delay information, wherein the fourth switching delay information indicates H6 fourth switching delays, and one of the fourth switching delays indicates a delay in switching from a fourth entity to one of the H6 second entities; or
second deactivation delay information, wherein the second deactivation delay information indicates H7 second deactivation delays, one second deactivation delay indicates a delay in deactivating one of the H7 second entities, and all of H1, H2, H3, H4, H5, H6, and H7 are positive integers.

43. A communication method, applied to a model application device or a chip of a model application device, wherein the method further comprises:
sending ninth information to a model management device, wherein the ninth information indicates one or more delays related to one or more first entities, the ninth information is used to determine tenth information, the tenth information is information related to N1 first entities of the one or more first entities, and N1 is a positive integer.

44. The method according to claim 43, wherein the ninth information comprises at least one of the following:
activation delay information, wherein the activation delay information indicates one or more activation delays, and one activation delay indicates a delay in activating one of the one or more first entities;
inference delay information, wherein the inference delay information indicates one or more inference delays, and one inference delay indicates a delay in performing inference by using one of the one or more first entities;
rollback delay information, wherein the rollback delay information indicates one or more rollback delays, one rollback delay indicates a delay in rolling back one of the one or more first entities to a case in which the entity is not used to implement a first function, and the first entity is capable of implementing the first function;
monitoring delay information, wherein the monitoring delay information indicates one or more monitoring delays, and one monitoring delay indicates a delay in monitoring one of the one or more first entities;
first switching delay information, wherein the first switching delay information indicates one or more first switching delays, and one first switching delay indicates a delay in switching from one of the one or more first entities to a third entity;
second switching delay information, wherein the second switching delay information indicates one or more second switching delays, and one second switching delay indicates a delay in switching from a fourth entity to one of the one or more first entities; or
deactivation delay information, wherein the deactivation delay information indicates one or more deactivation delays, and one deactivation delay indicates a delay in deactivating one of the one or more first entities.

45. The method according to claim 44, wherein the ninth information comprises the activation delay information, wherein
when an activation delay corresponding to the first entity is within a value range #1, the tenth information indicates the model application device to activate the first entity; and/or
when an activation delay corresponding to the first entity is within a value range #2, the tenth information indicates the model application device not to activate the first entity, wherein a minimum value in the value range #2 is greater than a maximum value in the value range #1.

46. A communication method, applied to a model application device or a chip of a model application device, wherein the method further comprises:
receiving eleventh information from a model management device, wherein the eleventh information indicates an entity parameter of one or more first entities, and the entity parameter of the one or more first entities is valid within a fifth time window.

47. A communication method, applied to a model application device or a chip of a model application device, wherein the method further comprises:
sending thirteenth information to a model management device, wherein the thirteenth information indicates a state of one or more first entities, the state of the one or more first entities comprises at least a first state or a second state, the first state indicates that the model application device supports use of the one or more first entities, the second state indicates that the model application device does not support use of the one or more models, and the first state is valid within a first time window.

48. A communication method, applied to a model management device or a chip of a model management device, wherein the method further comprises:
receiving first information from a model application device, wherein the first information indicates that a state of one or more first entities is a first state, the first state indicates that the model application device supports use of the one or more first entities, and the first state is valid within a first time window.

49. A communication method, applied to a model management device or a chip of a model management device, wherein the method further comprises:
receiving first information from a model application device, wherein the first information comprises first delay information, the first delay information indicates one or more delays related to a part or all of one or more first entities, a part or all of the first delay information indicates a first state, and the first state indicates that the model application device supports use of the one or more first entities.

50. A communication method, applied to a model management device or a chip of a model management device, wherein the method further comprises:
receiving fourth information from a model application device, wherein the fourth information comprises second delay information, and the second delay information indicates one or more delays related to a part or all of the one or more second entities, wherein a part or all of the first delay information indicates a third state, and the third state indicates that the model application device does not support use of the one or more second entities.

51. A communication method, applied to a model management device or a chip of a model management device, wherein the method further comprises:
receiving ninth information from a model application device, wherein the ninth information indicates one or more delays related to one or more first entities, the ninth information is used to determine tenth information, the tenth information is information related to N first entities of the one or more first entities, and N is a positive integer.

52. A communication method, applied to a model management device or a chip of a model management device, wherein the method further comprises:
sending eleventh information to a model application device, wherein the eleventh information indicates an entity parameter of one or more first entities, and the entity parameter of the one or more first entities is valid within a fifth time window.

53. A communication method, applied to a model management device or a chip of a model management device, wherein the method further comprises:
receiving thirteenth information from a model application device, wherein the thirteenth information indicates a state of one or more first entities, the state of the one or more first entities comprises at least a first state or a second state, the first state indicates that the model application device supports use of the one or more first entities, the second state indicates that the model application device does not support use of the one or more models, and the first state is valid within a first time window.

54. A communication apparatus, comprising:
a module configured to perform the method according to any one of claims 1 to 20;
a module configured to perform the method according to any one of claims 21 to 39;
a module configured to perform the method according to any one of claims 40 to 42;
a module configured to perform the method according to any one of claims 43 to 45;
a module configured to perform the method according to claim 46;
a module configured to perform the method according to claim 47;
a module configured to perform the method according to claim 48;
a module configured to perform the method according to claim 49;
a module configured to perform the method according to claim 50;
a module configured to perform the method according to claim 51;
a module configured to perform the method according to claim 52; or
a module configured to perform the method according to claim 53.

55. A communication apparatus, comprising a processor, wherein the processor is configured to:
perform the method according to any one of claims 1 to 20;
perform the method according to any one of claims 21 to 39;
perform the method according to any one of claims 40 to 42;
perform the method according to any one of claims 43 to 45;
perform the method according to claim 46;
perform the method according to claim 47;
perform the method according to claim 48;
perform the method according to claim 49;
perform the method according to claim 50;
perform the method according to claim 51;
perform the method according to claim 52; or
perform the method according to claim 53.
